(19) Europäisches Patentamt
European Patent Office
Office européen des brevets

(11) EP 3 733 799 B1

(12) EUROPEAN PATENT SPECIFICATION

(45) Date of publication and mention of the grant of the patent:
**10.05.2023 Bulletin 2023/19**

(21) Application number: **18895707.0**

(22) Date of filing: **25.12.2018**

(51) International Patent Classification (IPC):
***C09D 175/04*** (2006.01) ***C09D 7/20*** (2018.01)
***C09D 169/00*** (2006.01) ***C09D 171/02*** (2006.01)
***C09D 201/06*** (2006.01) ***C08G 18/44*** (2006.01)
***C08G 64/02*** (2006.01) ***C08G 18/40*** (2006.01)
***C08G 18/48*** (2006.01) ***C08G 18/62*** (2006.01)
***C08G 18/79*** (2006.01) ***C08G 64/18*** (2006.01)

(52) Cooperative Patent Classification (CPC):
**C08G 18/44; C08G 18/4063; C08G 18/4854; C08G 18/6229; C08G 18/792; C08G 64/183; C09D 7/20; C09D 169/00; C09D 175/04**

(86) International application number:
**PCT/JP2018/047535**

(87) International publication number:
**WO 2019/131617 (04.07.2019 Gazette 2019/27)**

# (54) PAINT COMPOSITION

FARBZUSAMMENSETZUNG

COMPOSITION DE PEINTURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2017 JP 2017248448**
**25.12.2017 JP 2017248449**

(43) Date of publication of application:
**04.11.2020 Bulletin 2020/45**

(73) Proprietor: **Asahi Kasei Kabushiki Kaisha**
**Tokyo 1000006 (JP)**

(72) Inventors:
- **KAWAI, Yasufumi**
**Tokyo 100-0006 (JP)**
- **HOSHINO, Eriko**
**Tokyo 100-0006 (JP)**

(74) Representative: **Strehl Schübel-Hopf & Partner**
**Maximilianstrasse 54**
**80538 München (DE)**

(56) References cited:
**WO-A1-2015/170374**
**JP-A- 2007 084 652**
**JP-A- 2011 190 390**
**JP-A- 2014 080 530**
**JP-A- 2014 201 680**
**JP-A- 2017 119 755**
**US-A1- 2012 308 828**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 733 799 B1

## Description

TECHNICAL FIELD

The present invention relates to a coating composition.

BACKGROUND ART

Polycarbonate diols can be synthesized from, for example, an alkylenediol compound such as 1,6-hexanediol and a carbonate compound such as dimethyl carbonate, diethyl carbonate and ethylene carbonate. Polycarbonate diols are widely used as polyols, which are one of the raw materials of polyurethane resins.

Conventionally, polyester polyols and polyether polyols are widely used as polyols as raw materials of polyurethane resins. On the other hand, it is expected to obtain polyurethane resins excellent in hydrolysis resistance, heat resistance, weather resistance, chemical resistance, abrasion resistance and adhesion by using the polycarbonate diols as raw materials.

In addition, for example, polycarbonate diols can also be further compounded in a paint or a coating agent in which a crosslinking agent having reactivity with a hydroxyl group of melamine resins, isocyanate compounds, or blocked isocyanate compounds. As a result, it is expected to improve elasticity, adhesion to various substrates, abrasion resistance and chipping resistance in the obtained paints and coating agents, and impart smooth and flexible texture (so-called soft feel properties) in the obtained paints and coating agents.

Patent Document 1 discloses a polycarbonate/polyoxyethylene copolymer and a method for producing the same.

Furthermore, polyurethane resins are conventionally used in a wide range of fields such as synthetic leathers, artificial leathers, adhesives, furniture coatings and automobile coatings, and polyethers, polyesters, and polycarbonates are used as polyol components reacting with isocyanates. However, in recent years, there has been an increasing demand for improvement of the resistances of the polyurethane resins such as heat resistance, weather resistance, hydrolysis resistance, solvent resistance, sunscreen resistance, and scratch resistance.

Generally, it is known that a polyurethane resin using a polycarbonate diol as a polyol component has better scratch resistance than a polyurethane resin using a polyether or polyester. Patent Document 1 discloses a coating composition using a polycarbonate diol as a polyol component. Patent Document 2 discloses a polycarbonate diol/polyether block copolymer.

PRIOR ART LITERATURE

Patent Documents

[Patent Document 1] Japanese Unexamined Patent Application, First Publication No. H02-289616
[Patent Document 2] Japanese Unexamined Patent Application, First Publication No. 2006-124486

DISCLOSURE OF INVENTION

Problems to be Solved by the Invention

However, when the polycarbonate diol disclosed in Patent Document 1 is used in a solvent system, there is room for improvement in selecting an organic solvent to be used.

The present invention has been achieved in view of the above circumstances, and provides a coating composition capable of forming a coating film having excellent low-temperature transparency, abrasion resistance and adhesion.

Further, the polyurethane resins using the polycarbonate diols described in Patent Document 1 and Patent Document 2 also have room for improvement in applications requiring high scratch resistance and heat resistance such as furniture coatings.

The present invention has been achieved in view of the above circumstances, and provides a coating composition capable of forming a coating film having excellent scratch recovery property and heat resistance.

Means for Solving the Problems

That is, the present invention includes the following aspects.

The coating composition of the aspect 1-1 of the present invention contains the following component (1-A1), the following component (1-B) and the following component (1-C):

component (1-A1): a polycarbonate diol composition containing a structure represented by the following general formula (I) and a carbonate or polycarbonate structure represented by the following general formula (II), having hydroxyl groups at both terminals, and having a number-average molecular weight of 300 or more and 10,000 or less, wherein
with respect to a total mass of the structure represented by the general formula (I) and the carbonate or polycarbonate structure, the structure represented by the general formula (I) is contained in an amount of 5% by mass or more and 50% by mass or less, and the carbonate or polycarbonate structure is contained in an amount of 50% by mass or more and 95% by mass or less;

[Chemical formula 1]

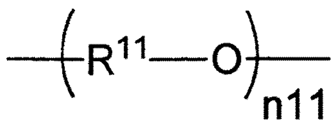

· · · (I)

wherein in the general formula (I), $R^{11}$ is a divalent linear, branched or cyclic aliphatic hydrocarbon group having 2 to 20 carbon atoms, or an aromatic hydrocarbon group, a plurality of $R^{11}$s may be the same as or different from each other, and n11 is a number of 3 to 70;

[Chemical formula 2]

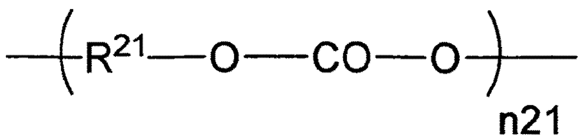

· · · (I I)

wherein in the general formula (II), $R^{21}$ is a divalent linear, branched or cyclic aliphatic hydrocarbon group having 2 to 15 carbon atoms, or an aromatic hydrocarbon group, a plurality of $R^{21}$s may be the same as or different from each other, and n21 is a number of 1 to 50;
component (1-B): an isocyanate compound; and
component (1-C): an organic solvent having a solubility parameter, measured according to Shinichi Ueda et al., "Discussion on solubility parameter of additive", Paint Research, No. 152, pp. 41-46, 2010), of 16.4 $(J/cm^3)^{1/2}$ (8.0 $(cal/cm^3)^{1/2}$) or more and 51.1 $(J/cm^3)^{1/2}$ (25.0 $(cal/cm^3)^{1/2}$) or less.

The coating composition of the aspect 1-1 may contain an organic solvent having a solubility parameter of 16.4 $(J/cm^3)^{1/2}$ (8.0 $(cal/cm^3)^{1/2}$) or more and 30.7 $(J/cm^3)^{1/2}$ (15.0 $(cal/cm^3)^{1/2}$) or less as the component (1-C).
The coating composition of the aspect 1-1 may contain an organic solvent having a vapor pressure of 1.0 kPa or more at 20 °C as the component (1-C).
The coating composition of the aspect 1-1 may further contain a component (1-A2), wherein

the component (1-A2) is a polyol component other than the component (1-A1), and
with respect to a total mass of the component (1-A1) and the component (1-A2), the component (1-A1) is contained in an amount of 50% by mass or more and 100% by mass or less, and the component (1-A2) is contained in an amount of 0% by mass or more and 50% by mass or less.

The coating composition of the aspect 1-1 may further contain a component (1-A2), wherein

the component (1-A2) is a polyol component other than the component (1-A1), and
with respect to a total mass of the component (1-A1) and the component (1-A2), the component (1-A1) is contained in an amount of 70% by mass or more and 100% by mass or less, and the component (1-A2) is contained in an

amount of 0% by mass or more and 30% by mass or less.

In the component (1-A1), with respect to a total mass of the structure represented by the general formula (I) and the carbonate or polycarbonate structure, the structure represented by the general formula (I) may be contained in an amount of 5% by mass or more and 30% by mass, and the carbonate or polycarbonate structure may be contained in an amount of 70% by mass or more and 95% by mass or less.

In the component (1-A1), with respect to a total mass of the structure represented by the general formula (I) and the carbonate or polycarbonate structure, the structure represented by the general formula (I) may be contained in an amount of 5% by mass or more and 20% by mass, and the carbonate or polycarbonate structure may be contained in an amount of 80% by mass or more and 95% by mass or less.

In the coating composition of the aspect 1-1, n11 in the general formula (I) may be a number of 6 to 50.

In the coating composition of the aspect 1-1, the structure represented by the general formula (I) may be a polyoxyethylene structure.

In the coating composition of the aspect 1-1, the structure represented by the general formula (I) may contain an oxy 1-methylethylene group and an oxyethylene group, and
with respect to a total mass of the structure represented by the general formula (I), the oxy 1-methylethylene is contained in an amount of 10% by mass or more and 100% by mass or less, and the oxyethylene group is contained in an amount of 0% by mass or more and 90% by mass or less.

In the coating composition of the aspect 1-1, the structure represented by the general formula (I) may contain an oxytetramethylene group and an oxy 2,2-dimethyltrimethylene group, and
with respect to a total mass of the structure represented by the following general formula (I), the oxytetramethylene group may be contained in an amount of 10% by mass or more and 100% by mass or less, and the oxy 2,2-dimethyltrimethylene group may be contained in an amount of 0% by mass or more and 90% by mass or less.

The coating composition of the aspect 1-1 may further contain water, wherein a content of the water in the coating composition may be 10% by mass or less.

The coating composition of the aspect 2-1 of the present invention contains a component (2-A1), a component (2-A2), a component (2-B) and a component (2-C), wherein

with respect to a total mass of the component (2-A1) and the component (2-A2), the component (2-A1) is contained in an amount of 3% by mass or more and 99% by mass or less, and the component (2-A2) is contained in an amount of 1% by mass or more and 97% by mass or less;
component (2-A1): a polycarbonate diol composition containing a structure represented by the following general formula (I) and a carbonate or polycarbonate structure represented by the following general formula (II), having hydroxyl groups at both terminals, and having a number-average molecular weight of 300 or more and 10,000 or less, wherein with respect to a total mass of the structure represented by the general formula (I) and the carbonate or polycarbonate structure, the structure represented by the general formula (I) is contained in an amount of 5% by mass or more and 35% by mass or less, and the carbonate or polycarbonate structure is contained in an amount of 65% by mass or more and 95% by mass or less;

[Chemical formula 3]

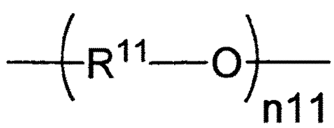

• • • (I)

wherein in the general formula (I), $R^{11}$ is a divalent linear, branched or cyclic aliphatic hydrocarbon group having 2 to 20 carbon atoms, or an aromatic hydrocarbon group, a plurality of $R^{11}$s may be the same as or different from each other, and n11 is a number of 7 to 70;

[Chemical formula 4]

$$-\left(R^{21}-O-CO-O\right)_{n21}- \quad \cdots (II)$$

wherein in the general formula (II), $R^{21}$ is a divalent linear, branched or cyclic aliphatic hydrocarbon group having 2 to 15 carbon atoms, or an aromatic hydrocarbon group, a plurality of $R^{21}$s may be the same as or different from each other, and n21 is a number of 1 to 50,
component (2-A2): a polyol component other than the component (2-A1);
component (2-B): an isocyanate compound; and
component (2-C): an organic solvent.

The coating composition of the aspect 2-1 may contain, with respect to a total mass of the component (2-A1) and the component (2-A2), the component (2-A1) in an amount of 5% by mass or more and 50% by mass or less, and the component (2-A2) in an amount of 50% by mass or more and 95% by mass or less.
The coating composition of the aspect 2-1 may contain, with respect to a total mass of the component (2-A1) and the component (2-A2), the component (2-A1) in an amount of 5% by mass or more and 30% by mass or less, and the component (2-A2) in an amount of 70% by mass or more and 95% by mass or less.
In the component (2-A1), with respect to a total mass of the structure represented by the general formula (I) and the carbonate or polycarbonate structure, the structure represented by the general formula (I) may be contained in an amount of 5% by mass or more and 20% by mass or less, and the carbonate or polycarbonate structure may be contained in an amount of 80% by mass or more and 95% by mass or less.
In the coating composition of the aspect 2-1, n11 in the general formula (I) may be a number of 7 to 50.
In the coating composition of the aspect 2-1, the structure represented by the general formula (I) may a polyoxyethylene structure.
In the coating composition of the aspect 2-1, the structure represented by the general formula (I) contains an oxy 1-methylethylene group and an oxyethylene group, and
with respect to a total mass of the structure represented by the general formula (I), the oxy 1-methylethylene may be contained in an amount of 10% by mass or more and 100% by mass or less, and the oxyethylene group may be contained in an amount of 0% by mass or more and 90% by mass or less.
In the coating composition of the aspect 2-1, the structure represented by the general formula (I) contains an oxytetramethylene group and an oxy 2,2-dimethyltrimethylene group, and
with respect to a total mass of the structure represented by the general formula (I), the oxytetramethylene group may be contained in an amount of 5% by mass or more and 100% by mass or less, and the oxy 2,2-dimethyltrimethylene group may be contained in an amount of 0% by mass or more and 95% by mass or less.
The coating composition of the aspect 2-1 may further contain water, wherein a content of the water in the coating composition may be 10% by mass or less.

Effects of the Invention

According to the coating composition of the above aspects, it is possible to form a coating film having excellent low-temperature transparency, scratch resistance and adhesion.
Further, according to the above aspects, it is possible to form a coating film having excellent scratch recovery property and heat resistance.

BEST MODE FOR CARRYING OUT THE INVENTION

Hereinafter, a mode for carrying out the present invention (hereinafter, referred to as "the present embodiment") will be described in detail. The present invention is not limited to the following description, and can be implemented with various modifications within the scope of the claims.
In the present specification, "polyol" means a compound having two or more hydroxy groups (-OH).

« Coating composition of Embodiment 1 »

The coating composition of the present embodiment contains a component (1-A1), a component (1-B) and a component (1-C).

The component (1-A1) is a polyol component (hereinafter, sometimes referred to as "(1-A) component") and is a polycarbonate diol composition.

The component (1-B) is an isocyanate compound as a curing agent.

The component (1-C) is an organic solvent.

The coating composition of the present embodiment contains the (1-A1) component, (1-B) component and (1-C) component having the following constitutions, thereby making it possible to form a coating film having excellent low-temperature transparency, abrasion resistance and adhesion. Each of these components will be described in detail below.

< (1-A1) component: polycarbonate diol composition>

The polycarbonate diol composition (component (1-A1)) contained in the coating composition of the present embodiment contains a structure represented by the following general formula (I) (hereinafter, sometimes referred to as "structure (I)") and a carbonate or polycarbonate structure represented by the following general formula (II) (hereinafter, sometimes referred to as "polycarbonate structure (II)").

[Chemical formula 5]

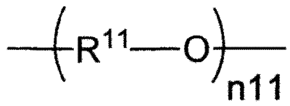

• • • (I)

wherein in the general formula (I), $R^{11}$ is a divalent linear, branched or cyclic aliphatic hydrocarbon group having 2 to 20 carbon atoms, or an aromatic hydrocarbon group. A plurality of $R^{11}$ may be the same as or different from each other, and n11 is a number of 3 to 70;

[Chemical formula 6]

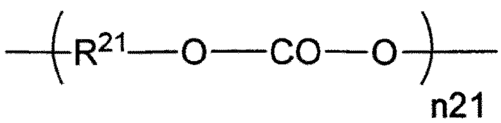

• • • (I I)

wherein in the general formula (II), $R^{21}$ is a divalent linear, branched or cyclic aliphatic hydrocarbon group having 2 to 15 carbon atoms, or an aromatic hydrocarbon group. A plurality of $R^{21}$ may be the same as or different from each other, and n $^{21}$ is a number of 1 to 50.

In addition, with respect to the total mass of the structure represented by the general formula (I) and the carbonate or polycarbonate structure, the structure represented by the general formula (I) is preferably contained in an amount of 5% by mass or more and 50% by mass or less, and the carbonate or polycarbonate structure is preferably contained in an amount of 50% by mass or more and 95% by mass or less.

The content of the structure represented by the general formula (I) and the content of the carbonate or polycarbonate structure in the polycarbonate diol composition can be measured, for example, by the method described in the following (1) to (4). (1) The polycarbonate diol composition is alkali-hydrolyzed in an ethanolic potassium hydroxide solution to regenerate the diol component. (2) Phenolphthalein is used as an indicator, and hydrochloric acid is added to neutralize. (3) The precipitated salt is separated by filtration, and the filtrate is measured by GPC. (4) The concentration of the diol having hydroxyl groups at both terminals of the structure represented by the general formula (I) in the filtrate is determined from a calibration curve separately prepared. From the concentration, the mass of the diol having hydroxyl groups at both terminals of the structure represented by the general formula (I) is calculated, and the value obtained by dividing it by the mass of the polycarbonate diol composition used for the alkali-hydrolysis is the content of the diol having hydroxyl groups at both terminals of the structure represented by the general formula (I).

The terminal structure of the structure represented by the general formula (I) in the polycarbonate diol composition ((1-A1) component) is a terminal structure in which one end is bonded to a carbonate group (-O-CO-O-) and the other end is bonded to a hydroxyl group (-OH), a terminal structure in which both terminals are bonded to a carbonate

group (-O-COO-), or a terminal structure in which both terminals are bonded to a hydroxyl group (-OH).

In addition, both terminals of the molecule having the structure represented by the general formula (I) contained in the polycarbonate diol composition ((1-A1) component) are hydroxyl groups.

The molecule having a carbonate or polycarbonate structure contained in the polycarbonate diol composition ((1-A1) component) has hydroxyl groups at both terminals. That is, the molecule having a carbonate or polycarbonate structure contained in the polycarbonate diol composition (component (1-A1)) is a carbonate diol or polycarbonate diol. Due to the impurities in the various raw materials used for production of the polycarbonate diol composition, or the terminal structure produced as a by-product during the production of the polycarbonate diol composition, or for controlling the urethane formation reaction rate or state in the intended use of the polycarbonate diol composition, in some cases, some of the terminal hydroxyl groups may be converted into an alkyl group or an aryl group that does not react with the isocyanate group. In the present embodiment, in consideration of such a case, it is not necessary that absolutely 100 mol% of both the terminal groups of the polycarbonate diol be hydroxyl groups. From such a viewpoint, the ratio of the hydroxyl group to the total molar amount of the terminal groups is preferably 90 mol% or more, and more preferably 95 mol% or more.

Both the terminal structures of the polycarbonate diol contained in the polycarbonate diol composition can be confirmed, for example, in accordance with the method for measuring the terminal hydroxyl group concentration described in Japanese Patent No. 3874664 (Reference Document 1).

In addition, as a solvent for recovering a fraction, tetrahydrofuran, acetone or methanol can be used other than ethanol.

The number-average molecular weight of the polycarbonate diol composition ((1-A1) component) is preferably 300 or more and 10,000 or less, more preferably 400 or more and 10,000 or less, even more preferably 500 or more and 3,000 or less.

When the number-average molecular weight is equal to or more than the above lower limit, the flexibility and low-temperature properties of the thermoplastic urethane obtained from the polycarbonate diol composition tend to be improved. On the other hand, when the number-average molecular weight is equal to or less than the above upper limit, the moldability of the thermoplastic urethane obtained from the polycarbonate diol composition tends to be improved.

The number-average molecular weight can be calculated from the hydroxyl value of the polycarbonate diol using the method described in Examples later.

[Structure (I)]

In the polycarbonate diol composition ((1-A1) component), the content of the structure (I) is preferably 5% by mass or more and 50% by mass or less, more preferably 5% by mass or more and 30% by mass or less, and even more preferably 5% by mass or more and 20% by mass or less, with respect to the total mass of the structure (I) and the carbonate or polycarbonate structure.

When the content of the structure (I) is equal to or more than the above lower limit, a coating film having excellent scratch resistance and adhesion can be obtained. In addition, when the content of the structure (I) is equal to or less than the upper limit, decomposition of the polycarbonate diol composition by heat can be further suppressed.

In the polycarbonate diol composition ((1-A1) component), the terminal structure of the structure (I) is a terminal structure in which one terminal is bonded to a carbonate group and the other terminal is bonded to a hydroxyl group, a terminal structure in which both terminals are bonded to a carbonate group, or a terminal structure in which both terminals are bonded to a hydroxyl group.

In addition, in the polycarbonate diol composition ((1-A1) component), the terminal structure of the structure (I) may be a mixture of a terminal structure in which one terminal is bonded to a carbonate group and the other terminal is bonded to a hydroxyl group, a terminal structure in which both terminals are bonded to a carbonate group, and a terminal structure in which both terminals are bonded to a hydroxyl group.

Next, the details of the structure (I) will be described below.

($R^{11}$)

In the general formula (I), $R^{11}$ is a divalent linear, branched or cyclic aliphatic hydrocarbon group having 2 to 20 carbon atoms, or an aromatic hydrocarbon group. A plurality of $R^{11}$ may be the same as or different from each other. The plurality of $R^{11}$ are preferably the same as each other from the viewpoint of easy synthesis.

The divalent linear aliphatic hydrocarbon group for $R^{11}$ has 2 to 20 carbon atoms, preferably 2 to 12 carbon atoms, and more preferably 2 to 6 carbon atoms.

Specific examples of the divalent linear aliphatic hydrocarbon group for $R^{11}$ include an ethylene group, trimethylene group, tetramethylene group, pentamethylene group, hexamethylene group, heptylene group and octylene group.

The divalent branched aliphatic hydrocarbon group for $R^{11}$ has 3 to 20 carbon atoms, preferably 3 to 12 carbon

atoms, and more preferably 3 to 6 carbon atoms.

Specific examples of the divalent branched aliphatic hydrocarbon group for $R^{11}$ include an isopropylene group, isobutylene group, tert-butylene group, isopentylene group, 2,2-dimethyltrimethylene group, isohexylene group, isoheptylene group and isooctylene group.

The divalent cyclic aliphatic hydrocarbon group for $R^{11}$ has 6 to 20 carbon atoms, preferably 6 to 12 carbon atoms, and more preferably 6 to 8 carbon atoms.

Specific examples of the divalent cyclic aliphatic hydrocarbon group for $R^{11}$ include a cyclobutylene group, cyclopentylene group, cyclohexylene group and cycloheptylene group.

The divalent aromatic hydrocarbon group for $R^{11}$ has 6 to 15 carbon atoms, preferably 6 to 12 carbon atoms, and more preferably 6 to 10 carbon atoms.

Specific examples of the divalent aromatic hydrocarbon group for $R^{11}$ include a phenylene group and naphthylene group.

Among the examples, $R^{11}$ is preferably a divalent linear, branched or cyclic aliphatic hydrocarbon group having 2 to 20 carbon atoms (that is, an alkylene group), more preferably a divalent linear aliphatic hydrocarbon group having 2 to 6 carbon atoms or a divalent branched aliphatic hydrocarbon group having 3 to 6 carbon atoms, even more preferably a divalent linear aliphatic hydrocarbon group having 2 to 6 carbon atoms.

(n11)

In the general formula (I), n11 represents the repeating number of the structure ($-R^{11}-O-$). n11 is a number of 3 to 70, preferably a number of 3 to 60, and more preferably a number of 6 to 50.

When n11 is equal to or more than the above lower limit, the amount of the diol having hydroxyl groups at both terminals of the structure represented by the general formula (I), as a raw material, can be reduced, and therefore the water resistance and heat resistance of the coating film obtained using the polycarbonate diol composition ((1-A1) component) tend to be further improved. When n11 is equal to or less than the upper limit, the crystallinity of the polycarbonate diol composition tends to be further suppressed.

The above-mentioned n11 can be determined by subjecting the polycarbonate diol composition to alkali-decomposition to take out the raw material diol component, and subjecting the component to GC-MS measurement, LC-MS measurement and gel permeation chromatography (GPC) measurement.

Among the examples, the structure (I) is preferably a polyoxyalkylene structure.

Specific examples of the preferable oxyalkylene group contained in the structure (I) include an oxyethylene group, oxy 1-methylethylene group, oxytetramethylene group and oxy 2,2-dimethyltrimethylene group. Among the examples, an oxyethylene group is more preferable.

Furthermore, a polyoxyethylene structure in which all of the oxyalkylene groups contained in the structure (I) are oxyethylene groups, is particularly preferable.

When the structure (I) contains an oxy 1-methylethylene group and an oxyethylene group, the oxy 1-methylethylene group is preferably contained in an amount of 10% by mass or more and 100% by mass or less, and the oxyethylene group is preferably contained in an amount of 0% by mass or more and 90% by mass or less, with respect to the total mass of the structure (I).

When the structure (I) contains an oxytetramethylene group and an oxy 2,2-dimethyltrimethylene group, the oxytetramethylene group is preferably contained in an amount of 10% by mass or more and 100% by mass or less, and the oxy 2,2-dimethyltrimethylene group is preferably contained in an amount of 0% by mass or more and 90% by mass or lees, with respect to the total mass of the structure (I).

[Polycarbonate structure (II)]

In the polycarbonate diol composition of the present embodiment, the content of the polycarbonate structure (II) is preferably 50% by mass or more and 95% by mass or less, more preferably 70% by mass or more and 95% by mass or less, and even more preferably 80% by mass or more and 95% by mass or less, with respect to the total mass of the structure (I) and the polycarbonate structure (II).

When the content of the polycarbonate structure (II) is equal to or more than the lower limit, a coating film having excellent water resistance, heat resistance, chemical resistance and abrasion resistance can be obtained. Moreover, when the content of the polycarbonate structure (II) is equal to or less than the upper limit, the compatibility of the polycarbonate diol composition with polyether polyol can be further improved.

Next, details of the polycarbonate structure (II) will be described below.

(R21)

In the general formula (II), $R^{21}$ is a divalent linear, branched or cyclic aliphatic hydrocarbon group having 2 to 15 carbon atoms, or an aromatic hydrocarbon group. A plurality of $R^{21}$ may be the same as or different from each other. The plurality of $R^{21}$ are preferably the same as each other from the viewpoint of easy synthesis.
The divalent linear aliphatic hydrocarbon group for $R^{21}$ has 2 to 15 carbon atoms, preferably 3 to 12 carbon atoms, and more preferably 3 to 10 carbon atoms.
Specific examples of the divalent linear aliphatic hydrocarbon group having 2 to 15 carbon atoms for $R^{21}$ are the same as those exemplified for $R^{11}$ above. Among the examples, a butylene group, pentylene group or hexylene group is preferred from the viewpoint of versatility.
The divalent branched aliphatic hydrocarbon group for $R^{21}$ has 3 to 15 carbon atoms, preferably 3 to 12 carbon atoms, and more preferably 3 to 10 carbon atoms.
Specific examples of the divalent branched aliphatic hydrocarbon group having 2 to 15 carbon atoms for $R^{21}$ are the same as those exemplified for $R^{11}$ above. Among the examples, an isopentylene group or isohexylene group is preferable from the viewpoint of versatility.
The divalent cyclic aliphatic hydrocarbon group for $R^{21}$ has 3 to 15 carbon atoms, preferably 6 to 15 carbon atoms, and more preferably 6 to 10 carbon atoms.
Specific examples of the divalent cyclic aliphatic hydrocarbon group for $R^{21}$ are the same as those exemplified for $R^{11}$ above. Among the examples, a cyclohexylene group is preferable from the viewpoint of versatility.
The divalent aromatic hydrocarbon group for $R^{21}$ has 6 to 15 carbon atoms, preferably 6 to 12 carbon atoms, and more preferably 6 to 10 carbon atoms.
Specific examples of the divalent aromatic hydrocarbon group for $R^{21}$ are the same as those exemplified for $R^{11}$ above.
Among the examples, $R^{21}$ is preferably a divalent linear aliphatic hydrocarbon group having 3 to 10 carbon atoms or a divalent branched aliphatic hydrocarbon group having 3 to 10 carbon atoms, and more preferably a divalent linear aliphatic hydrocarbon group having 3 to 10 carbon atoms.

(n21)

In the general formula (II), n21 represents a repeating number of the carbonate structure ($-R^{21}-O-CO-O-$). n21 is a number of 1 to 50, preferably a number of 2 to 50, more preferably a number of 3 to 30, and even more preferably a number of 4 to 20.
n21 can be determined by subjecting the polycarbonate diol composition to alkali-decomposition to take out the raw material diol component, and subjecting the component to GC-MS measurement, LC-MS measurement, and GPC measurement.

< Method for producing polycarbonate diol composition (component (1-A1))>

The polycarbonate diol composition ((1-A1) component) can be obtained by performing a transesterification reaction using an ether diol represented by the following general formula (I-1) (hereinafter, sometimes referred to as "ether diol (I-1)") and a carbonate or polycarbonate diol represented by the general formula (II-1) (hereinafter, sometimes referred to as "polycarbonate diol (II-1)").

[Chemical formula 7]

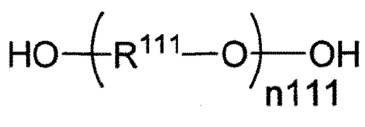

・・・(I−1)

wherein in the general formula (I-1), $R^{111}$ is the same as the above-mentioned $R^{11}$. n111 is the same as the above-mentioned n11.

[Chemical formula 8]

$$HO-(R^{211}-O-CO-O)_{n211}-R^{212}-OH \quad \cdots (II-1)$$

wherein in the general formula (II-1), $R^{211}$ and $R^{212}$ are each the same as the above-mentioned $R^{21}$. n211 is the same as the above-mentioned n21.

[Ether diol (I-1)]

The ether diol (I-1) used for producing the polycarbonate diol composition ((1-A1) component) may be any one having the structure represented by the general formula (I-1). Among them, the ether diol (I-1) is preferably a polyoxyalkylene diol. As the ether diol (I-1), various products having different molecular weights are commercially available, and such commercially available products can also be used. Examples of the commercially available products of the ether diols (I-1) include a polyoxyalkylene diol, such as the "polyethylene glycol" series and the "polytetramethylene oxide" series manufactured by Wako Pure Chemical Industries, Ltd. and the "PTXG" series manufactured by Asahi Kasei Corporation.

The number-average molecular weight of the ether diol (I-1) is not particularly limited, and is preferably 400 or more and 3,000 or less, more preferably 600 or more and 2,000 or less. When the number-average molecular weight of the ether diol (I-1) used for the production is equal to or more than the lower limit, the used amount of the ether diol (I-1) as raw material can be further reduced. Furthermore, the water resistance and heat resistance of the coating film obtained by using the polycarbonate diol composition tend to be further improved. When the number-average molecular weight of the ether diol (I-1) used for the production is equal to or less than the upper limit, the crystallinity of the polycarbonate diol composition tends to be further suppressed.

[Polycarbonate diol (II-1)]

The carbonate diol or polycarbonate diol (II-1) used for producing the polycarbonate diol composition ((1-A1) component) may be any one having the structure represented by the general formula (II-1). The method for producing the polycarbonate diol (II-1) is not particularly limited, and known methods can be employed. For example, the polycarbonate diol (II-1) can be obtained by reacting a carbonate compound with a diol compound in the presence of a transesterification reaction catalyst.

(Carbonate compound)

Examples of the carbonate compound used for producing the polycarbonate diol (II-1) include, but are not limited to, an alkylene carbonate, dialkyl carbonate and/or diaryl carbonate.

Examples of the alkylene carbonate include an ethylene carbonate, trimethylene carbonate, 1,2-propylene carbonate, 1,2-butylene carbonate, 1,3-butylene carbonate and 1,2-pentylene carbonate.

Examples of the dialkyl carbonate include a dimethyl carbonate, diethyl carbonate, dipropyl carbonate and dibutyl carbonate.

Examples of the diaryl carbonate include a diphenyl carbonate.

Among the examples, the carbonate compound used for producing the polycarbonate diol (II-1) is preferably an alkylene carbonate, and more preferably an ethylene carbonate.

(Diol compound)

Examples of the diol compound used for producing the polycarbonate diol (II-1) include, but are not limited to, a linear diol, a branched diol, a cyclic diol, and a diol having an aromatic ring.

Examples of the linear diol include an ethylene glycol, 1,3-propanediol, 1,4-butanediol, 1,5-pentanediol, 1,6-hexanediol, 1,7-heptanediol, 1,8-octanediol, 1,9-nanodiol, 1,10-decanediol, 1,11-undecanediol and 1,12-dodecanediol.

Examples of the branched diol include a 2-methyl-1,8-octanediol, neopentyl glycol, 2-ethyl-1,6-hexanediol, 2-methyl-1,3-propanediol, 3-methyl-1,5-pentanediol, 2,4-dimethyl-1,5-pentanediol and 2,4-diethyl-1,5-pentanediol.

Examples of the cyclic diol include a 1,3-cyclohexanediol, 1,4-cyclohexanediol, 1,4-cyclohexanedimethanol and 2-bis (4-hydroxycyclohexyl)-propane.

Examples of the diol having an aromatic ring include a p-xylene diol, p-tetrachloroxylene diol, 1,4-bis (hydroxyethoxy) benzene and 2,2-bis [(4-hydroxyethoxy) phenyl] propane.
Among the examples, a linear diol is preferable, and a 1,5-pentanediol or 1,6-hexanediol is more preferable.

[Conditions for producing polycarbonate diol composition ((1-A1) component) and polycarbonate diol (II-1)]

In the production of the polycarbonate diol (II-1) as raw material, a transesterification reaction catalyst can be used. The catalyst can be selected from ordinary transesterification reaction catalysts.
Examples of the transesterification reaction catalyst include alkali metals and alkaline earth metals, and alcoholates thereof, hydrides thereof, oxytoxides thereof, amides thereof, hydroxides thereof and salts thereof.
Examples of the salt of the alkali metal and alkaline earth metal include carbonates, nitrogen-containing borates, and basic salts with organic acids.
Examples of the alkali metal include a lithium and sodium, potassium.
Examples of the alkaline earth metal include a magnesium, calcium, strontium and barium.
Examples of the transesterification reaction catalyst using a metal other than the alkali metals and the alkaline earth metals include metals other than the alkali metals and the alkaline earth metals, and salts thereof, alcoholates thereof and organic compounds containing the metals.
Specific examples of the metal other than the alkali metals and the alkaline earth metals include an aluminum, titanium, vanadium, chromium, manganese, iron, cobalt, nickel, copper, zinc, gallium, germanium, zirconium, niobium, molybdenum, ruthenium, rhodium, palladium, silver, indium, tin, antimony, tungsten, rhenium, osmium, iridium, platinum, gold, thallium, lead, bismuth and ytterbium.
These transesterification reaction catalysts can be used alone or in combination of two or more.
Among the examples, from the viewpoint of more favorably performing the transesterification reaction to obtain the polycarbonate diol and having less influence on the urethane reaction when using the obtained polycarbonate diol, the transesterification reaction catalyst is preferably one or more metals selected from the group consisting of a sodium, potassium, magnesium, potassium, titanium, zirconium, tin, lead and ytterbium, salts thereof, alkoxides thereof, and organic compounds containing these metals.
Furthermore, the transesterification reaction catalyst is more preferably one or more metals selected from the group consisting of a magnesium, titanium, ytterbium, tin and zirconium.
Specific examples of the preferable transesterification reaction catalyst include organic compounds of lead and organic compounds of titanium.
Examples of the organic compound of lead include a lead acetate trihydrate, tetraphenyl lead and lead stearate.
Examples of the organic compound of titanium include a titanium tetra-n-butoxide, titanium tetra-n-propoxide and titanium tetraisopropoxide.
The used amount of the transesterification reaction catalyst is preferably 0.00001% by mass or more and 0.1% by mass or less, more preferably 0.0001% by mass or more and 0.05% by mass or less, with respect to the total mass of the raw material.
The transesterification reaction catalyst used in the transesterification reaction is not consumed by the transesterification reaction when heat treatment is performed subsequently to the production of the polycarbonate diol. Therefore, the amount thereof can be calculated on the basis of the used amount of the transesterification reaction catalyst. In the case of using, for example, the commercially available polycarbonate diol, the amount of the metal of the transesterification reaction catalyst contained in the polycarbonate diol can be determined by ICP (Inductively Coupled Plasma) measurement.
The polycarbonate diol (II-1) used for the production of the polycarbonate diol composition ((1-A1) component) deactivates the transesterification reaction catalyst used in the production thereof, and therefore, a catalyst poison such as a phosphate ester compound may be added.
When the polycarbonate diol (II-1) as raw material contains a catalyst poison of the transesterification reaction catalyst used in the production thereof, usually, it tends to be difficult for the transesterification reaction between the ether diol (I-1) and the polycarbonate diol (II-1) to proceed. Therefore, in the production of the polycarbonate diol composition ((1-A1) component), it is allowable for a necessary amount of the above-mentioned transesterification reaction catalyst to be newly added.
On the other hand, when the polycarbonate diol (II-1) as raw material does not contain a catalyst poison of the transesterification reaction catalyst, usually, it tends to be easy for the transesterification reaction in the present embodiment to proceed. However, a necessary amount of the transesterification reaction catalyst can also be newly added in the production of the polycarbonate diol composition ((1-A1) component), when it is desired to lower the reaction temperature or to shorten the reaction time. In that case, the same transesterification reaction catalyst used in the production of the polycarbonate diol (II-1) as raw material can be adopted.
Further, the polycarbonate diol (II-1) used for producing the polycarbonate diol composition ((1-A1) component)

may be a homopolycarbonate diol obtained from one kind of diol compound, and may also be a copolymeric polycarbonate diol obtained from two or more kinds of diol compounds.

The polycarbonate diol composition ((1-A1) component) can be obtained by using any of the polycarbonate diols (II-1) by the transesterification reaction with the ether diol (I-1).

However, for example, the homopolycarbonate diol obtained by using 1,6-hexanediol, which is widely used in the market, is usually a solid at room temperature. Therefore, the polycarbonate diol composition ((1-A1) component) obtained by transesterification reaction of the homopolycarbonate diol with the ether diol (I-1) also tends to be solid at room temperature.

On the other hand, for example, the copolymeric polycarbonate diol obtained by using two kinds of 1,5-pentanediol and 1,6-hexanediol is liquid at room temperature. Therefore, the polycarbonate diol composition ((1-A1) component) obtained by the transesterification reaction of the copolymeric polycarbonate diol with the ether diol (I-1) also tends to be liquid at room temperature.

Therefore, from the viewpoint of handleability, the polycarbonate diol as raw material is often preferably a liquid at room temperature.

The number-average molecular weight of the polycarbonate diol (II-1) used for producing the polycarbonate diol composition ((1-A1) component) is not particularly limited, and is preferably 500 or more and 5,000 or less, more preferably 1,000 or more and 3,000 or less..

When the number-average molecular weight of the polycarbonate diol (II-1) is equal to or more than the lower limit, the expected performance of the polycarbonate diol tends to be further improved. On the other hand, when the number-average molecular weight of the polycarbonate diol (II-1) is equal to or less than the upper limit, the increase in viscosity of the polycarbonate diol composition ((1-A1) component) can be suppressed more effectively, and the handleability tends to be further improved.

The polycarbonate diol composition ((1-A1) component) can also be produced by using the ether diol (I-1) as a diol and performing a polycondensation reaction between the ether diol (I-1) and a carbonate compound. However, in order for such a polycondensation reaction of the polycarbonate diol to proceed, it is generally necessary to heat at a high temperature for a long time. For this reason, there is a high possibility that an unwanted side reaction will occur, or a workload in switching a product type may increase.

From this viewpoint, as the method for producing the polycarbonate diol composition ((1-A1) component), it is preferable to adopt the transesterification reaction using the ether diol (I-1) and the polycarbonate diol (II-1), but not the polycondensation reaction using the ether diol (I-1) and the carbonate compound.

Specifically, the transesterification reaction can be carried out by mixing the ether diol (I-1) and the polycarbonate diol (II-1) and stirring the mixture while heating.

The temperature of the transesterification reaction is not particularly limited, and is preferably 120 °C to 200 °C, and more preferably 140 °C to 180 °C.

When the reaction temperature is equal to or higher than the lower limit, the transesterification reaction can be carried out in a shorter time, and the economic efficiency is excellent. When the reaction temperature is equal to or lower than the upper limit, coloring of the obtained polycarbonate diol composition can be prevented more effectively.

The reaction pressure of the transesterification reaction is not particularly limited, and is preferably from atmospheric pressure to 1 MPa. When the reaction pressure is within the above range, the reaction can be carried out more easily. In addition, when an auxiliary raw material is used, the transesterification reaction can be more efficiently promoted by applying a certain pressure in consideration of the vapor pressure.

As the method of controlling the number-average molecular weight of the polycarbonate diol composition (component (1-A1)), it is preferable to carry out the transesterification reaction in the presence of one or two or more kinds of the ether diol (I-1), from the viewpoint of selecting a polycarbonate diol (II-1) having an appropriate molecular weight as raw material and controlling the molecular weight.

The progress and completion of the transesterification reaction can be confirmed by GPC measurement. With the progress of the transesterification reaction, the peak derived from the ether diol (I-1) as raw material decreases with time, and by the disappearance of the peak, it can be confirmed that a structure derived from the ether diol (I-1) is bonded to the terminal and inside of the polymer chain of the polycarbonate diol (II-1) as raw material.

In the method for producing the polycarbonate diol composition ((1-A1) component), a step of performing a dehydration treatment of the raw material to be used may be performed as a pretreatment before the above-described transesterification reaction.

In the method for producing the polycarbonate diol composition ((1-A1) component), a step of adding the above-mentioned catalyst poison against the transesterification reaction catalyst as a post-treatment may be performed after the above-mentioned transesterification reaction.

<(1-A2) component: other polyol components>

The coating composition of the present embodiment may further contain, as the polyol component ((1-A) component) as a main component, other polyol components ((1-A2) component) in addition to the above-mentioned polycarbonate diol composition ((1-A1) component).
Examples of the other polyol components ((1-A2) component) include, but are not limited to, polyester polyols, polyether polyols, acrylic polyols, polyolefin polyols and fluorine polyols. These polyols are the same as the polyols listed as the other polyol components ((2-A2) component) in the coating composition of embodiment 2 described later.
Examples of the other polyol components ((1-A2) component) include the ether diol (I-1) as raw material of the polycarbonate diol composition ((1-A1) component), the polycarbonate diol (II-1), and diol compounds as raw material of the polycarbonate diol (II-1).
When the coating composition of the present embodiment further contains the other polyol components ((1-A2) component), the content of the component (1-A1) is preferably 70% by mass or more and 100% by mass or less, and the content of the component (1-A2) is preferably 0% by mass or more and 30% by mass or less, with respect to the total mass of the polycarbonate diol composition ((1-A1) component) and the other polyol components ((1-A2) component).

<(1-B) component: isocyanate compound>

The isocyanate compound contained in the coating composition of the present embodiment is not particularly limited as long as it functions as a curing agent for the coating composition, and isocyanate compounds having two or more isocyanate groups at the terminal may be used.
Examples of such isocyanate compounds include chain aliphatic diisocyanates, cycloaliphatic diisocyanates, aromatic diisocyanates, isocyanate compounds having three or more isocyanate groups, and isocyanurate-modified and biuret-modified products of these isocyanate compounds.
Examples of the chain aliphatic diisocyanate include a hexamethylene diisocyanate and trimethylhexamethylene diisocyanate.
Examples of the cycloaliphatic diisocyanate include an isophorone diisocyanate.
Examples of the aromatic diisocyanate include a tolylene diisocyanate, 4,4'-diphenylmethane diisocyanate, xylylene diisocyanate and naphthylene diisocyanate.
Examples of the isocyanate compound having three or more isocyanate groups include a triphenylmethane-4,4'-4"-triisocyanate, 1,3,5-triisocyanatobenzene, 2,4,6-triisocyanatotoluene and 4,4'-dimethyldiphenylmethane-2,2',5,5'-tetraisocyanate.
The isocyanate compound may be a commercially available one, or may be synthesized using a known method.
Examples of the commercially available isocyanate compound include the "DURANATE (trade name)" series manufactured by Asahi Kasei Corporation, such as 24A-100, 22A-75P, TPA-100, TKA-100, P301-75E, D101, D201, 21S-75E, MFA-75B, MHG-80B, TUL-100, TLA-100, TSA-100, TSS-100, TSE-100, E402-80B, E405-80B, AE700-100, A201H, 17B-60P, TPA-B80E, MF-B60B, MF-K60B, SBB-70P, SBN-70D, E402-B80B, WB40-100, WT30-100, WT31-100, WB40-80D, WT20-100, WL70-100, WE50-100 or WM44-L70G.
In the coating composition of the present embodiment, the content of the isocyanate compound ((1-B) component) may be appropriately adjusted according to the molar amount of the hydroxyl group of the polyol as the main component.
Specifically, the molar ratio (NCO/OH) of the isocyanate group of the isocyanate compound ((1-B) component) to the hydroxyl group of the polyol may be, for example, 0.2 or more and 5.0 or less, may be 0.4 or more and 3.0 or less, and may also be 0.5 or more and 2.0 or less.
When the NCO/OH is equal to or more than the lower limit, a tougher coating film tends to be obtained. On the other hand, when the NCO/OH is equal to or less than the upper limit, the smoothness of the coating film tends to be further improved.

<(1-C) component: organic solvent>

The organic solvent ((1-C) component) contained in the coating composition of the present embodiment is preferably an organic solvent having a solubility parameter (SP value) of 16.4 $(J/cm^3)^{1/2}$ (8.0 $(cal/cm^3)^{1/2}$) or more and 51.1 $(J/cm^3)^{1/2}$ (25.0 $(cal/cm^3)^{1/2}$) or less, more preferably an organic solvent having a solubility parameter (SP value) of 16.4 $(J/cm^3)^{1/2}$ (8.0 $(cal/cm^3)^{1/2}$) or more and 30.7 $(J/cm^3)^{1/2}$ (15.0 $(cal/cm^3)^{1/2}$) or less, and even more preferably an organic solvent having a solubility parameter (SP value) of 16.4 $(J/cm^3)^{1/2}$ (8.0 $(cal/cm^3)^{1/2}$) or more and 24.5 $(J/cm^3)^{1/2}$ (12.0 $(cal/cm^3)^{1/2}$) or less.
The organic solvent ((1-C) component) contained in the coating composition of the present embodiment preferably has an SP value in the above range and a vapor pressure of 1.0 kPa or more at 20 °C.

When the coating composition of the present embodiment contains the organic solvent ((1-C) component) having the above-described configuration, a coating film having excellent low-temperature transparency and scratch resistance can be obtained.

Specific examples of such organic solvents include amide solvents, sulfoxide solvents, ketone solvents, ether solvents, ester solvents, carbonate ester solvents and aromatic hydrocarbon solvents.

Examples of the amide solvent include a dimethylformamide.

Examples of the sulfoxide solvent include a dimethyl sulfoxide.

Examples of the ketone solvent include a methyl ethyl ketone, methyl isobutyl ketone, diisobutyl ketone and cyclohexanone.

Examples of the ether solvent include a tetrahydrofuran.

Examples of the ester solvent include a methyl acetate, ethyl acetate, butyl acetate, isobutyl acetate and propylene glycol 1-monomethyl ether 2-acetate.

Examples of the carbonate ester solvent include a dimethyl carbonate, diethyl carbonate and propylene carbonate.

Examples of the aromatic hydrocarbon solvent include a toluene and xylene.

These organic solvents may be used alone or as a mixed solvent of two or more.

Among the examples, the organic solvent ((1-C) component) contained in the coating composition of the present embodiment is preferably one or more selected from the group consisting of methyl ethyl ketone, methyl isobutyl ketone, diisobutyl ketone, methyl acetate, ethyl acetate, butyl acetate, isobutyl acetate and toluene, due to it is an organic solvent having a solubility parameter (SP value) of 16.4 $(J/cm^3)^{1/2}$ (8.0 $(cal/cm^3)^{1/2}$) or more and 30.7 $(J/cm^3)^{1/2}$ (15.0 $(cal/cm^3)^{1/2}$) or less, and a vapor pressure of 1.0 kPa or more at 20 °C.

The content of the organic solvent ((1-C) component) in the coating composition of the present embodiment may be, for example, 30% by mass or more and 90% by mass or lees, or may be 40% by mass or more and 80% by mass or less, or may be 50% by mass or more and 70% by mass or less, with respect to the total mass of the coating composition.

<(1-D) component: other additives>

The coating composition of the present embodiment may contain other additives ((1-D) component) according to various uses, such as a curing accelerator (catalyst), filler, flame retardant, dye, organic or inorganic pigment, release agent, fluidity modifier, plasticizer, antioxidant, UV absorber, light stabilizer, heat stabilizer, antifoam, leveling agent or colorant, in addition to the (1-A1) component, (1-A2) component, (1-B) component, and the (1-C) component.

Examples of the curing accelerator include, but are not particularly limited to, generally used monoamines, diamines, or triamines, cyclic amines, alcohol amines, ether amines, and metal catalyst.

Examples of the monoamine include a triethylamine and N, N-dimethylcyclohexylamine.

Examples of the diamine include a tetramethylethylenediamine.

Examples of the alcohol amine include a dimethylethanolamine.

Examples of the metal catalyst include, but are not particularly limited to, a potassium acetate, potassium 2-ethylhexanoate, calcium acetate, lead octylate, dibutyltin dilaurate, tin octylate, bismuth neodecanoate, bismuth oxycarbonate, bismuth 2-ethylhexanoate, zinc octylate, zinc neodecanoate, phosphine and phosphorin.

Examples of the filler, dye, organic or inorganic pigment and the colorant include, but are not particularly limited to, generally used woven cloth, glass fiber, carbon fiber, polyamide fiber, mica, kaolin, bentonite, metal powder, azo pigment, carbon black, clay, silica, talc, plaster, alumina white and barium carbonate.

Examples of the flame retardant include, but are not limited to, inorganic flame retardants, aromatic bromine compounds and phosphorus flame retardants.

Examples of the inorganic flame retardant include an antimony trioxide, aluminum hydroxide, magnesium hydroxide and zinc borate.

Examples of the aromatic bromine compound include a hexabromobenzene, decabromodiphenylethane, 4,4-dibromobiphenyl and ethylenebistetrabromophthalimide.

Examples of the phosphorus flame retardant include a resorcinol bis-diphenyl phosphate and resorcinol bis-dixylenyl phosphate.

Examples of the release agent, fluidity modifier and the leveling agent include, but are not particularly limited to, a silicone, aerosil, wax, stearate and polysiloxane such as BYK-331 (manufactured by BYK Chemical Co., Ltd.).

Examples of the plasticizer include, but are not particularly limited to, a phthalate, phosphate, fatty ester, pyromellitic ester, epoxy plasticizer, polyether plasticizer, liquid rubber and non-aromatic paraffin oil.

Examples of the antioxidant, ultraviolet absorber, light stabilizer, and the heat stabilizer include, but are not particularly limited to, a phosphorus compound, phenol derivative, compound containing sulfur and tin compound. These

may be used alone or in combination of two or more.

Examples of the phosphorus compound include aliphatic and aromatic group-substituted aromatic esters of phosphoric acid and phosphorous acid, and hypophosphorous acid derivatives. Specific examples of the phosphorus compound include a phenylphosphonic acid, phenylphosphinic acid, diphenylphosphonic acid, polyphosphonate, dialkylpentaerythritol diphosphite and dialkylbisphenol A diphosphite.

Examples of the phenol derivative include a hindered phenol compound.

Examples of the compound containing sulfur include a thioether compound, dithioacid salt compound, mercaptobenzimidazole compound, thiocarbanilide compound and thiodipropionate.

Examples of the tin compound include a tin malate and dibutyltin monoxide.

Examples of the defoaming agent include, but are not particularly limited to, a silicone oil, modified silicone oil, nonionic surfactant and mineral oil.

Examples of the silicone oil include a high-molecular-weight polydimethylsiloxane.

Examples of the modified silicone oil include an amino group-introduced silicone oil.

Examples of the nonionic surfactant include a polyoxyethylene alkyl ether.

Among the examples, the coating composition of the present embodiment preferably contains at least an antioxidant, an ultraviolet absorber, a light stabilizer, and a heat stabilizer as the other additives ((1-D) components).

Further, the coating composition of the present embodiment may contain water derived from the solvent or the raw materials. The water content of the coating composition of the present embodiment is preferably 10% by mass or less.

<<Method for producing coating composition of Embodiment 1>>

The method for producing the coating composition of the present embodiment is not particularly limited as long as the method mixes the (1-A1) component, (1-B) component, (1-C) component, and optionally the (1-A2) component and (1-D) component. Specific examples of the method for producing the coating composition of the present embodiment include a method in which a stirrer is used to stir at a rotation speed of 50 rpm or more and 1000 rpm or less for 5 minutes or more and 60 minutes or less, then defoaming is performed using a vacuum defoamer.

<<Coating composition of embodiment 2»

The coating composition of the present embodiment contains the (2-A1) component, (2-A 2) component, (2-B) component and (2-C) component.

The (2-A1) component is a polyol component (hereinafter, sometimes referred to as "(2-A) component"), and is a polycarbonate diol composition.

The (2-A2) component is a polyol component ((2-A) component) and is a polyol component other than the polycarbonate diol composition ((2-A1) component).

The (2-B) component is an isocyanate compound as a curing agent.

The (2-C) component is an organic solvent.

The coating composition of the present embodiment preferably contains the (2-A1) component at an amount of 3% by mass or more and 99% by mass or less, and the (2-A2) component at an amount of 1% by mass or more and 97% by mass or less, with respect to the total mass of the (2-A1) component and the (2-A2) component.

Further, the coating composition of the present embodiment more preferably contains the (2-A1) component in an amount of 5% by mass or more and 50% by mass or less, and the (2-A2) component in an amount of 50% by mass or more and 95% by mass or less, with respect to the total mass of the (2-A1) component and the (2-A2) component.

Further, the coating composition of the present embodiment even more preferably contains the (2-A1) component in an amount of 5% by mass or more and 30% by mass or less, and the (2-A2) component in an amount of 70% by mass or more and 95% by mass or less, with respect to the total mass of the (2-A1) component and the (2-A2) component.

When the coating composition of the present embodiment contains the (2-A1) component, (2-A2) component, (2-B) component and the (2-C) component having the following configurations, a coating film excellent in scratch recovery property and heat resistance can be formed. Each of these components will be described in detail below.

<(2-A1) component: polycarbonate diol composition>

The polycarbonate diol composition contained in the coating composition of the present embodiment contains a carbonate diol or polycarbonate diol. This carbonate or polycarbonate diol has, in its molecular chain, a structure represented by the following general formula (I) (hereinafter, sometimes referred to as "structure (I)") and a carbonate or polycarbonate structure represented by the following general formula (II) (hereinafter, sometimes referred to as "polycarbonate structure (II)").

[Chemical formula 9]

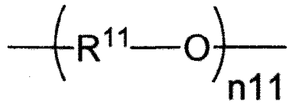

・・・(I)

wherein in the general formula (I), $R^{11}$ is a divalent linear, branched or cyclic aliphatic hydrocarbon group having 2 to 20 carbon atoms, or an aromatic hydrocarbon group. A plurality of $R^{11}$ may be the same as or different from each other, and n11 is a number of 7 to 70,

[Chemical formula 10]

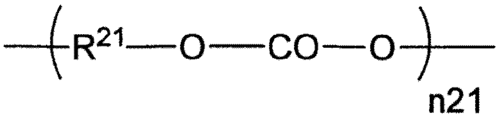

・・・(I I)

wherein in the general formula (II), $R^{21}$ is a divalent linear, branched or cyclic aliphatic hydrocarbon group having 2 to 15 carbon atoms, or an aromatic hydrocarbon group. A plurality of $R^{21}$ may be the same as or different from each other, and n21 is a number of 1 to 50.

Further, with respect to the total mass of the structure represented by the general formula (I) and the carbonate or polycarbonate structure, the structure represented by the general formula (I) is preferably contained in an amount of 5% by mass or more and 35% by mass or less, and the carbonate or polycarbonate structure is preferably contained in an amount of 65% by mass or more and 95% by mass or less.

The content of the structure represented by the general formula (I) and the content of the carbonate or polycarbonate structure in the polycarbonate diol composition can be measured, for example, by the method described in the following (1) to (4). (1) The polycarbonate diol composition is alkali-hydrolyzed in an ethanolic potassium hydroxide solution to regenerate the diol component. (2) Phenolphthalein is used as an indicator, and hydrochloric acid is added to neutralize. (3) The precipitated salt is separated by filtration, and the filtrate is measured by GPC. (4) The concentration of the diol having hydroxyl groups at both terminals of the structure represented by the general formula (I) in the filtrate is determined from a calibration curve separately prepared. From the concentration, the mass of the diol having hydroxyl groups at both terminals of the structure represented by the general formula (I) is calculated, and the value obtained by dividing it by the mass of the polycarbonate diol composition used for the alkali-hydrolysis is the content of the diol having hydroxyl groups at both terminals of the structure represented by the general formula (I).

The terminal structure of the structure represented by the general formula (I) in the polycarbonate diol composition ((2-A1) component) is a terminal structure in which one end is bonded to a carbonate group (-O-CO-O-) and the other end is bonded to a hydroxyl group (-OH), a terminal structure in which both terminals are bonded to a carbonate group (-O-COO-), or a terminal structure in which both terminals are bonded to a hydroxyl group (-OH).

In addition, both terminals of the molecule having the structure represented by the general formula (I) contained in the polycarbonate diol composition ((2-A1) component) are hydroxyl groups.

The molecule having a carbonate or polycarbonate structure contained in the polycarbonate diol composition ((2-A1) component) has hydroxyl groups at both terminals. That is, the molecule having a carbonate or polycarbonate structure contained in the polycarbonate diol composition (component (2-A1)) is a carbonate diol or polycarbonate diol. Due to the impurities in the various raw materials used for production of the polycarbonate diol composition, or the terminal structure produced as a by-product during the production of the polycarbonate diol composition, or for controlling the urethane formation reaction rate or state in the intended use of the polycarbonate diol composition, in some cases, a part of the terminal hydroxyl groups may be converted into an alkyl group or an aryl group that does not react with the isocyanate group. In the present embodiment, in consideration of such a case, it is not necessary that absolutely 100 mol% of both terminal groups of the polycarbonate diol are hydroxyl groups. From such a viewpoint, the ratio of the hydroxyl group to the total molar amount of the terminal groups is preferably 90 mol% or more, and more preferably 95 mol% or more.

Both terminal structures of the carbonate or polycarbonate diol contained in the polycarbonate diol composition can be confirmed, for example, in accordance with the method for measuring the terminal hydroxyl group concentration described in Japanese Patent No. 3874664 (Reference Document 1).

In addition, as a solvent for recovering a fraction, tetrahydrofuran, acetone or methanol can be used other than ethanol.

The number-average molecular weight of the polycarbonate diol composition ((2-A1) component) is preferably 300 or more and 10,000 or less, more preferably 400 or more and 10,000 or less, even more preferably 500 or more and 3,000 or less.

When the number-average molecular weight is equal to or more than the above lower limit, the flexibility and low-temperature properties of the thermoplastic urethane obtained from the polycarbonate diol composition tend to be improved. On the other hand, when the number-average molecular weight is equal to or less than the above upper limit, the moldability of the thermoplastic urethane obtained from the polycarbonate diol composition tends to be improved.

The number-average molecular weight can be calculated from the hydroxyl value of the polycarbonate diol using the method described in Examples later.

[Structure (I)]

In the polycarbonate diol composition ((2-A1) component), the content of the structure (I) is preferably 5% by mass or more and 35% by mass or less, more preferably 5% by mass or more and 20% by mass or less, and even more preferably 5% by mass or more and 15% by mass or less, with respect to the total mass of the structure (I) and the carbonate or polycarbonate structure.

When the content of the structure (I) is equal to or more than the above lower limit, a coating having improved scratch recovery property can be obtained. Further, when the content of the structure (I) is equal to or less than the upper limit, a coating film having improved heat resistance can be obtained.

In the polycarbonate diol composition ((2-A1) component), the terminal structure of the structure (I) is a terminal structure in which one terminal is bonded to a carbonate group and the other terminal is bonded to a hydroxyl group, a terminal structure in which both terminals are bonded to a carbonate group, or a terminal structure in which both terminals are bonded to a hydroxyl group.

In addition, in the polycarbonate diol composition ((2-A1) component), the terminal structure of the structure (I) may be a mixture of a terminal structure in which one terminal is bonded to a carbonate group and the other terminal is bonded to a hydroxyl group, and a terminal structure in which both terminals are bonded to a carbonate group.

Next, the details of the structure (I) will be described below.

($R^{11}$)

In the general formula (I), $R^{11}$ is a divalent linear, branched or cyclic aliphatic hydrocarbon group having 2 to 20 carbon atoms, or an aromatic hydrocarbon group. A plurality of $R^{11}$ may be the same as or different from each other. The plurality of $R^{11}$ is preferably the same as each other from the viewpoint of easy synthesis.

The divalent linear aliphatic hydrocarbon group for $R^{11}$ has 2 to 20 carbon atoms, preferably 2 to 12 carbon atoms, and more preferably 2 to 6 carbon atoms.

Specific examples of the divalent linear aliphatic hydrocarbon group for $R^{11}$ include an ethylene group, trimethylene group, tetramethylene group, pentamethylene group, hexamethylene group, heptylene group and octylene group.

The divalent branched aliphatic hydrocarbon group for $R^{11}$ has 3 to 20 carbon atoms, preferably 3 to 12 carbon atoms, and more preferably 3 to 6 carbon atoms.

Specific examples of the divalent branched aliphatic hydrocarbon group for $R^{11}$ include an isopropylene group, isobutylene group, tert-butylene group, isopentylene group, 2,2-dimethyltrimethylene group, isohexylene group, isoheptylene group and isooctylene group.

The divalent cyclic aliphatic hydrocarbon group for $R^{11}$ has 6 to 20 carbon atoms, preferably 6 to 12 carbon atoms, and more preferably 6 to 8 carbon atoms.

Specific examples of the divalent cyclic aliphatic hydrocarbon group for $R^{11}$ include a cyclobutylene group, cyclopentylene group, cyclohexylene group and cycloheptylene group.

The divalent aromatic hydrocarbon group for $R^{11}$ has 6 to 15 carbon atoms, preferably 6 to 12 carbon atoms, and more preferably 6 to 10 carbon atoms.

Specific examples of the divalent aromatic hydrocarbon group for $R^{11}$ include a phenylene group and naphthylene group.

Among the examples, $R^{11}$ is preferably a divalent linear, branched or cyclic aliphatic hydrocarbon group having 2 to 20 carbon atoms (that is, an alkylene group), more preferably a divalent linear aliphatic hydrocarbon group having 2 to 6 carbon atoms or a divalent branched aliphatic hydrocarbon group having 3 to 6 carbon atoms, even more preferably a divalent linear aliphatic hydrocarbon group having 2 to 6 carbon atoms.

(n11)

In the general formula (I), n11 represents the repeating number of the structure ($-R^{11}-O-$). n11 is a number of

7 to 70, preferably a number of 7 to 60, and more preferably a number of 7 to 50.

When n11 is equal to or more than the above lower limit, the amount of diol having hydroxyl groups at both terminals of the structure represented by the general formula (I), as a raw material, can be reduced, and therefore the water resistance and heat resistance of the coating film obtained using the polycarbonate diol composition ((2-A1) component) tend to be further improved. When n11 is equal to or less than the upper limit, the crystallinity of the polycarbonate diol composition tends to be further suppressed.

The above-mentioned n11 can be determined by subjecting the polycarbonate diol composition to alkali-decomposition to take out the raw material diol component, and subjecting the component to GC-MS measurement, LC-MS measurement and gel permeation chromatography (GPC) measurement.

Among the examples, the structure (I) is preferably a polyoxyalkylene structure.

Specific examples of the preferable oxyalkylene group contained in the structure (I) include an oxyethylene group, oxy1-methylethylene group, oxytetramethylene group and oxy2,2-dimethyltrimethylene group. Among the examples, an oxyethylene group is more preferable.

Furthermore, a polyoxyethylene structure in which all of the oxyalkylene groups contained in the structure (I) are oxyethylene groups, is particularly preferable.

When the structure (I) contains an oxy 1-methylethylene group and an oxyethylene group, the oxy 1-methylethylene group is preferably contained in an amount of 10% by mass or more and 100% by mass or less, and the oxyethylene group is preferably contained in an amount of 0% by mass or more and 90% by mass or less, with respect to the total mass of the structure (I).

When the structure (I) contains an oxytetramethylene group and an oxy 2,2-dimethyltrimethylene group, the oxytetramethylene group is preferably contained in an amount of 10% by mass or more and 100% by mass or less, and the oxy 2,2-dimethyltrimethylene group is preferably contained in an amount of 0% by mass or more and 90% by mass or lees, with respect to the total mass of the structure (I).

[Polycarbonate structure (II)]

In the polycarbonate diol composition of the present embodiment, the content of the polycarbonate structure (II) is preferably 65% by mass or more and 95% by mass or less, more preferably 70% by mass or more and 95% by mass or less, even more preferably 80% by mass or more and 95% by mass or less, and particularly preferably 85% by mass or more and 95% by mass or less, with respect to the total mass of the structure (I) and the polycarbonate structure (II).

When the content of the polycarbonate structure (II) is equal to or more than the lower limit, a coating film having an excellent water resistance, heat resistance, chemical resistance and abrasion resistance can be obtained. Moreover, when the content of the polycarbonate structure (II) is equal to or less than the upper limit, the compatibility of the polycarbonate diol composition with polyether polyol can be further improved.

Next, details of the polycarbonate structure (II) will be described below.

(W 1)

In the general formula (II), $R^{21}$ is a divalent linear, branched or cyclic aliphatic hydrocarbon group having 2 to 15 carbon atoms, or an aromatic hydrocarbon group. A plurality of $R^{21}$ may be the same as or different from each other. The plurality of $R^{21}$ are preferably the same as each other from the viewpoint of easy synthesis.

The divalent linear aliphatic hydrocarbon group for $R^{21}$ has 2 to 15 carbon atoms, preferably 3 to 12 carbon atoms, and more preferably 3 to 10 carbon atoms.

Specific examples of the divalent linear aliphatic hydrocarbon group having 2 to 15 carbon atoms for $R^{21}$ are the same as those exemplified for $R^{11}$ above. Among the examples, a butylene group, pentylene group or hexylene group is preferred from the viewpoint of versatility.

The divalent branched aliphatic hydrocarbon group for $R^{21}$ has 3 to 15 carbon atoms, preferably 3 to 12 carbon atoms, and more preferably 3 to 10 carbon atoms.

Specific examples of the divalent branched aliphatic hydrocarbon group having 2 to 15 carbon atoms for $R^{21}$ are the same as those exemplified for $R^{11}$ above. Among the examples, an isopentylene group or isohexylene group is preferable from the viewpoint of versatility.

The divalent cyclic aliphatic hydrocarbon group for $R^{21}$ has 3 to 15 carbon atoms, preferably 6 to 15 carbon atoms, and more preferably 6 to 10 carbon atoms.

Specific examples of the divalent cyclic aliphatic hydrocarbon group for $R^{21}$ are the same as those exemplified for $R^{11}$ above. Among the examples, a cyclohexylene group is preferable from the viewpoint of versatility.

The divalent aromatic hydrocarbon group for $R^{21}$ has 6 to 15 carbon atoms, preferably 6 to 12 carbon atoms, and more preferably 6 to 10 carbon atoms.

Specific examples of the divalent aromatic hydrocarbon group for $R^{21}$ are the same as those exemplified for $R^{11}$ above.

Among the examples, $R^{21}$ is preferably a divalent linear aliphatic hydrocarbon group having 3 to 10 carbon atoms or a divalent branched aliphatic hydrocarbon group having 3 to 10 carbon atoms, and more preferably a divalent linear aliphatic hydrocarbon group having 3 to 10 carbon atoms.

(n21)

In the general formula (II), n21 represents a repeating number of the carbonate structure ($-R^{21}$-O-CO-O-). n21 is a number of 1 to 50, preferably a number of 2 to 50, more preferably a number of 3 to 30, and even more preferably a number of 4 to 20.

n21 can be determined by subjecting the polycarbonate diol composition to alkali-decomposition to take out the raw material diol component, and subjecting the component to GC-MS measurement, LC-MS measurement, and GPC measurement.

<Method for producing polycarbonate diol composition (component (2-A1))>

The polycarbonate diol composition ((2-A1) component) can be obtained by performing a transesterification reaction using an ether diol represented by the following general formula (I-1) (hereinafter, sometimes referred to as "ether diol (I-1)") and a carbonate diol or polycarbonate diol represented by the general formula (II-1) (hereinafter, sometimes referred to as "polycarbonate diol (II-1)").

[Chemical formula 11]

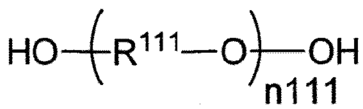

・・・(I−1)

wherein in the general formula (I-1), $R^{111}$ is the same as the above-mentioned $R^{11}$. n111 is the same as the above-mentioned n11;

[Chemical formula 12]

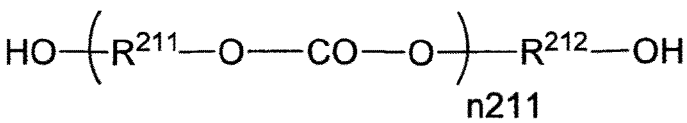

・・・(II−1)

wherein in the general formula (II-1), $R^{211}$ and $R^{212}$ are each the same as the above-mentioned $R^{21}$. n211 is the same as the above-mentioned n21.

[Ether diol (I-1)]

The ether diol (I-1) used for producing the polycarbonate diol composition ((2-A1) component) may be any one having the structure represented by the general formula (I-1). Among them, the ether diol (I-1) is preferably a polyoxyalkylene diol. As the ether diol (I-1), various products having different molecular weights are commercially available, and such commercially available products can also be used. Examples of the commercially available products of the ether diols (I-1) include a polyoxyalkylene diol, such as the "polyethylene glycol" series and the "polytetramethylene oxide" series manufactured by Wako Pure Chemical Industries, Ltd. and the "PTXG" series manufactured by Asahi Kasei Corporation.

The number-average molecular weight of the ether diol (I-1) is not particularly limited, and is preferably 400 or more and 3,000 or less, more preferably 600 or more and 2,000 or less. When the number-average molecular weight of the ether diol (I-1) used for the production is equal to or more than the lower limit, the used amount of the ether diol (I-1) as raw material can be further reduced. Furthermore, the water resistance and heat resistance of the coating film obtained by using the polycarbonate diol composition tend to be further improved. When the number-average molecular

weight of the ether diol (I-1) used for the production is equal to or less than the upper limit, the crystallinity of the polycarbonate diol composition tends to be further suppressed.

[Polycarbonate diol (II-1)]

The polycarbonate diol (II-1) used for producing the polycarbonate diol composition ((2-A1) component) may be any one having the structure represented by the general formula (II-1). The method for producing the polycarbonate diol (II-1) is not particularly limited, and known methods can be employed. For example, the polycarbonate diol (II-1) can be obtained by reacting a carbonate compound with a diol compound in the presence of a transesterification reaction catalyst.

(Carbonate compound)

Examples of the carbonate compound used for producing the polycarbonate diol (II-1) include, but are not limited to, an alkylene carbonate, dialkyl carbonate and diaryl carbonate.
Examples of the alkylene carbonate include an ethylene carbonate, trimethylene carbonate, 1,2-propylene carbonate, 1,2-butylene carbonate, 1,3-butylene carbonate and 1,2-pentylene carbonate.
Examples of the dialkyl carbonate include a dimethyl carbonate, diethyl carbonate, dipropyl carbonate and dibutyl carbonate.
Examples of the diaryl carbonate include a diphenyl carbonate.
Among the examples, the carbonate compound used for producing the polycarbonate diol (II-1) is preferably an alkylene carbonate, and more preferably an ethylene carbonate.

(Diol compound)

Examples of the diol compound used for producing the polycarbonate diol (II-1) include, but are not limited to, a linear diol, a branched diol, a cyclic diol, and a diol having an aromatic ring.
Examples of the linear diol include an ethylene glycol, 1,3-propanediol, 1,4-butanediol, 1,5-pentanediol, 1,6-hexanediol, 1,7-heptanediol, 1,8-octanediol, 1,9-nanodiol, 1,10-decanediol, 1,11-undecanediol and 1,12-dodecanediol.
Examples of the branched diol include a 2-methyl-1,8-octanediol, neopentyl glycol, 2-ethyl-1,6-hexanediol, 2-methyl-1,3-propanediol, 3-methyl-1,5-pentanediol, 2,4-dimethyl-1,5-pentanediol and 2,4-diethyl-1,5-pentanediol.
Examples of the cyclic diol include a 1,3-cyclohexanediol, 1,4-cyclohexanediol, 1,4-cyclohexanedimethanol and 2-bis (4-hydroxycyclohexyl)-propane.
Examples of the diol having an aromatic ring include a p-xylene diol, p-tetrachloroxylene diol, 1,4-bis (hydroxyethoxy) benzene and 2,2-bis [(4-hydroxyethoxy) phenyl] propane.
Among the examples, a linear diol is preferable, and a 1,5-pentanediol or 1,6-hexanediol is more preferable.

[Conditions for producing polycarbonate diol composition ((2-A1) component) and polycarbonate diol (II-1)]

In the production of the polycarbonate diol (II-1) as raw material, a transesterification reaction catalyst can be used. The catalyst can be selected from the ordinary transesterification reaction catalysts.
Examples of the transesterification reaction catalyst include alkali metals and alkaline earth metals, and alcoholates thereof, hydrides thereof, oxytoxides thereof, amides thereof, hydroxides thereof and salts thereof.
Examples of the salt of the alkali metal and alkaline earth metal include carbonates, nitrogen-containing borates, and basic salts with organic acids.
Examples of the alkali metal include a lithium, sodium and potassium.
Examples of the alkaline earth metal include a magnesium, calcium, strontium and barium.
Examples of the transesterification reaction catalyst using a metal other than the alkali metals and the alkaline earth metals include metals other than the alkali metals and the alkaline earth metals, and salts thereof, alcoholates thereof and organic compounds containing the metals.
Specific examples of the metal other than the alkali metals and the alkaline earth metals include an aluminum, titanium, vanadium, chromium, manganese, iron, cobalt, nickel, copper, zinc, gallium, germanium, zirconium, niobium, molybdenum, ruthenium, rhodium, palladium, silver, indium, tin, antimony, tungsten, rhenium, osmium, iridium, platinum, gold, thallium, lead, bismuth and ytterbium.
These transesterification reaction catalysts can be used alone or in combination of two or more.
Among the examples, from the viewpoint of more favorably performing the transesterification reaction to obtain the carbonate or polycarbonate diol and having less influence on the urethane reaction when using the obtained carbonate or polycarbonate diol, the transesterification reaction catalyst is preferably one or more metals selected from the group

consisting of a sodium, potassium, magnesium, potassium, titanium, zirconium, tin, lead and ytterbium, salts thereof, alkoxides thereof, and organic compounds containing these metals.

Furthermore, the transesterification reaction catalyst is more preferably one or more metals selected from the group consisting of a magnesium, titanium, ytterbium, tin and zirconium.

Specific examples of the preferable transesterification reaction catalyst include organic compounds of lead and organic compounds of titanium.

Examples of the organic compound of lead include a lead acetate trihydrate, tetraphenyl lead and lead stearate.

Examples of the organic compound of titanium include a titanium tetra-n-butoxide, titanium tetra-n-propoxide and titanium tetraisopropoxide.

The used amount of the transesterification reaction catalyst is preferably 0.00001% by mass or more and 0.1% by mass or less, more preferably 0.0001% by mass or more and 0.05% by mass or less, with respect to the total mass of the raw material.

The transesterification reaction catalyst used in the transesterification reaction is not consumed by the transesterification reaction when heat treatment is performed subsequently to the production of the carbonate or polycarbonate diol. Therefore, its amount can be calculated on the basis of the used amount of the transesterification reaction catalyst. In the case of using, for example, a commercially available polycarbonate diol, the amount of metal of the transesterification reaction catalyst contained in the polycarbonate diol can be determined by ICP (Inductively Coupled Plasma) measurement.

The polycarbonate diol (II-1) used for the production of the polycarbonate diol composition ((2-A1) component) deactivates the transesterification reaction catalyst used in the production thereof, and therefore, a catalyst poison such as a phosphate ester compound may be added.

When the polycarbonate diol (II-1) as raw material contains a catalyst poison of the transesterification reaction catalyst used in the production thereof, usually, the transesterification reaction between the ether diol (I-1) and the polycarbonate diol (II-1) tends to be difficult to proceed. Therefore, it is allowed that in the production of the polycarbonate diol composition ((2-A1) component), a necessary amount of the above-mentioned transesterification reaction catalyst is newly added.

On the other hand, when the polycarbonate diol (II-1) as raw material does not contain a catalyst poison of the transesterification reaction catalyst, usually the transesterification reaction in the present embodiment tends to be easy to proceed. However, a necessary amount of the transesterification reaction catalyst can also be newly added in the production of the polycarbonate diol composition ((2-A1) component), when it is desired to lower the reaction temperature or to shorten the reaction time. In that case, the same transesterification reaction catalyst used in the production of the polycarbonate diol (II-1) as raw material can be adopted.

Further, the polycarbonate diol (II-1) used for producing the polycarbonate diol composition ((2-A1) component) may be a homopolycarbonate diol obtained from one kind of diol compound, and may also be a copolymeric polycarbonate diol obtained from two or more kinds of diol compounds.

The polycarbonate diol composition ((2-A1) component) can be obtained by using any of the polycarbonate diols (II-1) by the transesterification reaction with the ether diol (I-1).

However, for example, the homopolycarbonate diol obtained by using 1,6-hexanediol which is widely used in the market is usually a solid at room temperature. Therefore, the polycarbonate diol composition ((2-A1) component) obtained by transesterification reaction of the homopolycarbonate diol with the ether diol (I-1) also tends to be solid at room temperature.

On the other hand, for example, the copolymeric polycarbonate diol obtained by using two kinds of 1,5-pentanediol and 1,6-hexanediol is liquid at room temperature. Therefore, the polycarbonate diol composition ((2-A1) component) obtained by the transesterification reaction of the copolymeric polycarbonate diol with the ether diol (I-1) also tends to be liquid at room temperature.

Therefore, from the viewpoint of handleability, the polycarbonate diol as raw material is often preferably a liquid at room temperature.

The number-average molecular weight of the polycarbonate diol (II-1) used for producing the polycarbonate diol composition ((2-A1) component) is not particularly limited, and is preferably 500 or more and 5,000 or less, more preferably 1,000 or more and 3,000 or less..

When the number-average molecular weight of the polycarbonate diol (II-1) is equal to or more than the lower limit, the expected performance of the polycarbonate diol tends to be further improved. On the other hand, when the number-average molecular weight of the polycarbonate diol (II-1) is equal to or less than the upper limit, the increase in viscosity of the polycarbonate diol composition ((2-A1) component) can be suppressed more effectively, and the handleability tends to be further improved.

The polycarbonate diol composition ((2-A1) component) can also be produced by using the ether diol (I-1) as a diol and performing a polycondensation reaction between the ether diol (I-1) and a carbonate compound. However, in order for such a polycondensation reaction of the polycarbonate diol to proceed, it is generally necessary to heat at

a high temperature for a long time. For this reason, there is a high possibility that an unwanted side reaction will occur, or a workload in switching a product type may increase.

From this viewpoint, as the method for producing the polycarbonate diol composition ((2-A1) component), it is preferable to adopt the transesterification reaction using the ether diol (I-1) and the polycarbonate diol (II-1), but not the polycondensation reaction using the ether diol (I-1) and the carbonate compound.

Specifically, the transesterification reaction can be carried out by mixing the ether diol (I-1) and the polycarbonate diol (II-1) and stirring the mixture while heating.

The temperature of the transesterification reaction is not particularly limited, and is preferably 120 °C to 200 °C, and more preferably 140 °C to 180 °C.

When the reaction temperature is equal to or higher than the lower limit, the transesterification reaction can be carried out in a shorter time, and the economic efficiency is excellent. When the reaction temperature is equal to or lower than the upper limit, coloring of the obtained polycarbonate diol composition can be prevented more effectively.

The reaction pressure of the transesterification reaction is not particularly limited, and is preferably from atmospheric pressure to 1 MPa. When the reaction pressure is within the above range, the reaction can be carried out more easily. In addition, when a auxiliary raw material is used, the transesterification reaction can be more efficiently promoted by applying a certain pressure in consideration of the vapor pressure.

As the method of controlling the number-average molecular weight of the polycarbonate diol composition (component (2-A1)), it is preferable to carry out the transesterification reaction in the presence of one or two or more kinds of the ether diol (I-1), from the viewpoint of selecting a polycarbonate diol (II-1) having an appropriate molecular weight as raw material and controlling the molecular weight.

The progress and completion of the transesterification reaction can be confirmed by GPC measurement. With the progress of the transesterification reaction, the peak derived from the ether diol (I-1) as raw material decreases with time, and by the disappearance of the peak, it can be confirmed that a structure derived from the ether diol (I-1) is bonded to the terminal and inside of the polymer chain of the polycarbonate diol (II-1) as raw material.

In the method for producing the polycarbonate diol composition ((2-A1) component), a step of performing a dehydration treatment of the raw material to be used may be performed as a pretreatment before the above-described transesterification reaction.

In the method for producing the polycarbonate diol composition ((2-A1) component), a step of adding the above-mentioned catalyst poison against the transesterification reaction catalyst as a post-treatment may be performed after the above-mentioned transesterification reaction.

<(2-A2) component: other polyol components>

The coating composition of the present embodiment may further contain, as the polyol component ((2-A) component) as a main component, other polyol components ((2-A2) component) in addition to the above-mentioned polycarbonate diol composition ((2-A1) component).

The coating composition of the present embodiment preferably contains the (2-A2) component in an amount of 1% by mass or more and 97% by mass or less, more preferably in an amount of 50% by mass or more and 95% by mass or less, and even more preferably 70% by mass or more and 95% by mass or less, with respect to the total mass of the (2-A1) component and the (2-A2) component.

Examples of the other polyol components ((2-A2) component) include, but are not limited to, polyester polyols, polyether polyols, acrylic polyols, polyolefin polyols and fluorine polyols.

Examples of the other polyol components ((2-A2) component) include the ether diol (I-1) as raw material of the polycarbonate diol composition ((2-A1) component), the polycarbonate diol (II-1), and diol compounds as raw material of the polycarbonate diol (II-1).

[Polyester polyol]

The polyester polyol can be obtained, for example, by subjecting a single dibasic acid or a mixture of two or more dibasic acids to a condensation reaction with a single alcohol or a mixture of two or more polyhydric alcohols.

Examples of the dibasic acid include carboxylic acids such as a succinic acid, adipic acid, dimer acid, maleic anhydride, phthalic anhydride, isophthalic acid, terephthalic acid and 1,4-cyclohexanedicarboxylic acid.

Examples of the polyhydric alcohol include an ethylene glycol, propylene glycol, diethylene glycol, 1,4-butanediol, neopentyl glycol, 1,6-hexanediol, trimethylpentanediol, cyclohexanediol, trimethylolpropane, glycerin, pentaerythritol, 2-methylolpropanediol and ethoxylated trimethylolpropane.

Specific examples of the method for producing the polyester polyol include a method in which a condensation reaction is carried out by mixing the above components and heating at about 160 to 220 °C.

Alternatively, for example, polycaprolactones obtained by ring-opening polymerization of a lactone such as ε-caprolactone using a polyhydric alcohol can also be used as the polyester polyol.

The polyester polyol obtained by the above-mentioned production method can be modified using an aromatic diisocyanate, an aliphatic diisocyanate, an alicyclic diisocyanate or a compound obtained therefrom. Among them, the polyester polyol is preferably modified with an aliphatic diisocyanate, alicyclic diisocyanate, and a compound obtained therefrom, from the viewpoints of weather resistance and yellowing resistance of the obtained coating film.

When the coating composition of the present embodiment contains a solvent having a high water content, it is possible to make the polyester polyol a water-soluble or water-dispersible resin by allowing a part of the carboxylic acid derived from the dibasic acid to be remained in the polyester polyol and neutralizing it with a base such as amine or ammonia.

[Polyether polyol]

The polyether polyol can be obtained, for example, by any of the following methods (1) to (3).

(1) A method in which a polyether polyol is obtained by random or block addition of a single or mixture of alkylene oxides to a single or mixture of polyvalent hydroxy compounds using a catalyst.

Examples of the catalyst include hydroxides (such as lithium, sodium, potassium), strong basic catalysts (such as alcoholates, alkylamines) and complex metal cyanide compound complexes (such as metalloporphyrins or zinc hexacyanocobaltate complexes).

Examples of the alkylene oxide include an ethylene oxide, propylene oxide, butylene oxide, cyclohexene oxide and styrene oxide.

(2) A method of reacting an alkylene oxide with a polyamine compound to obtain polyether polyols.

Examples of the polyamine compound include ethylene diamines.

Examples of the alkylene oxide include the same as those exemplified in (1).

(3) A method in which acrylamide is polymerized using the polyether polyols obtained in (1) or (2) as a medium to obtain so-called polymer polyols.

Examples of the polyvalent hydroxy compound include the following (i) to (vi).

(i) Diglycerin, ditrimethylolpropane, pentaerythritol and dipentaerythritol.
(ii) Sugar alcohol compounds such as an erythritol, D-threitol, L-arabinitol, ribitol, xylitol, sorbitol, mannitol, galactitol and rhamnitol.
(iii) Monosaccharides such as an arabinose, ribose, xylose, glucose, mannose, galactose, fructose, sorbose, rhamnose, fucose or ribodeose.
(iv) Disaccharides such as a trehalose, sucrose, maltose, cellobiose, gentiobiose, lactose or melibiose.
(v) Trisaccharides such as a raffinose, gentianose or meletitose.
(vi) Tetrasaccharides such as a stachyose.

[Acrylic polyol]

As the acrylic polyol, it is preferable to use one that is uniformly dissolved (compatible) in the organic solvent used for the coating composition. When the acrylic polyol is uniformly dissolved in the organic solvent, a homogeneous coating composition can be obtained, and the appearance, smoothness, transparency or adhesion of the coating film are improved.

The hydroxyl value of the acrylic polyol is preferably 10 mgKOH/g or more and 500 mgKOH/g or less, more preferably 20 mgKOH/g or more and 400 mgKOH/g or less, even more preferably 30 mgKOH/g or more and 300 mgKOH/g or less, from the viewpoint of the mechanical properties of the coating film. The hydroxyl value of the polyol can be measured according to the method for measuring the hydroxyl value of a polycarbonate diol described in the Examples later.

The acrylic polyol is not particularly limited as long as it is an acrylic polyol that is uniformly dissolved in an organic solvent. For example, an acrylic polyol obtained by a polymerization method described later can be used. In the case where a commercially available acrylic polyol is used, it is preferable to use an organic solvent-based acrylic polyol. Water-dispersed acrylic polyols generally have poor compatibility with organic solvents and cause the water to be mixed into the paint, and therefore it is preferable to refrain from using it.

When the amount of water in the coating composition is large, the appearance, smoothness, transparency and adhesion of the coating film are affected. Therefore, the amount of water in the coating composition is preferably 10% or less, more preferably 5% or less, even more preferably 1% or less. The amount of water in the coating composition can be measured by Karl Fischer titration.

As the polymerization method of the acrylic polyol, for example, a method of polymerizing only a polymerizable monomer having one or more active hydrogens in one molecule, or a method of copolymerizing a polymerizable monomer having one or more active hydrogens in one molecule and, if necessary, another monomer copolymerizable with the polymerizable monomer can be used.

Examples of the polymerizable monomer having one or more active hydrogens in one molecule include those shown in the following (i) to (vi). These may be used alone or in combination of two or more.

(i) Acrylic esters having an active hydrogen, such as 2-hydroxyethyl acrylate, 2-hydroxypropyl acrylate or 2-hydroxybutyl acrylate.

(ii) Methacrylic acid esters having an active hydrogen, such as 2-hydroxyethyl methacrylate, 2-hydroxypropyl methacrylate, 2-hydroxybutyl methacrylate, 3-hydroxypropyl methacrylate or 4-hydroxybutyl methacrylate.

(iii) (Meth) acrylic acid esters having a polyvalent active hydrogen, such as a (meth) acrylic acid monoester of triol such as a glycerin or trimethylolpropane.

(iv) Monoethers of polyether polyols (for example, polyethylene glycol, polypropylene glycol, polybutylene glycol) with the above-mentioned (meth) acrylic esters having an active hydrogen.

(v) Adducts of glycidyl (meth) acrylate and monobasic acids (for example, acetic acid, propionic acid, p-tert-butylbenzoic acid).

(vi) Adducts obtained by ring-opening polymerization of lactones (for example, ε-caprolactam, γ-valerolactone) with the above-mentioned active hydrogen of the (meth) acrylates having an active hydrogen.

Examples of the other monomers copolymerizable with the polymerizable monomer include those shown in the following (i) to (iv). These may be used alone or in combination of two or more.

(i) (Meth) acrylic acid esters such as a methyl acrylate, ethyl acrylate, isopropyl acrylate, n-butyl acrylate, 2-ethylhexyl acrylate, methyl methacrylate, ethyl methacrylate, isopropyl methacrylate, n-butyl methacrylate, isobutyl methacrylate, methacrylic acid-n-hexyl, cyclohexyl methacrylate, lauryl methacrylate or glycidyl methacrylate.

(ii) Unsaturated carboxylic acids (acrylic acid, methacrylic acid, maleic acid, itaconic acid) or unsaturated amides (acrylamide, N-methylol acrylamide, diacetone acrylamide).

(iii) Vinyl monomers having a hydrolyzable silyl group, such as a vinyltrimethoxysilane, vinylmethyldimethoxysilane or γ-(meth) acryloxypropyltrimethoxysilane.

(iv) Other polymerizable monomers such as a styrene, vinyl toluene, vinyl acetate, acrylonitrile or dibutyl fumarate.

Specific examples of the method for producing the acrylic polyol include a method in which the above-described monomer is solution-polymerized in the presence of a radical polymerization initiator such as a known peroxide or an azo compound, and is diluted with an organic solvent as necessary to obtain the acrylic polyol.

The acrylic polyol may be a commercially available one, or may be synthesized using a known method.

Examples of the commercially available acrylic polyols include acrylic polyols manufactured by Allnex, such as Setalux1152, Setalux1184, Setalux1186, Setalux1903, Setalux1906, Setalux1907, Setalux1909 or Setalux1910.

[Polyolefin polyol]

Examples of the polyolefin polyol include a polybutadiene having two or more hydroxyl groups, a hydrogenated polybutadiene having two or more hydroxyl groups, a polyisoprene having two or more hydroxyl groups and a hydrogenated polyisoprene having two or more hydroxyl groups.

Moreover, the number of hydroxyl groups (hereinafter, sometimes referred to as "average number of hydroxyl groups") possessed by a statistical molecule of the polyolefin polyol is preferably 2 or more.

[Fluorine polyol]

In the present specification, "fluorine polyol" means a polyol containing fluorine in the molecule. Specific examples of the fluorine polyol include copolymers such as fluoroolefins, cyclovinyl ethers, hydroxyalkyl vinyl ethers, monocarboxylic acid vinyl esters disclosed in JP-A-S57-34107 (Reference 1) and JP-A-S61-275311 (Reference 2).

<(2-B) component: isocyanate compound>

The isocyanate compound contained in the coating composition of the present embodiment is not particularly limited as long as it functions as a curing agent for the coating composition, and isocyanate compounds having two or more isocyanate groups at the terminal may be used.

Examples of such isocyanate compounds include chain aliphatic diisocyanates, cycloaliphatic diisocyanates, aromatic diisocyanates, isocyanate compounds having three or more isocyanate groups, and isocyanurate-modified and biuret-modified products of these isocyanate compounds.

Examples of the chain aliphatic diisocyanate include a hexamethylene diisocyanate and trimethylhexamethylene diisocyanate.

Examples of the cycloaliphatic diisocyanate include an isophorone diisocyanate.

Examples of the aromatic diisocyanate include a tolylene diisocyanate, 4,4'-diphenylmethane diisocyanate, xylylene diisocyanate and naphthylene diisocyanate.

Examples of the isocyanate compound having three or more isocyanate groups include a triphenylmethane-4,4'-4"-triisocyanate, 1,3,5-triisocyanatobenzene, 2,4,6-triisocyanatotoene and 4,4'-dimethyldiphenylmethane-2,2',5,5'-tetraisocyanate.

The isocyanate compound may be a commercially available one, or may be synthesized using a known method.

Examples of the commercially available isocyanate compound include the "DURANATE (trade name)" series manufactured by Asahi Kasei Corporation, such as 24A-100, 22A-75P, TPA-100, TKA-100, P301-75E, D101, D201, 21S-75E, MFA-75B, MHG-80B, TUL-100, TLA-100, TSA-100, TSS-100, TSE-100, E402-80B, E405-80B, AE700-100, A201H, 17B-60P, TPA-B80E, MF-B60B, MF-K60B, SBB-70P, SBN-70D, E402-B80B, WB40-100, WT30-100, WT31-100, WB40-80D, WT20-100, WL70-100, WE50-100 or WM44-L70G.

In the coating composition of the present embodiment, the content of the isocyanate compound ((2-B) component) may be appropriately adjusted according to the molar amount of the hydroxyl group of the polyol as the main component.

Specifically, the molar ratio (NCO) of the isocyanate group of the isocyanate compound ((2-B) component) to the hydroxyl group of the polyol may be, for example, 0.2 or more and 5.0 or less, may be 0.4 or more and 3.0, and may also be 0.5 or more and 2.0 or less.

When the NCO/OH is equal to or more than the lower limit, a tougher coating film tends to be obtained. On the other hand, when the NCO/OH is equal to or less than the upper limit, the smoothness of the coating film tends to be further improved.

<(2-C) component: organic solvent>

The organic solvent (component (2-C)) contained in the coating composition of the present embodiment may be any organic solvent as long as it functions as a solvent for the coating composition.

Specific examples of the organic solvent include amide solvents, sulfoxide solvents, ketone solvents, ether solvents, ester solvents, carbonate ester solvents and aromatic hydrocarbon solvents.

Examples of the amide solvent include a dimethylformamide, diethylformamide, dimethylacetamide and N-methylpyrrolidone.

Examples of the sulfoxide solvent include a dimethyl sulfoxide.

Examples of the ketone solvent include a methyl ethyl ketone, methyl isobutyl ketone, diisobutyl ketone and cyclohexanone.

Examples of the ether solvent include a tetrahydrofuran and dioxane.

Examples of the ester solvent include a methyl acetate, ethyl acetate, butyl acetate, isobutyl acetate and propylene glycol 1-monomethyl ether 2-acetate.

Examples of the carbonate ester solvent include dimethyl carbonate, diethyl carbonate and propylene carbonate.

Examples of the aromatic hydrocarbon solvent include a toluene and xylene.

These organic solvents may be used alone or as a mixed solvent of two or more.

Among the solvents, the organic solvent ((2-C) component) contained in the coating composition of the present embodiment is preferably one or more selected from the group consisting of a dimethylformamide, dimethylacetamide, N-methylpyrrolidone, methyl ethyl ketone, methyl isobutyl ketone, diisobutyl ketone, methyl acetate, ethyl acetate, butyl acetate, isobutyl acetate, propylene glycol 1-monomethyl ether 2-acetate, toluene and xylene.

The content of the organic solvent ((2-C) component) in the coating composition of the present embodiment may be, for example, 10% by mass or more and 90% by mass or less, or may be 15% by mass or more and 70% by mass or less, or may be 20% by mass or more and 50% by mass or less, with respect to the total mass of the coating composition.

<(2-D) component: other additives>

The coating composition of the present embodiment may contain other additives ((2-D) component) according to various uses, such as a curing accelerator (catalyst), urethane beads, a matting agent, a leveling agent, and a thixotropic agent, in addition to the (2-A1) component, (2-A2) component, (2-B) component and the (2-C) component.

By appropriately containing these other additives ((2-D) component), it is possible to obtain coating compositions having different properties such as soft feel paints or clear coating paints.

Examples of the curing accelerator (catalyst) include, but are not particularly limited to, monoamines, diamines, or triamines, cyclic amines, alcohol amines, ether amines, and metal catalysts, which are commonly used.

Examples of the monoamine include a triethylamine, N, N-dimethylcyclohexylamine.

Examples of the diamine include a tetramethylethylenediamine.

Examples of the alcohol amino include a dimethylethanolamine.

Examples of the metal catalyst include, but are not particularly limited to, a potassium acetate, potassium 2-ethylhexanoate, calcium acetate, lead octylate, dibutyltin dilaurate, tin octylate, bismuth neodecanoate, bismuth oxycarbonate, bismuth 2-ethylhexanoate, zinc octylate, zinc neodecanoate, phosphine and phosphorin.

Examples of the matting agent include, but are not particularly limited to, an organic fine powder and inorganic fine powder. These matting agents may be used alone or in combination of two or more.

Examples of the organic fine powder include a cross-linked acrylic resin polymerized using an unsaturated carboxylic acid alkyl ester monomer and a cross-linking agent, and a cross-linked resin polymerized using an unsaturated nitrile monomer, aromatic vinyl monomer and a cross-linking agent.

Examples of the unsaturated carboxylic acid alkyl ester monomer include a methyl methacrylate, methyl acrylate, ethyl acrylate and butyl acrylate.

Examples of the unsaturated nitrile monomer include an acrylonitrile, methacrylonitrile and ethacrylonitrile.

Examples of the aromatic vinyl monomer include a styrene and $\alpha$-methylstyrene.

These organic fine powders may be used alone or in combination of two or more.

Examples of the inorganic fine powder include a metal oxide fine powder, silicate compound fine powder, metal carbonate fine powder, nitride fine powder, gypsum fine powder, clay fine powder, talc fine powder and natural mica fine powder.

Examples of the metal oxide fine powder include a silicon oxide fine powder, titanium oxide fine powder, aluminum oxide fine powder and zirconium oxide fine powder.

Examples of the silicate compound fine powder include an aluminum silicate fine powder and magnesium silicate fine powder.

Examples of the metal carbonate fine powder include a calcium carbonate fine powder and barium carbonate fine powder.

Examples of the nitride fine powder include a titanium nitride fine powder and silicon nitride fine powder.

These inorganic fine powders may be used alone or in combination of two or more.

Among the examples, the inorganic fine powder is preferably a silicon oxide fine powder. Examples of the silicon oxide fine powder include a hydrated or anhydrous silica fine powder.

Specific examples of such a silica fine powder include "ACEMATT OK 412 (trade name)", "ACEMATT OK 607 (product name)", "ACEMATT OK 900 (product name)", "ACEMATTS 100 (product name)", "ACEMATT OK 520 (product name)", "ACEMATT 3600 (trade name)" and "ACEMATT 3300 (trade name)", which are manufactured by Evonik.

Examples of the leveling agent include, but are not particularly limited to, a silicone, aerosil, wax, stearate and polysiloxane such as BYK-331 (manufactured by BYK Chemical Co., Ltd.).

As the thixotropic agent, thixotropic agents conventionally used in thermosetting resin compositions for cream solder can be used. Specific examples of the thixotropic agent include a castor oil, hydrogenated castor oil and sorbitol thixotropic agents.

Further, the coating composition of the present embodiment may contain water derived from the solvent or the raw materials. The water content of the coating composition of the present embodiment is preferably 10% by mass or less.

<<Method for producing coating composition of embodiment 2»

The method for producing the coating composition of the present embodiment is not particularly limited as long as it is a method of mixing the (2-A1) component, (2-A2) component, (2-B) component, (2-C) component, and, if necessary, the (2-D) component so that the (2-A1) component is contained in an amount of 3% by mass or more and 99% by mass or less, and the (2-A2) component is contained in an amount of 1% by mass or more and 97% by mass or less, with respect to the total mass of the (2-A1) component and the (2-A2) component.

As a method for producing the coating composition of the present embodiment, specifically, for example, using a stirrer, after stirring at a rotation speed of 50 rpm or more and 1000 rpm or less for 5 minutes or more and 60 minutes or less, a vacuum defoamer is used to perform a defoaming operation.

<<Coating method>>

The method for coating the coating composition of the present invention is not particularly limited, and a method

in which all of the components are mixed just before coating and coated to a substrate by spraying, rolling or brushing can be used. A method in which the components except the (1-B) component as a curing agent are mixed in advance, the (1-B) component is added just before coating, then the mixture is mixed uniformly and coated, can also be used.

<<Intended use>>

The coating composition of the present invention can be suitably used in a wide range of fields, such as coating automobiles, buses, railway vehicles, construction machineries, agricultural machineries, floors, walls and roofs of buildings, metal products, mortar and concrete products, woodworking products, plastic products or ceramic building materials such as calcium silicate boards or gypsum boards.

[EXAMPLES]

Hereinafter, the present embodiment will be described more specifically with reference to specific examples and comparative examples. However, the present embodiment is not limited by these Examples and Comparative Examples. In the Examples, "parts" and "%" are based on mass basis unless otherwise specified.
Physical properties and evaluation of the Examples and Comparative Examples described later were measured and evaluated by the following methods.

[Physical properties 1] Hydroxyl value

The hydroxyl value was measured by the following method.
First, pyridine was added to 12.5 g of acetic anhydride using a volumetric flask to make 50 mL to prepare an acetylation reagent. Next, 2.5 to 5.0 g of the sample was precisely weighed in a 100 mL eggplant flask. Next, 5 mL of the acetylation reagent and 10 mL of toluene were added with a whole pipette, and then a cooling tube was attached, followed by stirring and heating at 100 °C for 1 hour. Next, 2.5 mL of distilled water was added with a whole pipette, and the resulting mixture was further heated and stirred for 10 minutes. After cooling for 2 to 3 minutes, 12.5 mL of ethanol was added. Next, 2 to 3 drops of phenolphthalein were added as an indicator, and titration was performed with 0.5 mol/L ethanolic potassium hydroxide. Next, 5 mL of the acetylation reagent, 10 mL of toluene, and 2.5 mL of distilled water were placed in a 100 mL eggplant flask, heated and stirred for 10 minutes, and then titrated similarly (blank test). Based on this result, the hydroxyl value was calculated by the following equation (i).

$$\text{Hydroxyl value (mg-KOH/g)} = \{(F-E) \times 28.05 \times f\}/G \qquad (i)$$

In the equation (i), E represents titration amount (mL) of the sample, F represents titration amount (mL) of the blank test, G represents sample weight (g), and f represents factor of the titrant.

[Physical property 2] Number-average molecular weight

The number-average molecular weight was calculated from the hydroxyl value obtained in [Physical Property 1] using the following equation (ii).

$$\text{Number-average molecular weight} = 2/(H \times 10^{-3}/56.11) \qquad (ii)$$

In the equation (ii), H represents hydroxyl value (mg-KOH/g).

[Physical property 3] Solubility parameter of organic solvent (SP value)

The solubility parameter (SP value) of the organic solvent was measured according to Reference 2 (Shinichi Ueda et al., "Discussion on solubility parameter of additive", Paint Research, No. 152, pp. 41-46, 2010)

[Physical property 4] Vapor pressure of organic solvent

The data of the International Chemical Safety Card (ICSC) was referred to for the vapor pressure of the organic solvent. The data of the environmental risk assessment of chemical substances (Ministry of the Environment) was referred to for the substances not listed in the International Chemical Safety Card (ICSC). Organic solvents for which

vapor pressure data were not described were measured according to JIS K 2258-2.

[Evaluation 1] Low-temperature transparency

1. Production of coating film

First, a necessary number of removable paper adhesive tapes were attached as spacers to both ends of a glass plate (JIS R3202, 2 mm × 75 mm × 100 mm). Next, each coating composition was dropped on the upper part of the plate and coated using a glass rod (diameter: 8 mm) so that the dry film thickness was 30 to 40 μm to obtain a coating film.

2. Evaluation of low-temperature transparency

The obtained coating film was dried at 5 °C for 1 week using a small-size environmental tester (ESPEC SU-241) installed at 23 °C in an atmosphere of 50% RH, and a haze meter (manufactured by Suga Test Instruments Co., Ltd., HMG-2DP). Next, the low-temperature transparency was evaluated using the haze value based on the following evaluation criteria.

(Evaluation criteria)

◎: Haze value was 0.3 or less
◦: Haze value was larger than 0.3 and 0.5 or less
×: Haze value was larger than 0.5, or unevaluable

[Evaluation 2] Scratch resistance

The coating film evaluated for the low-temperature transparency in [Evaluation 1] was scratched with a brass brush (standard type, 3 rows, manufactured by AS ONE Corporation) set on a RUBBING TESTER (manufactured by Taihei Rika Kogyo Co., Ltd.) for 20 times of reciprocation while applying a load of 745 g. The gloss (X1) immediately after being scratched was measured by using a variable angle gloss meter (UGV-6P, manufactured by Suga Test Instruments Co., Ltd.) with a light-receiving angle of 60 ° and an incident angle of 60 °.

The initial gloss of the same portion before the scratch resistance test was defined as X0, and the gloss retention rate was calculated by the following equation (iii).

$$\text{Gloss retention rate (\%)} = (X1/X0) \times 100 \qquad \text{(iii)}$$

Then, the scratch resistance was evaluated using the obtained gloss retention rate based on the following evaluation criteria. In addition, when the coating film was not able to be formed in the evaluation of transparency (room temperature), or when the haze value of the coating film was 1.0 or more, it was difficult to evaluate with reproducibility, and therefore the evaluation was not possible.

(Evaluation criteria)

◎: Gloss retention rate was 95% or more
◦: Gloss retention rate was 90% or more and less than 95%
×: Gloss retention rate was less than 90%, or unevaluable

[Evaluation 3] Adhesion

1. Production of coating film

A necessary number of removable paper adhesive tapes were attached as spacers to both ends of a polymethyl methacrylate plate (PMMA plate, manufactured by Mitsubishi Rayon Co., Ltd., "Acrylite" (trade name)). Next, each

coating composition was dropped on the upper part of the plate, and coated using a glass rod (diameter: 8 mm) so that the dry film thickness was 30 to 40 μm. Then, it was aged at 23 °C in an atmosphere of 50% RH for 5 minutes, followed by baking and drying at 60 °C for 30 minutes. Then, it was aged at 23 °C in an atmosphere of 50% RH for 1 week to form a coating film.

2. Evaluation of adhesion

In the adhesion evaluate, a cutter knife was used to make incisions in the coating film according to the cross-cut method of JIS K5600-5-6: 1999 so as to prepare 100 squares having a size of 1 mm × 1 mm. Then, a cellophane tape was attached to the surface of the coating film in which incisions were made, and then the tape was peeled off, followed by measuring the number of squares remained. The adhesion was evaluated using the measured number of squares based on the following evaluation criteria.

(Evaluation criteria)

◎: Number of squares was 90 or more
o: Number of squares was 80 or more and less than 90
×: Number of squares was less than 80, or unevaluable

[Evaluation 4-1] Scratch resistance

The coating film evaluated for the low-temperature transparency in [Evaluation 1] was scratched with a brass brush (standard type, 3 rows, manufactured by AS ONE Corporation) set on a RUBBING TESTER (manufactured by Taihei Rika Kogyo Co., Ltd.) for 20 times of reciprocation while applying a load of 745 g. The gloss (X1) immediately after being scratched was measured by using a variable angle gloss meter (UGV-6P, manufactured by Suga Test Instruments Co., Ltd.) with a light-receiving angle of 60 ° and an incident angle of 60 °.
The initial gloss of the same portion before the scratch resistance test was defined as X0, and the gloss retention rate 1 was calculated by the following equation (iii).

$$\text{Gloss retention rate 1 (\%)} = (X1/X0) \times 100 \qquad \text{(iii)}$$

Then, the scratch resistance was evaluated using the obtained gloss retention rate 1 based on the following evaluation criteria. In addition, when the coating film was not able to be formed in the evaluation of transparency (room temperature), or when the haze value of the coating film was 1.0 or more, it was difficult to evaluate with reproducibility, and therefore the evaluation was not possible.

(Evaluation criteria)

◎: Gloss retention rate was 95% or more
o: Gloss retention rate was 85% or more and less than 95%
△: Gloss retention rate was 75% or more and less than 85%
×: Gloss retention rate was less than 75%, or unevaluable

[Evaluation 4-2] Scratch recovery property

The coating film evaluated for the scratch resistance in [Evaluation 4-1] was allowed to stand for 1 day in an atmosphere of RH 50% at 23 °C. Next, the gloss (X2) of the scratched portion in the scratch resistance test, was measured. Next, the gloss retention 2 was calculated by the following equation (iv).

$$\text{Gloss retention rate 2 (\%)} = (X2/X0) \times 100 \qquad \text{(iv)}$$

Then, the scratch resistance was evaluated using the obtained gloss retention rate 2 based on the following

evaluation criteria. In addition, when the coating film was not able to be formed in the evaluation of transparency (room temperature), or when the haze value of the coating film was 1.0 or more, it was difficult to evaluate with reproducibility, and therefore the evaluation was not possible.

(Evaluation criteria)

◎: Gloss retention rate was 95% or more
o: Gloss retention rate was 90% or more and less than 95%
△: Gloss retention rate was 75% or more and less than 90%
×: Gloss retention rate was less than 75%, or unevaluable

[Evaluation 5] Heat resistance

1. Production of coating film

A necessary number of removable paper adhesive tapes were attached as spacers to both ends of the polypropylene plate (manufactured by Takiron, "P301A" (trade name), 2 mm × 150 mm × 150 mm). Next, each coating composition was dropped on the upper part of the plate, and coated using a glass rod (diameter: 8 mm) so that the dry film thickness was 30 to 40 μm. Then, it was aged at 23 °C in an atmosphere of 50% RH for 15 minutes. Subsequently, it was baked and dried at 60 °C for 60 minutes to obtain a coating film. After aging 23 °C in an atmosphere of 50% RH for 15 minutes, baking and drying were performed at 60 °C for 60 minutes. Next, the film was allowed to stand for 1 week on a horizontal table in an atmosphere 50% RH at 23 °C to form a coating film.

2. Evaluation of heat resistance

The coating film was cut out to a size of 10 mm in width × 50 mm in length from a polypropylene plate to obtain a coating film sample for heat resistance evaluation. The coating film sample was allowed to stand in an oven at 120 °C for 2 days. Next, the breaking stress of the coating film sample was measured by a tensile test. The temperature and atmosphere of the tensile test were set at 23 °C and 50% RH, respectively, the space between the chucks was set to 20 mm, and the tensile speed was set to 20 mm/min. The breaking stress of the coating film sample before being put into an oven at 120 °C was measured by a tensile test and was defined as Y0. Subsequently, the breaking stress of the coating film sample after allowing it to stand in an oven at 120 °C for 2 days was measured and defined as Y1. Next, the breaking stress retention rate was calculated by the following equation (v).

$$\text{Breaking stress retention rate (\%)} = (Y1/Y0) \times 100 \qquad (v)$$

Next, the heat resistance was evaluated using the obtained breaking stress retention rate based on the following evaluation criteria.

(Evaluation criteria)

◎: Breaking stress retention rate was 95% or more
◦: Breaking stress retention rate was 90% or more and less than 95%
△: Breaking stress retention rate was 75% or more and less than 90%
×: Breaking stress retention rate was less than 75%, or unevaluable

[Synthesis Example 1-1] Production of polycarbonate diol 1-a-1

1,191 g of 1,5-pentanediol, 1,300 g of 1,6-hexanediol, and 1,976 g of ethylene carbonate were charged into a reactor equipped with a 5L glass flask equipped with a rectification column filled with regular filling material and a stirrer, followed by adding 0.2236 g of titanium tetra-n-butoxide as a catalyst. The reactor was immersed in an oil bath at 180 °C and reaction was carried out at a reaction temperature of 165 °C for 12 hours while extracting a part of the distillate. Next, the reactor was directly connected to a condenser, the temperature of the oil bath was raised to 180 °C, the

pressure was gradually lowered to carry out the reaction for another 2 hours, and polycarbonate diol 1-a-1 (2,278 g) which was liquid at room temperature was obtained. The hydroxyl value of the obtained polycarbonate diol 1-a-1 was 109.8 mgKOH/g. The number-average molecular weight was 1,022.

[Synthesis Example 1-2] Preparation of polycarbonate diol 1-a-2

230 g of 1,5-pentanediol, 250 g of 1,6-hexanediol, and 400 g of ethylene carbonate were charged into a reactor equipped with a 1L glass flask equipped with a rectification column filled with regular filling material and a stirrer, followed by adding 0.0468 g of titanium tetra-n-butoxide as a catalyst. The reactor was immersed in an oil bath at 180 °C and reaction was carried out at a reaction temperature of 165 °C for 12 hours while extracting a part of the distillate. Next, the reactor was directly connected to a condenser, the temperature of the oil bath was raised to 180 °C, the pressure was gradually lowered to carry out the reaction for another 4 hours, and polycarbonate diol 1-a-2 (437 g) which was liquid at room temperature was obtained. The hydroxyl value of the obtained polycarbonate diol 1-a-2 was 55.6 mgKOH/g. The number-average molecular weight was 2,018.

[Synthesis Example 1-3] Production of polycarbonate diol composition 1-A-1

90 parts by mass (360 g) of the polycarbonate diol 1-a-1 obtained in the Synthesis Example 1-1 and 10 parts by mass (40 g) of polyoxyethylene diol (manufactured by Wako Pure Chemical Industries, Ltd. "Polyethylene glycol 1000" (trade name), number-average molecular weight: about 1,000) were charged in a 1L glass flask equipped with a stirrer. Then, they were heated while stirring and maintained at a reactor temperature of about 145 °C for 6 hours. Next, 85% phosphoric acid was added so that the mass ratio of phosphoric acid to titanium tetra-n-butoxide was 2.0 times, and heated at a reactor internal temperature of 115 °C for 3 hours to obtain the polycarbonate diol composition 1-A-1. Regarding the transesterification reaction, gel permeation chromatography (hereinafter, sometimes abbreviated as "GPC") measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 1-A-1 was 108.7 mgKOH/g. The number-average molecular weight was 1,032.

Synthesis Example [1-4] Production of polycarbonate diol composition 1-A-2

90 parts by mass (360 g) of the polycarbonate diol 1-a-1 obtained in the Synthesis Example 1-1 and 10 parts by mass (40 g) of polyoxytetramethylene diol (manufactured by Mitsubishi Chemical Co., Ltd., "PTMG1000" (trade name), number-average molecular weight: about 1,000) were charged in a 500 mL glass flask equipped with a stirrer. Then, they were heated while stirring and maintained at a reactor temperature of about 145 °C for 6 hours to obtain the polycarbonate diol composition 1-A-2. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 1-A-2 was 109.1 mgKOH/g. The number-average molecular weight was 1,028.

Synthesis Example [1-5] Production of polycarbonate diol composition 1-A-3

90 parts by mass (360 g) of the polycarbonate diol 1-a-1 obtained in the Synthesis Example 1-1 and 10 parts by mass (40 g) of copolymer of tetrahydrofuran and neopentyl glycol (manufactured by Asahi Kasei Corporation, "PTXG1830" (trade name), number-average molecular weight: about 1,830) were charged in a 500 mL glass flask equipped with a stirrer. Then, they were heated while stirring and maintained at a reactor temperature of about 145 °C for 6 hours to obtain the polycarbonate diol composition 1-A-3. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material,

and that it has a structure corresponding thereto.

The hydroxyl value of the obtained polycarbonate diol composition 1-A-3 was 104.3 mgKOH/g. The number-average molecular weight was 1,075.

Synthesis Example [1-6] Production of polycarbonate diol composition 1-A-4

97 parts by mass (291 g) of the polycarbonate diol 1-a-1 obtained in the Synthesis Example 1-1 and 3 parts by mass (9 g) of polyoxytetramethylene diol (manufactured by Wako Pure Chemical Industries, Ltd., "Polyethylene glycol 1000" (trade name), number-average molecular weight: about 1,000) were charged in a 500 mL glass flask equipped with a stirrer. Then, they were heated while stirring and maintained at a reactor temperature of about 145 °C for 6 hours to obtain the polycarbonate diol composition 1-A-4. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 1-A-4 was 108.5 mgKOH/g. The number-average molecular weight was 1,034.

[Synthesis Example 1-7] Production of polycarbonate diol composition 1- A-5

95 parts by mass (285 g) of the polycarbonate diol 1-a-1 obtained in the Synthesis Example 1-1 and 5 parts by mass (15 g) of polyoxytetramethylene diol (manufactured by Wako Pure Chemical Industries, Ltd., "Polyethylene glycol 1000" (trade name), number-average molecular weight: about 1,000) were charged in a 500 mL glass flask equipped with a stirrer. Then, they were heated while stirring and maintained at a reactor temperature of about 145 °C for 6 hours to obtain the polycarbonate diol composition 1-A-5. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 1-A-5 was 109.2 mgKOH/g. The number-average molecular weight was 1,027.

Synthesis Example 1- 8] Production of polycarbonate diol composition 1-A-6

80 parts by mass (320 g) of the polycarbonate diol 1-a-2 obtained in the Synthesis Example 1-2 and 20 parts by mass (80 g) of polyoxytetramethylene diol (manufactured by Wako Pure Chemical Industries, Ltd., "Polyethylene glycol 1000" (trade name), number-average molecular weight: about 1,000) were charged in a 1L glass flask equipped with a stirrer. Then, they were heated while stirring and maintained at a reactor temperature of about 145 °C for 6 hours to obtain the polycarbonate diol composition 1-A-6. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 1-A-6 was 66.9 mgKOH/g. The number-average molecular weight was 1,667.

[Synthesis Example 1-9] Production of polycarbonate diol composition 1-A-7

70 parts by mass (280 g) of the polycarbonate diol 1-a-1 obtained in the Synthesis Example 1-1 and 30 parts by mass (120 g) of polyoxytetramethylene diol (manufactured by Mitsubishi Chemical Co., Ltd., "PTMG1000 (trade name), number-average molecular weight: about 1,000) were charged in a 500 mL glass flask equipped with a stirrer. Then, they were heated while stirring and maintained at a reactor temperature of about 145 °C for 6 hours to obtain the polycarbonate diol composition 1-A-7. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding

the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 1-A-7 was 110.3 mgKOH/g. The number-average molecular weight was 1,017.

[Synthesis Example 1-10] Production of polycarbonate diol composition 1-A-8

70 parts by mass (280 g) of the polycarbonate diol 1-a-1 obtained in the Synthesis Example 1-1 and 30 parts by mass (120 g) of copolymer of tetrahydrofuran and neopentyl glycol (manufactured by Asahi Kasei Corporation, "PTXG1830" (trade name), number-average molecular weight: about 1,830) were charged in a 500 mL glass flask equipped with a stirrer. Then, they were heated while stirring and maintained at a reactor temperature of about 145 °C for 6 hours to obtain the polycarbonate diol composition 1-A-8. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 1-A-8 was 94.4 mgKOH/g. The number-average molecular weight was 1,188.

[Synthesis Example 1-11] Production of polycarbonate diol 1- a-3

299 g of 1,6-hexanediol, 365 g of 1,4-cyclohexanedimethanol, and 450 g of dimethyl carbonate were charged into a reactor equipped with a 1L glass flask equipped with a rectification column filled with regular filling material and a stirrer, followed by adding 0.0582 g of titanium tetra-n-butoxide as a catalyst. The reactor was immersed in an oil bath at 110 to 165 °C and reaction was carried out at a reaction temperature of 90 to 160 °C for 27 hours while extracting a part of the distillate. Next, the reactor was directly connected to a condenser, the temperature of the oil bath was raised to 180 °C, the pressure was gradually lowered to carry out the reaction for another 8 hours, and polycarbonate diol 1-a-3 (508 g) which was a white solid at room temperature was obtained. The hydroxyl value of the obtained polycarbonate diol 1-a-3 was 112.0 mgKOH/g. The number-average molecular weight was 1,002.

[Synthesis Example 1-12] Production of polycarbonate diol composition 1-A-9

90 parts by mass (270 g) of the polycarbonate diol 1-a-3 obtained in the Synthesis Example 1-11 and 10 parts by mass (30 g) of polyoxytetramethylene diol (manufactured by Wako Pure Chemical Industries, Ltd., "Polyethylene glycol 1000" (trade name), number-average molecular weight: about 1,000) were charged in a 500 mL glass flask equipped with a stirrer. Then, they were heated while stirring and maintained at a reactor temperature of about 145 °C for 6 hours to obtain the polycarbonate diol composition 1-A-9. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 1-A-9 was 110.1 mgKOH/g. The number-average molecular weight was 1,019.

[Synthesis Example 1-13] Production of polycarbonate diol 1-a-4

961 g of 1,10-decanediol and 440 g of ethylene carbonate were charged into a reactor equipped with a 3L glass flask equipped with a rectification column filled with regular filling material and a stirrer, followed by 0.010 g of lead (II) acetate trihydrate as a catalyst. The reactor was immersed in an oil bath at 140 °C and reaction was carried out at a reaction temperature of 165 °C for 12 hours while extracting a part of the distillate. Next, the reactor was directly connected to a condenser, the temperature of the oil bath was raised to 200 °C, the pressure was gradually lowered to carry out the reaction for another 4 hours, and polycarbonate diol 1-a-4 (925 g) which was a white solid at room temperature was obtained. The hydroxyl value of the obtained polycarbonate diol 1-a-4 was 56.2 mgKOH/g. The number-average molecular weight was 1,997.

[Synthesis Example 1-14] Production of polycarbonate diol composition 1-A-10

90 parts by mass (270 g) of the polycarbonate diol 1-a-4 obtained in the Synthesis Example 1-13 and 10 parts by mass (30 g) of polyoxytetramethylene diol ("PolyTHF2000" (trade name) manufactured by BASF, number average molecular weight: about 2,000) were charged in a 500 mL glass flask equipped with a stirrer. Then, they were heated while stirring and maintained at a reactor temperature of about 145 °C for 6 hours to obtain the polycarbonate diol composition 1-A-10. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 1-A-10 was 56.1 mgKOH/g. The number-average molecular weight was 2,000.

[Example 1-1] Production of coating composition 1-1

10 g of the polycarbonate diol composition 1-A-1 obtained in the Synthesis Example 1-3 as a main agent, 0.08 g of "BYK-331" (trade name) manufactured by BYK as a leveling agent, and 20.27 g of ethyl acetate as a solvent were weighed out and stirred with a stirrer at 600 rpm for 5 minutes. 3.52 g of "TPA-100" (trade name) (polyisocyanate; NCO content: 23.1%) manufactured by Asahi Kasei Corporation as a curing agent and 0.14g of dibutyl tin dilaurate (1% butyl acetate dilution) as a catalyst were weighed out and added so that the molar ratio of NCO/OH was 1.00, and stirred at 600rpm for 10 minutes using a stirrer, thereby obtaining the coating composition 1-1. The obtained coating composition 1-1 was evaluated according to the method described above. The results are shown in Table 1-1 below.

[Example 1-2] Production of coating composition 1-2

The coating composition 1-2 was obtained in the same manner as in Example 1-1, except that butyl acetate was used instead of ethyl acetate as the solvent. The obtained coating composition 1-2 was evaluated according to the method described above. The results are shown in Table 1-1 below.

[Example 1-3] Production of coating composition 1-3

The coating composition 1-3 was obtained in the same manner as in Example 1-1, except that isobutyl acetate was used instead of ethyl acetate as the solvent. The obtained coating composition 1-3 was evaluated according to the method described above. The results are shown in Table 1-1 below.

[Example 1-4] Production of coating composition 1-4

The coating composition 1-4 was obtained in the same manner as in Example 1-1, except that methyl ethyl ketone was used instead of ethyl acetate as the solvent. The obtained coating composition 1-4 was evaluated according to the method described above. The results are shown in Table 1-1 below.

[Example 1-5] Production of coating composition 1-5

The coating composition 1-5 was obtained in the same manner as in Example 1-1, except that methyl isobutyl ketone was used instead of ethyl acetate as the solvent. The obtained coating composition 1-5 was evaluated according to the method described above. The results are shown in Table 1-1 below.

[Example 1-6] Production of coating composition 1-6

The coating composition 1-6 was obtained in the same manner as in Example 1-1, except that toluene was used instead of ethyl acetate as the solvent. The obtained coating composition 1-6 was evaluated according to the method described above. The results are shown in Table 1-1 below.

[Example 1-7] Production of coating composition 1-7

The coating composition 1-7 was obtained in the same manner as in Example 1-1, except that xylene was used

instead of ethyl acetate as the solvent. The obtained coating composition 1-7 was evaluated according to the method described above. The results are shown in Table 1-1 below.

[Example 1-8] Production of coating composition 1-8

The coating composition 1-8 was obtained in the same manner as in Example 1-1, except that acetonitrile was used instead of ethyl acetate as the solvent. The obtained coating composition 1-8 was evaluated according to the method described above. The results are shown in Table 1-2 below.

[Example 1-9] Production of coating composition 1-9

10 g of the polycarbonate diol composition 1-A-5 obtained in the synthesis Example 1-7 as a main agent, 0.08 g of "BYK-331" (trade name) manufactured by BYK as a leveling agent, and 20.30 g of ethyl acetate as a solvent were weighed out and stirred with a stirrer at 600 rpm for 5 minutes. 3.54 g of "TPA-100" (trade name) (polyisocyanate; NCO content: 23.1%) manufactured by Asahi Kasei Corporation as a curing agent and 0.14g of dibutyl tin dilaurate (1% butyl acetate dilution) as a catalyst were weighed out and added so that the molar ratio of NCO/OH was 1.00, and stirred at 600rpm for 10 minutes using a stirrer, thereby obtaining the coating composition 1-9. The obtained coating composition 1-9 was evaluated according to the method described above. The results are shown in Table 1-2 below.

[Example 1-10] Production of coating composition 1-10

10 g of the polycarbonate diol composition 1-A-6 obtained in the synthesis Example 1-8 as a main agent, 0.07 g of "BYK-331" (trade name) manufactured by BYK as a leveling agent, and 18.24 g of ethyl acetate as a solvent were weighed out and stirred with a stirrer at 600 rpm for 5 minutes. 2.17 g of "TPA-100" (trade name) (polyisocyanate; NCO content: 23.1%) manufactured by Asahi Kasei Corporation as a curing agent and 0.12g of dibutyl tin dilaurate (1% butyl acetate dilution) as a catalyst were weighed out and added so that the molar ratio of NCO/OH was 1.00, and stirred at 600rpm for 10 minutes using a stirrer, thereby obtaining the coating composition 1-10. The obtained coating composition 1-10 was evaluated according to the method described above. The results are shown in Table 1-2 below.

[Example 1-11] Production of coating composition 1-11

10 g of the polycarbonate diol composition 1-A-2 obtained in the synthesis Example 1-4 as a main agent, 0.08 g of "BYK-331" (trade name) manufactured by BYK as a leveling agent, and 20.29 g of ethyl acetate as a solvent were weighed out and stirred with a stirrer at 600 rpm for 5 minutes. 3.54 g of "TPA-100" (trade name) (polyisocyanate; NCO content: 23.1%) manufactured by Asahi Kasei Corporation as a curing agent and 0.14g of dibutyl tin dilaurate (1% butyl acetate dilution) as a catalyst were weighed out and added so that the molar ratio of NCO/OH was 1.00, and stirred at 600rpm for 10 minutes using a stirrer, thereby obtaining the coating composition 1-11. The obtained coating composition 1-11 was evaluated according to the method described above. The results are shown in Table 1-2 below.

[Example 1-12] Production of coating composition 1-12

10 g of the polycarbonate diol composition 1-A-3 obtained in the synthesis Example 1-5 as a main agent, 0.08 g of "BYK-331" (trade name) manufactured by BYK as a leveling agent, and 20.06 g of ethyl acetate as a solvent were weighed out and stirred with a stirrer at 600 rpm for 5 minutes. 3.38 g of "TPA-100" (trade name) (polyisocyanate; NCO content: 23.1%) manufactured by Asahi Kasei Corporation as a curing agent and 0.13g of dibutyl tin dilaurate (1% butyl acetate dilution) as a catalyst were weighed out and added so that the molar ratio of NCO/OH was 1.00, and stirred at 600rpm for 10 minutes using a stirrer, thereby obtaining the coating composition 1-12. The obtained coating composition 1-12 was evaluated according to the method described above. The results are shown in Table 1-2 below.

[Example 1-13] Production of coating composition 1-13

10 g of the polycarbonate diol composition 1-A-7 obtained in the synthesis Example 1-9 as a main agent, 0.08 g of "BYK-331" (trade name) manufactured by BYK as a leveling agent, and 20.35 g of ethyl acetate as a solvent were weighed out and stirred with a stirrer at 600 rpm for 5 minutes. 3.57 g of "TPA-100" (trade name) (polyisocyanate; NCO content: 23.1%) manufactured by Asahi Kasei Corporation as a curing agent and 0.14g of dibutyl tin dilaurate (1% butyl acetate dilution) as a catalyst were weighed out and added so that the molar ratio of NCO/OH was 1.00, and stirred at 600rpm for 10 minutes using a stirrer, thereby obtaining the coating composition 1-13. The obtained coating composition 1-13 was evaluated according to the method described above. The results are shown in Table 1-2 below.

[Example 1-14] Production of coating composition 1-14

10 g of the polycarbonate diol composition 1-A-8 obtained in the synthesis Example 1-10 as a main agent, 0.08 g of "BYK-331" (trade name) manufactured by BYK as a leveling agent, and 19.58 g of ethyl acetate as a solvent were weighed out and stirred with a stirrer at 600 rpm for 5 minutes. 3.06 g of "TPA-100" (trade name) (polyisocyanate; NCO content: 23.1%) manufactured by Asahi Kasei Corporation as a curing agent and 0.13g of dibutyl tin dilaurate (1% butyl acetate dilution) as a catalyst were weighed out and added so that the molar ratio of NCO/OH was 1.00, and stirred at 600rpm for 10 minutes using a stirrer, thereby obtaining the coating composition 1-14. The obtained coating composition 1-14 was evaluated according to the method described above. The results are shown in Table 1-2 below.

[Example 1-15] Production of coating composition 1-15

10 g of the polycarbonate diol composition 1-A-9 obtained in the synthesis Example 1-12 as a main agent, 0.09 g of "BYK-331" (trade name) manufactured by BYK as a leveling agent, and 21.25 g of ethyl acetate as a solvent were weighed out and stirred with a stirrer at 600 rpm for 5 minutes. 4.18 g of "TKA-100" (trade name) (polyisocyanate; NCO content: 21.7%) manufactured by Asahi Kasei Corporation as a curing agent and 0.14g of dibutyl tin dilaurate (1% butyl acetate dilution) as a catalyst were weighed out and added so that the molar ratio of NCO/OH was 1.10, and stirred at 600rpm for 10 minutes using a stirrer, thereby obtaining the coating composition 1-15. The obtained coating composition 1-15 was evaluated according to the method described above. The results are shown in Table 1-3 below.

[Example 1-16] Production of coating composition 1-16

10 g of the polycarbonate diol composition 1-A-10 obtained in the synthesis Example 1-14 as a main agent, 0.07 g of "BYK-331" (trade name) manufactured by BYK as a leveling agent, and 18.18 g of ethyl acetate as a solvent were weighed out and stirred with a stirrer at 600 rpm for 5 minutes. 2.13 g of "TKA-100" (trade name) (polyisocyanate; NCO content: 21.7%) manufactured by Asahi Kasei Corporation as a curing agent and 0.12g of dibutyl tin dilaurate (1% butyl acetate dilution) as a catalyst were weighed out and added so that the molar ratio of NCO/OH was 1.10, and stirred at 600rpm for 10 minutes using a stirrer, thereby obtaining the coating composition 1-16. The obtained coating composition 1-16 was evaluated according to the method described above. The results are shown in Table 1-3 below.

[Example 1-17] Production of coating composition 1-17

10 g of "Setalux 1152" (trade name) and 7.46 g of the polycarbonate diol composition 1-A-1 obtained in the synthesis Example 1-3 as a main agent, 0.12 g of "BYK-331" (trade name) manufactured by BYK as a leveling agent, and 19.60 g of butyl acetate as a solvent were weighed out so that the mass ratio of the resin component of the polycarbonate diol composition 1-A-1 obtained in the Synthesis Example 1-3 to the resin component of "Setalux 1152" (trade name) (Acrylic polyol; hydroxyl value 138.6 mg KOH/g resin, solid content 61% by mass) manufactured by Allnex was 45/55, and stirred with a stirrer at 600 rpm for 5 minutes. 5.71 g of "TKA-100" (trade name) (polyisocyanate; NCO content: 21.7%) manufactured by Asahi Kasei Corporation as a curing agent and 0.19g of dibutyl tin dilaurate (1% butyl acetate dilution) as a catalyst were weighed out and added so that the molar ratio of NCO/OH was 1.00, and stirred at 600rpm for 10 minutes using a stirrer, thereby obtaining the coating composition 1-17. The obtained coating composition 1-17 was evaluated according to the method described above. The results are shown in Table 1-3 below.

[Example 1-18] Production of coating composition 1-18

5 g of "Setalux 1152" (trade name) and 7.12 g of the polycarbonate diol composition 1-A-1 obtained in the synthesis Example 1-3 as a main agent, 0.09 g of "BYK-331" (trade name) manufactured by BYK as a leveling agent, and 15.48 g of ethyl acetate as a solvent were weighed out so that the mass ratio of the resin component of the polycarbonate diol composition 1-A-1 obtained in the Synthesis Example 1-3 to the resin component of "Setalux 1152" (trade name) (Acrylic polyol; hydroxyl value 138.6 mg KOH/g resin, solid content 61% by mass) manufactured by Allnex was 30/70, and stirred with a stirrer at 600 rpm for 5 minutes. 4.13 g of "TKA-100" (trade name) (polyisocyanate; NCO content: 21.7%) manufactured by Asahi Kasei Corporation as a curing agent and 0.14g of dibutyl tin dilaurate (1% butyl acetate dilution) as a catalyst were weighed out and added so that the molar ratio of NCO/OH was 1.00, and stirred at 600rpm for 10 minutes using a stirrer, thereby obtaining the coating composition 1-18. The obtained coating composition 1-18 was evaluated according to the method described above. The results are shown in Table 1-3 below.

[Example 1-19] Production of coating composition 1-19

10 g of "Setalux 1152" (trade name) and 7.46 g of the polycarbonate diol composition 1-A-5 obtained in the synthesis Example 1-7 as a main agent, 0.12 g of "BYK-331" (trade name) manufactured by BYK as a leveling agent, and 15.39 g of butyl acetate as a solvent were weighed out so that the mass ratio of the resin component of the polycarbonate diol composition 1-A-5 obtained in the Synthesis Example 1-7 to the resin component of "Setalux 1152" (trade name) (Acrylic polyol; hydroxyl value 138.6 mg KOH/g resin, solid content 61% by mass) manufactured by Allnex was 45/55, and stirred with a stirrer at 600 rpm for 5 minutes. 5.73 g of "TKA-100" (trade name) (polyisocyanate; NCO content: 21.7%) manufactured by Asahi Kasei Corporation as a curing agent and 0.19g of dibutyl tin dilaurate (1% butyl acetate dilution) as a catalyst were weighed out and added so that the molar ratio of NCO/OH was 1.00, and stirred at 600rpm for 10 minutes using a stirrer, thereby obtaining the coating composition 1-19. The obtained coating composition 1-19 was evaluated according to the method described above. The results are shown in Table 1-3 below.

[Example 1-20] Production of coating composition 1-20

10 g of "Setalux 1152" (trade name) and 7.46 g of the polycarbonate diol composition 1-A-6 obtained in the synthesis Example 1-8 as a main agent, 0.12 g of "BYK-331" (trade name) manufactured by BYK as a leveling agent, and 14.30 g of butyl acetate as a solvent were weighed out so that the mass ratio of the resin component of the polycarbonate diol composition 1-A-6 obtained in the Synthesis Example 1-8 to the resin component of "Setalux 1152" (trade name) (Acrylic polyol; hydroxyl value 138.6 mg KOH/g resin, solid content 61% by mass) manufactured by Allnex was 45/55, and stirred with a stirrer at 600 rpm for 5 minutes. 4.64 g of "TKA-100" (trade name) (polyisocyanate; NCO content: 21.7%) manufactured by Asahi Kasei Corporation as a curing agent and 0.19g of dibutyl tin dilaurate (1% butyl acetate dilution) as a catalyst were weighed out and added so that the molar ratio of NCO/OH was 1.00, and stirred at 600rpm for 10 minutes using a stirrer, thereby obtaining the coating composition 1-20. The obtained coating composition 1-20 was evaluated according to the method described above. The results are shown in Table 1-3 below.

[Example 1-21] Production of coating composition 1-21

5 g of "Setalux 1152" (trade name) and 7.12 g of the polycarbonate diol composition 1-A-5 obtained in the synthesis Example 1-7 as a main agent, 0.09 g of "BYK-331" (trade name) manufactured by BYK as a leveling agent, and 12.36 g of ethyl acetate as a solvent were weighed out so that the mass ratio of the resin component of the polycarbonate diol composition 1-A-5 obtained in the Synthesis Example 1-7 to the resin component of "Setalux 1152" (trade name) (Acrylic polyol; hydroxyl value 138.6 mg KOH/g resin, solid content 61% by mass) manufactured by Allnex was 30/70, and stirred with a stirrer at 600 rpm for 5 minutes. 4.14 g of "TKA-100" (trade name) (polyisocyanate; NCO content: 21.7%) manufactured by Asahi Kasei Corporation as a curing agent and 0.14g of dibutyl tin dilaurate (1% butyl acetate dilution) as a catalyst were weighed out and added so that the molar ratio of NCO/OH was 1.00, and stirred at 600rpm for 10 minutes using a stirrer, thereby obtaining the coating composition 1-21. The obtained coating composition 1-21 was evaluated according to the method described above. The results are shown in Table 1-3 below.

[Example 1-22] Production of coating composition 1-22

5 g of "Setalux 1152" (trade name) and 7.12 g of the polycarbonate diol composition 1-A-6 obtained in the synthesis Example 1-8 as a main agent, 0.09 g of "BYK-331" (trade name) manufactured by BYK as a leveling agent, and 11.32 g of ethyl acetate as a solvent were weighed out so that the mass ratio of the resin component of the polycarbonate diol composition 1-A-6 obtained in the Synthesis Example 1-8 to the resin component of "Setalux 1152" (trade name) (Acrylic polyol; hydroxyl value 138.6 mg KOH/g resin, solid content 61% by mass) manufactured by Allnex was 30/70, and stirred with a stirrer at 600 rpm for 5 minutes. 3.10 g of "TKA-100" (trade name) (polyisocyanate; NCO content: 21.7%) manufactured by Asahi Kasei Corporation as a curing agent and 0.14 g of dibutyl tin dilaurate (1% butyl acetate dilution) as a catalyst were weighed out and added so that the molar ratio of NCO/OH was 1.00, and stirred at 600rpm for 10 minutes using a stirrer, thereby obtaining the coating composition 1-22. The obtained coating composition 1-22 was evaluated according to the method described above. The results are shown in Table 1-3 below.

[Comparative Example 1-1] Production of coating composition 1-23

The coating composition 1-19 was obtained in the same manner as in Example 1-1, except that diisobutyl ketone was used instead of ethyl acetate as the solvent. The obtained coating composition 1-19 was evaluated according to the method described above. The results are shown in Table 1-4 below.

[Comparative Example 1-2] Production of coating composition 1-24

10 g of the polycarbonate diol composition 1-A-1 obtained in the synthesis Example 1-3 as a main agent, 0.08 g of "BYK-331" (trade name) manufactured by BYK as a leveling agent, and 20.27 g of hexane as a solvent were weighed out and stirred with a stirrer at 600 rpm for 5 minutes. However, the polycarbonate diol composition 1-A-1 obtained in the Synthesis Example 1-3 was not dissolved in hexane, and thus the coating composition was not able to be prepared.

[Comparative Example 1-3] Production of coating composition 1-25

10 g of the polycarbonate diol composition 1-A-2 obtained in the synthesis Example 1-4 as a main agent, 0.08 g of "BYK-331" (trade name) manufactured by BYK as a leveling agent, and 20.27 g of hexane as a solvent were weighed out and stirred with a stirrer at 600 rpm for 5 minutes. However, the polycarbonate diol composition 1-A-2 obtained in the Synthesis Example 1-4 was not dissolved in hexane, and thus the coating composition was not able to be prepared.

[Comparative Example 1-4] Production of coating composition 1-26

10 g of the polycarbonate diol composition 1-A-3 obtained in the synthesis Example 1-5 as a main agent, 0.08 g of "BYK-331" (trade name) manufactured by BYK as a leveling agent, and 20.27 g of hexane as a solvent were weighed out and stirred with a stirrer at 600 rpm for 5 minutes. However, the polycarbonate diol composition 1-A-3 obtained in the Synthesis Example 1-5 was not dissolved in hexane, and thus the coating composition was not able to be prepared.

[Comparative Example 1-5] Production of coating composition 1-27

10 g of the polycarbonate diol composition 1-A-4 obtained in the Synthesis Example 1-6 as a main agent, 0.08 g of "BYK-331" (trade name) manufactured by BYK as a leveling agent, and 20.26 g of ethyl acetate as a solvent were weighed out and stirred with a stirrer at 600 rpm for 5 minutes. 3.52 g of "TPA-100" (trade name) (polyisocyanate; NCO content: 23.1%) manufactured by Asahi Kasei Corporation as a curing agent and 0.14g of dibutyl tin dilaurate (1% butyl acetate dilution) as a catalyst were weighed out and added so that the molar ratio of NCO/OH was 1.00, and stirred at 600rpm for 10 minutes using a stirrer, thereby obtaining the coating composition 1-23. The obtained coating composition 1-23 was evaluated according to the method described above. The results are shown in Table 1-4 below.

[Table 1-1]

| | Evaluation Item | | Ex.1-1 | Ex. 1-2 | Ex. 1-3 | Ex.1-4 | Ex. 1-5 | Ex.1-6 | Ex. 1-7 |
|---|---|---|---|---|---|---|---|---|---|
| (1-A1) Component | Polycarbonate diol Composition | | 1-A-1 | 1-A-1 | 1-A-1 | 1-A-1 | 1-A-1 | 1-A-1 | 1-A-1 |
| | Content of Structure (I) | | 10% | 10% | 10% | 10% | 10% | 10% | 10% |
| | Content of Polycarbonate structure | | 90% | 90% | 90% | 90% | 90% | 90% | 90% |
| (1-A2) Component | | | - | - | - | - | - | - | - |
| Mass ratio of (1-A1) Component/(1-A2) Component | | | 100/0 | 100/0 | 100/0 | 100/0 | 100/0 | 100/0 | 100/0 |
| (1-B) Component | Curing Agent | | TPA-100 | TPA-100 | TPA-100 | TPA-100 | TPA-100 | TPA-100 | TPA-100 |
| (1-C) Component | Organic Solvent | | ethyl acetate | butyl acetate | Isobutyl acetate | methyl ethyl ketone | methyl isobutyl ketone | toluene | xylene |
| | SP Value of Solvent $(J/cm^3)^{1/2}$ $((cal/cm^3)^{1/2})$ | | 18.6 (9.1) | 17.0 (8.3) | 17.0 (8.3) | 19.0 (9.3) | 17.4 (8.5) | 18.2 (8.9) | 18.0 (8.8) |
| | Vapor Pressure of Solvent (kPa/20 °C) | | 10.0 | 1.2 | 1.7 | 10.5 | 2.1 | 2.9 | 0.7-0.9 |
| Evaluation | Low-Temperature Transparency | Haze Value | 0.1 | 0.3 | 0.3 | 0.2 | 0.1 | 0.2 | 0.5 |
| | | Evaluation | ◎ | ◎ | ◎ | ◎ | ◎ | ◎ | ○ |
| | Scratch Resistance | Gloss Retention Rate | 96% | 95% | 95% | 96% | 96% | 96% | 95% |
| | | Evaluation | ◎ | ◎ | ◎ | ◎ | ◎ | ◎ | ◎ |
| | Adhesion | Number of Squares | 98 | 96 | 96 | 95 | 97 | 96 | 95 |
| | | Evaluation | ◎ | ◎ | ◎ | ◎ | ◎ | ◎ | ◎ |

[Table 1-2]

| | Evaluation Item | | Ex. 1-8 | Ex. 1-9 | Ex.1-10 | Ex.1-11 | Ex.1-12 | Ex.1-13 | Ex.1-14 |
|---|---|---|---|---|---|---|---|---|---|
| (1-A1) Component | Polycarbonate diol Composition | | 1-A-1 | 1-A-5 | 1-A-6 | 1-A-2 | 1-A-3 | 1-A-7 | 1-A-8 |
| | Content of Structure (I) | | 10% | 5% | 20% | 10% | 10% | 30% | 30% |
| | Content of Polycarbonate Structure | | 90% | 95% | 80% | 90% | 90% | 70% | 70% |
| (1-A2) Component | | | - | - | - | - | - | - | - |
| Mass Ratio of (1-A1) Component/(1-A2) Component | | | 100/0 | 100/0 | 100/0 | 100/0 | 100/0 | 100/0 | 100/0 |
| (1-B) Component | Curing Agent | | TPA-100 | TPA-100 | TPA-100 | TPA-100 | TPA-100 | TPA-100 | TPA-100 |
| (1-C) Component | Organic Solvent | | acetonitrile | ethyl acetate | ethyl acetate | ethyl acetate | ethyl acetate | ethyl acetate | ethyl acetate |
| | SP Value of Solvent $(J/cm^3)^{1/2}$ $((cal/cm^3)^{1/2})$ | | 24.3 (11.9) | 18.6 (9.1) | 18.6 (9.1) | 18.6 (9.1) | 18.6 (9.1) | 18.6 (9.1) | 18.6 (9.1) |
| | Vapor Pressure of Solvent (kPa/20 °C) | | 9.9 | 10.0 | 10.0 | 10.0 | 10.0 | 10.0 | 10.0 |
| Evaluation | Low-Temperature Transparency | Haze Value | 0.2 | 0.1 | 0.2 | 0.2 | 0.2 | 0.3 | 0.3 |
| | | Evaluation | ◎ | ◎ | ◎ | ◎ | ◎ | ◎ | ◎ |
| | Scratch Resistance | Gloss Retention Rate | 95% | 95% | 97% | 96% | 95% | 97% | 97% |
| | | Evaluation | ◎ | ◎ | ◎ | ◎ | ◎ | ◎ | ◎ |
| | Adhesion | Number of Squares | 97 | 90 | 97 | 95 | 96 | 95 | 96 |
| | | Evaluation | ◎ | ◎ | ◎ | ◎ | ◎ | ◎ | ◎ |

[Table 1-3]

| | Evaluation Item | | Ex.1-15 | Ex.1-16 | Ex.1-17 | Ex.1-18 | Ex.1-19 | Ex.1-20 | Ex. 1-21 | Ex. 1-22 |
|---|---|---|---|---|---|---|---|---|---|---|
| (1-A1) Component | Polycarbonate diol Composition | | 1-A-9 | 1-A-10 | 1-A-1 | 1-A-1 | 1-A-5 | 1-A-6 | 1-A-5 | 1-A-6 |
| | Content of Structure (I) | | 10% | 10% | 10% | 10% | 5% | 20% | 5% | 20% |
| | Content of Polycarbonate Structure | | 90% | 90% | 90% | 90% | 95% | 80% | 95% | 80% |
| (1-A2) Component | | | - | - | Setalux 1152 | Setalux 1152 | Setalux 1152 | Setalux 1152 | Setalux 1152 | Setalux 1152 |
| Mass Ratio of (1-A1) Component//1-A2) Component | | | 100/0 | 100/0 | 55/45 | 70/30 | 55/45 | 55/45 | 70/30 | 70/30 |
| (1-B) Component | Curing Agent | | TKA-100 | TKA-100 | TKA-100 | TKA-100 | TKA-100 | TKA-100 | TKA-100 | TKA-100 |
| (1-C) Component | Organic Solvent | | ethyl acetate | ethyl acetate | butyl acetate | ethyl acetate | butyl acetate | ethyl acetate | butyl acetate | ethyl acetate |
| | SP Value of Solvent $(J/cm^3)^{1/2}$ $((cal/cm^3)^{1/2})$ | | 18.6 (9.1) | 18.6 (9.1) | 17.0 (8.3) | 18.6 (9.1) | 17.0 (8.3) | 18.6 (9.1) | 17.0 (8.3) | 18.6 (9.1) |
| | Vapor Pressure of Solvent (kPa/20 °C) | | 10.0 | 10.0 | 1.2 | 10.0 | 1.2 | 10.0 | 1.2 | 10.0 |
| Evaluation | Low-Temperature Transparency | Haze Value | 0.3 | 0.2 | 0.4 | 0.3 | 0.4 | 0.4 | 0.2 | 0.2 |
| | | Evaluation | ◎ | ◎ | ○ | ◎ | ○ | ○ | ◎ | ◎ |
| | Scratch Resistance | Gloss Retention Rate | 95% | 96% | 95% | 96% | 95% | 97% | 96% | 98% |
| | | Evaluation | ◎ | ◎ | ◎ | ◎ | ◎ | ◎ | ◎ | ◎ |
| | Adhesion | Number of Squares | 96 | 97 | 82 | 92 | 80 | 89 | 91 | 95 |
| | | Evaluation | ◎ | ◎ | ○ | ◎ | ○ | ○ | ◎ | ◎ |

[Table 1-4]

| | Evaluation Item | | Comp.Ex.1-1 | Comp.Ex.1-2 | Comp.Ex.1-3 | Comp.Ex. 1-4 | Comp.Ex.1-5 |
|---|---|---|---|---|---|---|---|
| (1-A1) Component | Polycarbonate diol Composition | | 1-A-1 | 1-A-1 | 1-A-2 | 1-A-3 | 1-A-4 |
| | Content of Structure (I) | | 10% | 10% | 10% | 10% | 3% |
| | Content of Polycarbonate Structure | | 90% | 90% | 90% | 90% | 97% |
| (1-A2) Component | | | - | - | - | - | - |
| Mass Ratio of (1-A1) Component/(1-A2) Component | | | 100/0 | 100/0 | 100/0 | 100/0 | 100/0 |
| (1-B) Component | Curing Agent | | TPA-100 | TPA-100 | TPA-100 | TPA-100 | TPA-100 |
| (1-C) Component | Organic Solvent | | diisobutyl ketone | hexane | hexane | hexane | ethyl acetate |
| | SP Value of Solvent $(J/cm^3)^{1/2}$ $((cal/cm^3)^{1/2})$ | | 16.0 (7.8) | 14.9 (7.3) | 14.9 (7.3) | 14.9 (7.3) | 18.6 (9.1) |
| | Vapor Pressure of Solvent (kPa/20 °C) | | 0.2 | 17.0 | 17.0 | 17.0 | 10.0 |
| Evaluation | Low-Temperature Transparency | Haze Value | 7.3 | Unevaluable | Unevaluable | Unevaluable | 0.3 |
| | | Evaluation | × | × | × | × | ◎ |
| | Scratch Resistance | Gloss Retention Rate | Unevaluable | Unevaluable | Unevaluable | Unevaluable | 88% |
| | | Evaluation | × | × | × | × | × |
| | Adhesion | Number of Squares | 95 | Unevaluable | Unevaluable | Unevaluable | 68 |
| | | Evaluation | ◎ | × | × | × | × |

As shown in Tables 1-1 to 1-3, the coating films obtained from the coating compositions 1-1 to 1-22 (Examples 1-1 to 1-22) containing, as the component (1-C), an organic solvent having an SP value of 8.3 or more had a better low-temperature transparency and scratch resistance than the coating film obtained from the coating composition 1-23 (Comparative Example 1-1) containing an organic solvent having an SP value of less than 8.0.

Furthermore, Comparative Examples 1-2 to 1-4, in which an organic solvent having an SP value of 7.3 was used, were unable to produce a coating composition.

Furthermore, the coating compositions 1-1 to 1-22 (Examples 1-1 to 1-22) containing, as the component (1-A1), a polycarbonate diol composition having the structure (I) in an amount of 5% by mass or more and 30% by mass or less and the polycarbonate structure in an amount of 70% by mass or more and 90% by mass or less showed a better scratch resistance and adhesion than the coating composition 1-27 (Comparative Example 1-5) containing a polycarbonate diol composition having the structure (I) in an amount of 3% by mass and the polycarbonate structure in an amount of 97% by mass.

The coating compositions 1-1 to 1-16, 1-18 and 1-21 to 1-22 (Examples 1-1 to 1-16, 1-18 and 1-21 to 1-22) containing a polycarbonate diol composition in which the mass ratio of (1-A1) component/(1-A2) component was 70/30 or more showed a better adhesion than the coating compositions 1-17 and 1-19 to 1-20 (Examples 1-17 and 1-19 to 1-20) containing a polycarbonate diol composition in which the mass ratio of (1-A1) component/(1-A2) component was 55/45.

Furthermore, the coating compositions 1-1 to 1-6, 1-8 to 1-16, 1-18 and 1-21 to 1-22 (Examples 1-1 to 1-6, 1-8 to 1-16, 1-18 and 1-21 to 1-22) having a mass ratio of (1-A1) component/(1-A2) component of 70/30 or more and containing an organic solvent having a vapor pressure of 1.0 kPa or more at 20 °C as the (1-C) component showed a better low-temperature transparency than the coating composition 1-7 (Example 1-7) having a mass ratio of (1-A1) component/(1-A2) component of 70/30 or more and containing an organic solvent having a vapor pressure of 0.7 to 0.9 kPa at 20 °C, and the coating compositions 1-17 and 1-19 to 1-20 (Examples 1-17 and 1-19 to 1-20) having a mass ratio of (1-A1) component/(1-A2) component of less than 70/30 and containing an organic solvent having a vapor pressure of 1.0 kPa or more at 20 °C.

From the above, it was confirmed that the coating film formed from the coating composition of the present embodiment was excellent in low-temperature transparency, scratch resistance, and adhesion.

[Synthesis Example 2-1] Production of polycarbonate diol 2-a-1

1,191 g of 1,5-pentanediol, 1,300 g of 1,6-hexanediol, and 1,976 g of ethylene carbonate were charged into a reactor equipped with a 5L glass flask equipped with a rectification column filled with regular filling material and a stirrer, followed by adding 0.2236 g of titanium tetra-n-butoxide as a catalyst. The reactor was immersed in an oil bath at 180 °C and reaction was carried out at a reaction temperature of 165 °C for 12 hours while extracting a part of the distillate. Next, the reactor was directly connected to a condenser, the temperature of the oil bath was raised to 180 °C, the pressure was gradually lowered to carry out the reaction for another 2 hours, and polycarbonate diol 2-a-1 (2,278 g) which was liquid at room temperature was obtained. The hydroxyl value of the obtained polycarbonate diol 2-a-1 was 109.8 mgKOH/g. The number-average molecular weight was 1,022.

[Synthesis Example 2-2] Preparation of polycarbonate diol 2-a-2

230 g of 1,5-pentanediol, 250 g of 1,6-hexanediol, and 400 g of ethylene carbonate were charged into a reactor equipped with a 1L glass flask equipped with a rectification column filled with regular filling material and a stirrer, followed by adding 0.0468 g of titanium tetra-n-butoxide as a catalyst. The reactor was immersed in an oil bath at 180 °C and reaction was carried out at a reaction temperature of 165 °C for 12 hours while extracting a part of the distillate. Next, the reactor was directly connected to a condenser, the temperature of the oil bath was raised to 180 °C, the pressure was gradually lowered to carry out the reaction for another 3 hours, and polycarbonate diol 2-a-2 (466 g) which was liquid at room temperature was obtained. The hydroxyl value of the obtained polycarbonate diol 2-a-2 was 55.2 mgKOH/g. The number-average molecular weight was 2,033.

[Synthesis Example 2-3] Production of polycarbonate diol composition 2-A-1

90 parts by mass (360 g) of the polycarbonate diol 2-a-1 obtained in the Synthesis Example 2-1 and 10 parts by mass (40 g) of polyoxyethylene diol (manufactured by Wako Pure Chemical Industries, Ltd. "Polyethylene glycol 1000" (trade name), number-average molecular weight: about 1,000) were charged in a 1L glass flask equipped with a stirrer. Then, they were heated while stirring and maintained at a reactor temperature of about 145 °C for 6 hours. Next, 85% phosphoric acid was added so that the mass ratio of phosphoric acid to titanium tetra-n-butoxide was 2.0 times, and heated at a reactor internal temperature of 115 °C for 3 hours to obtain the polycarbonate diol composition 2-A-1.

Regarding the transesterification reaction, gel permeation chromatography (hereinafter, sometimes abbreviated as "GPC") measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 2-A-1 was 108.7 mgKOH/g. The number-average molecular weight was 1,032.

[Synthesis Example 2-4] Production of polycarbonate diol 2-a-3

550 g of 2-methyl-1,3-propanediol, 423 g of 1,4-butanediol, and 952 g of ethylene carbonate were charged into a reactor equipped with a 3L glass flask equipped with a rectification column filled with regular filling material and a stirrer, followed by adding 0.1925 g of titanium tetra-n-butoxide as a catalyst. The reactor was immersed in an oil bath at 170 °C and reaction was carried out at a reaction temperature of 155 °C for 25 hours while extracting a part of the distillate. Next, the reactor was directly connected to a condenser, the temperature of the oil bath was raised to 170 °C, the pressure was gradually lowered to carry out the reaction for another 5 hours, and polycarbonate diol 2-a-3 (577 g) which was liquid at room temperature was obtained.

The hydroxyl value of the obtained polycarbonate diol 2-a-3 was 53.0 mgKOH/g. The number-average molecular weight was 2,117.

[Synthesis Example 2-5] Production of polycarbonate diol composition 2-A-2

90 parts by mass (360 g) of the polycarbonate diol 2-a-1 obtained in the Synthesis Example 2-1 and 10 parts by mass (40 g) of polyoxytetramethylene diol (manufactured by Mitsubishi Chemical Co., Ltd., "PTMG1000" (trade name), number-average molecular weight: about 1,000) were charged in a 500 mL glass flask equipped with a stirrer. Then, they were heated while stirring and maintained at a reactor temperature of about 145 °C for 6 hours to obtain the polycarbonate diol composition 2-A-2. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 2-A-2 was 109.1 mgKOH/g. The number-average molecular weight was 1,028.

[Synthesis Example 2-6] Production of polycarbonate diol composition 2-A-3

70 parts by mass (280 g) of the polycarbonate diol 2-a-1 obtained in the Synthesis Example 2-1 and 30 parts by mass (120 g) of polyoxytetramethylene diol (manufactured by Mitsubishi Chemical Co., Ltd., "PTMG1000" (trade name), number-average molecular weight: about 1,000) were charged in a 500 mL glass flask equipped with a stirrer. Then, they were heated while stirring and maintained at a reactor temperature of about 145 °C for 6 hours to obtain the polycarbonate diol composition 2-A-3. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 2-A-3 was 110.3 mgKOH/g. The number-average molecular weight was 1,017.

[Synthesis Example 2-7] Production of polycarbonate diol composition 2-A-4

90 parts by mass (360 g) of the polycarbonate diol 2-a-1 obtained in the Synthesis Example 2-1 and 10 parts by mass (40 g) of a copolymer of tetrahydrofuran and neopentyl glycol ("PTXG1830" (trade name), manufactured by Asahi Kasei Corporation, number-average molecular weight: about 1,830). were charged in a 500 mL glass flask equipped with a stirrer. Then, they were heated while stirring and maintained at a reactor temperature of about 145 °C for 6 hours to obtain the polycarbonate diol composition 2-A-4. Regarding the transesterification reaction, GPC measurement was

performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 2-A-4 was 104.3 mgKOH/g. The number-average molecular weight was 1,075.

[Synthesis Example 2-8] Production of polycarbonate diol composition 2- A-5

70 parts by mass (280 g) of the polycarbonate diol 2-a-1 obtained in the Synthesis Example 2-1 and 30 parts by mass (120 g) of a copolymer of tetrahydrofuran and neopentyl glycol ("PTXG1830" (trade name), manufactured by Asahi Kasei Corporation, number-average molecular weight: about 1,830) were charged in a 500 mL glass flask equipped with a stirrer. Then, they were heated while stirring and maintained at a reactor temperature of about 145 °C for 6 hours to obtain the polycarbonate diol composition 2-A-5. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 2-A-5 was 94.4 mgKOH/g. The number-average molecular weight was 1,188.

[Synthesis Example 2-9] Production of polycarbonate diol composition 2-A-6

79 parts by mass (237 g) of the polycarbonate diol 2-a-2 obtained in the Synthesis Example 2-2 and 21 parts by mass (63 g) of polyoxytetramethylene diol ("PolyTHF250" (trade name) manufactured by BASF, number-average molecular weight: about 250) were charged in a 500 mL glass flask equipped with a stirrer. Then, they were heated while stirring and maintained at a reactor temperature of about 145 °C for 6 hours to obtain the polycarbonate diol composition 2-A-6. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 2-A-6 was 135.0 mgKOH/g. The number-average molecular weight was 831.

[Synthesis Example 2-10] Production of polycarbonate diol composition 2-A-7

61 parts by mass (183 g) of the polycarbonate diol 2-a-1 obtained in the Synthesis Example 2-1 and 39 parts by mass (117 g) of polyoxytetramethylene diol ("PolyTHF650" manufactured by BASF (trade name), number-average molecular weight: about 650) were charged in a 500 mL glass flask equipped with a stirrer. Then, they were heated while stirring and maintained at a reactor temperature of about 145 °C for 6 hours to obtain the polycarbonate diol composition 2-A-7. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 2- A-7 was 136.4 mgKOH/g. The number-average molecular weight was 823.

[Synthesis Example 2-11] Production of polycarbonate diol 2-a-4

299 g of 1,6-hexanediol, 365 g of 1,4-cyclohexanedimethanol, and 450 g of dimethyl carbonate were charged into a reactor equipped with a 1L glass flask equipped with a rectification column filled with regular filling material and a stirrer, followed by adding 0.0582 g of titanium tetra-n-butoxide as a catalyst. The reactor was immersed in an oil bath

at 110 to 165 °C and reaction was carried out at a reaction temperature of 90 to 160 °C for 27 hours while extracting a part of the distillate. Next, the reactor was directly connected to a condenser, the temperature of the oil bath was raised to 180 °C, the pressure was gradually lowered to carry out the reaction for another 8 hours, and polycarbonate diol 2-a-4 (508 g) which was a white solid at room temperature was obtained. The hydroxyl value of the obtained polycarbonate diol 2-a-4 was 112.0 mgKOH/g. The number-average molecular weight was 1,002.

[Synthesis Example 2-12] Production of polycarbonate diol composition 2-A-8

90 parts by mass (270 g) of the polycarbonate diol 2-a-4 obtained in the Synthesis Example 2-11 and 10 parts by mass (30 g) of polyoxyethylene diol (manufactured by Wako Pure Chemical Industries, Ltd., "polyethylene glycol 1000" (trade name), number-average molecular weight: about 1,000) were charged in a 500 mL glass flask equipped with a stirrer. Then, they were heated while stirring and maintained at a reactor temperature of about 145 °C for 6 hours to obtain the polycarbonate diol composition 2-A-8. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 2- A-8 was 110.1 mgKOH/g. The number-average molecular weight was 1,019.

[Synthesis Example 2-13] Production of polycarbonate diol 2- a-5

961 g of 1,10-decanediol and 440 g of ethylene carbonate were charged into a reactor equipped with a 3L glass flask equipped with a rectification column filled with regular filling material and a stirrer, followed by 0.010 g of lead (II) acetate trihydrate as a catalyst. The reactor was immersed in an oil bath at 140 °C and reaction was carried out at a reaction temperature of 165 °C for 12 hours while extracting a part of the distillate. Next, the reactor was directly connected to a condenser, the temperature of the oil bath was raised to 200 °C, the pressure was gradually lowered to carry out the reaction for another 4 hours, and polycarbonate diol 2-a-5 (925 g) which was a white solid at room temperature was obtained. The hydroxyl value of the obtained polycarbonate diol 2-a-5 was 56.2 mgKOH/g. The number-average molecular weight was 1,997.

[Synthesis Example 2-14] Production of polycarbonate diol composition 2-A-9

90 parts by mass (270 g) of the polycarbonate diol 2-a-5 obtained in the Synthesis Example 2-13 and 10 parts by mass (30 g) of polyoxytetramethylene diol ("PolyTHF2000" (trade name) manufactured by BASF, number-average molecular weight: about 2,000) were charged in a 500 mL glass flask equipped with a stirrer. Then, they were heated while stirring and maintained at a reactor temperature of about 145 °C for 6 hours to obtain the polycarbonate diol composition 2-A-9. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 2-A-9 was 56.1 mgKOH/g. The number-average molecular weight was 2,000.

[Synthesis Example 2-15] Production of polycarbonate diol composition 2-A-10

80 parts by mass (320 g) of the polycarbonate diol 2-a-2 obtained in the Synthesis Example 2-2 and 20 parts by mass (80 g) of polyoxytetramethylene diol (manufactured by Wako Pure Chemical Industries, Ltd., "Polyethylene glycol 1000" (trade name), number-average molecular weight: about 1,000) were charged in a 1L glass flask equipped with a stirrer. Then, they were heated while stirring and maintained at a reactor temperature of about 145 °C for 6 hours to obtain the polycarbonate diol composition 2-A-10. Regarding the transesterification reaction, GPC measurement was performed on the reaction solution over time, and the disappearance of the peak derived from the raw material and the appearance of the peak derived from the product were confirmed thereby confirming the progress of the reaction. Then, regarding the finally obtained polycarbonate diol composition, it was confirmed by the time-dependent measurement of GPC that the reaction progressed almost quantitatively based on the charged amount of the raw material, and that it

has a structure corresponding thereto.

The hydroxyl value of the obtained polycarbonate diol composition 2-A-10 was 66.7 mgKOH/g. The number-average molecular weight was 1,682.

[Synthesis Example 2-16] Production of polycarbonate diol composition 2-A-11

95 parts by mass (285 g) of the polycarbonate diol 2-a-1 obtained in the Synthesis Example 2-1 and 5 parts by mass (15 g) of polyoxyethylene diol (manufactured by Wako Pure Chemical Industries Ltd., "polyethylene glycol 1000" (trade name), number-average molecular weight: about 1,000) were charged in a 500 mL glass flask equipped with a stirrer. Then, they were heated while stirring and maintained at a reactor temperature of about 145 °C for 6 hours to obtain the polycarbonate diol composition 2-A-11. Regarding the transesterification reaction, GPC measurement was performed on the reaction solution over time, and the disappearance of the peak derived from the raw material and the appearance of the peak derived from the product were confirmed thereby confirming the progress and the like of the reaction. Then, regarding the finally obtained polycarbonate diol composition, it was confirmed by the time-dependent measurement of GPC that the reaction progressed almost quantitatively based on the charged amount of the raw material, and that it has a structure corresponding thereto.

The hydroxyl value of the obtained polycarbonate diol composition 2-A-11 was 109.2 mgKOH/g. The number-average molecular weight was 1,027.

[Example 2-1] Production of coating composition 2-1

12 g of "Setalux 1152" (trade name) and 0.39 g of the polycarbonate composition 2-A-1 obtained in the Synthesis Example 2-3 as a main agent, 3.64 g of polyisocyanate ("TKA-100" (trade name), NCO content: 21.7%, manufactured by Asahi Kasei Corporation) as a curing agent, and 6.67 g of butyl acetate as a solvent were weighed and mixed so that the mass ratio ((2-A1) component/(2-A2) component) of the resin component ((2-A1) component) of the polycarbonate diol composition 2-A-1 obtained in the Synthesis Example 2-3 with respect to the resin component ((2-A2) component) of the acrylic polyol ("Setalux1152" (trade name) manufactured by Allnex, resin having hydroxyl value of 138.6 mg KOH/g, solid content: 61% by mass) was 5/95 and the molar ratio of NCO/OH was 1.00. Then, stirring was performed at 600 rpm for 20 minutes using a stirrer to obtain the coating composition 2-1. The obtained coating composition 2-1 was evaluated according to the method described above. The results are shown in Table 2-1 below.

[Example 2-2] Production of coating composition 2-2

15 g of "Setalux 1152" (trade name) and 1.02 g of the polycarbonate composition 2-A-1 obtained in the Synthesis Example 2-3 as a main agent, 4.76 g of "TKA-100" (trade name) as a curing agent, and 9.07 g of butyl acetate as a solvent were weighed and mixed so that the mass ratio ((2-A1) component/(2-A2) component) of the resin component of the polycarbonate diol composition 2-A-1 obtained in the Synthesis Example 2-3 with respect to the resin component of "Setalux1152" (trade name) was 10/90 and the molar ratio of NCO/OH was 1.00. Then, stirring was performed at 600 rpm for 20 minutes using a stirrer to obtain the coating composition 2-2. The obtained coating composition 2-2 was evaluated according to the method described above. The results are shown in Table 2-1 below.

[Example 2-3] Production of coating composition 2-3

15 g of "Setalux 1152" (trade name) and 2.29 g of the polycarbonate composition 2-A-1 obtained in the Synthesis Example 2-3 as a main agent, 5.23 g of "TKA-100" (trade name) as a curing agent, and 10.82 g of butyl acetate as a solvent were weighed and mixed so that the mass ratio ((2-A1) component/(2-A2) component) of the resin component of the polycarbonate diol composition 2-A-1 obtained in the Synthesis Example 2-3 with respect to the resin component of "Setalux1152" (trade name) was 20/80 and the molar ratio of NCO/OH was 1.00. Then, stirring was performed at 600 rpm for 20 minutes using a stirrer to obtain the coating composition 2-3. The obtained coating composition 2-3 was evaluated according to the method described above. The results are shown in Table 2-1 below.

[Example 2-4] Production of coating composition 2-4

12 g of "Setalux 1152" (trade name) and 3.14 g of the polycarbonate composition 2-A-1 obtained in the Synthesis Example 2-3 as a main agent, 4.68 g of "TKA-100" (trade name) as a curing agent, and 10.45 g of butyl acetate as a solvent were weighed and mixed so that the mass ratio ((2-A1) component/(2-A2) component) of the resin component of the polycarbonate diol composition 2-A-1 obtained in the Synthesis Example 2-3 with respect to the resin component of "Setalux1152" (trade name) was 30/70 and the molar ratio of NCO/OH was 1.00. Then, stirring was performed at 600

rpm for 20 minutes using a stirrer to obtain the coating composition 2-4. The obtained coating composition 2-4 was evaluated according to the method described above. The results are shown in Table 2-1 below.

[Example 2-5] Production of coating composition 2-5

10 g of "Setalux 1152" (trade name) and 4.99 g of the polycarbonate composition 2-A-1 obtained in the Synthesis Example 2-3 as a main agent, 4.79 g of "TKA-100" (trade name) as a curing agent, 11.98 g of butyl acetate as a solvent, and 0.15 g of dibutyltin dilaurate (1% butyl acetate diluted) as a catalyst were weighed and mixed so that the mass ratio ((2-A1) component/(2-A2) component) of the resin component of the polycarbonate diol composition 2-A-1 obtained in the Synthesis Example 2-3 with respect to the resin component of "Setalux1152" (trade name) was 45/55 and the molar ratio of NCO/OH was 1.00. Then, stirring was performed at 600 rpm for 20 minutes using a stirrer to obtain the coating composition 2-5. The obtained coating composition 2-5 was evaluated according to the method described above. The results are shown in Table 2-1 below.

[Example 2-6] Production of coating composition 2-6

1.0 g of "Setalux 1152" (trade name) and 11.59 g of the polycarbonate composition 2-A-1 obtained in the Synthesis Example 2-3 as a main agent, 4.64 g of "TKA-100" (trade name) as a curing agent, 16.45 g of butyl acetate as a solvent, and 0.16 g of dibutyltin dilaurate (diluted with 1% butyl acetate) as a catalyst were weighed and mixed so that the mass ratio ((2-A1) component/(2-A2) component) of the resin component of the polycarbonate diol composition 2-A-1 obtained in the Synthesis Example 2-3 with respect to the resin component of "Setalux1152" (trade name) was 95/5 and the molar ratio of NCO/OH was 1.00. Then, stirring was performed at 600 rpm for 20 minutes using a stirrer to obtain the coating composition 2-6. The obtained coating composition 2-6 was evaluated according to the method described above. The results are shown in Table 2-1 below.

[Example 2-7] Production of coating composition 2-7

15.0 g of "Setalux 1152" (trade name) and 3.92 g of the polycarbonate diol composition 2-A-2 obtained in the Synthesis Example 2-5 as a main agent, 5.85 g of "TKA-100" (trade name) as a curing agent, and 13.07 g of butyl acetate as a solvent were weighed and mixed so that the mass ratio ((2-A1) component/(2-A2) component) of the resin component of the polycarbonate diol composition 2-A-2 obtained in the Synthesis Example 2-5 with respect to the resin component of "Setalux1152" (trade name) was 30/70 and the molar ratio of NCO/OH was 1.00. Then, stirring was performed at 600 rpm for 20 minutes using a stirrer to obtain the coating composition 2-7. The obtained coating composition 2-7 was evaluated according to the method described above. The results are shown in Table 2-2 below.

[Example 2-8] Production of coating composition 2-8

15.0 g of "Setalux 1152" (trade name) and 3.92 g of the polycarbonate diol composition 2-A-3 obtained in the Synthesis Example 2-6 as a main agent, 5.87 g of "TKA-100" (trade name) as a curing agent, and 13.09 g of butyl acetate as a solvent were weighed and mixed so that the mass ratio ((2-A1) component/(2-A2) component) of the resin component of the polycarbonate diol composition 2-A-3 obtained in the Synthesis Example 2-6 with respect to the resin component of "Setalux1152" (trade name) was 30/70 and the molar ratio of NCO/OH was 1.00. Then, stirring was performed at 600 rpm for 20 minutes using a stirrer to obtain the coating composition 2-8. The obtained coating composition 8 was evaluated according to the method described above. The results are shown in Table 2-2 below.

[Example 2-9] Production of coating composition 2-9

15.0 g of "Setalux 1152" (trade name) and 3.92 g of the polycarbonate diol composition 2-A-4 obtained in the Synthesis Example 2-7 as a main agent, 5.79 g of "TKA-100" (trade name) as a curing agent, and 13.01 g of butyl acetate as a solvent were weighed and mixed so that the mass ratio ((2-A1) component/(2-A2) component) of the resin component of the polycarbonate diol composition 2-A-4 obtained in the Synthesis Example 2-7 with respect to the resin component of "Setalux1152" (trade name) was 30/70 and the molar ratio of NCO/OH was 1.00. Then, stirring was performed at 600 rpm for 20 minutes using a stirrer to obtain the coating composition 2-9. The obtained coating composition 2-9 was evaluated according to the method described above. The results are shown in Table 2-2 below.

[Example 2-10] Production of coating composition 2-10

15.0 g of "Setalux 1152" (trade name) and 3.92 g of the polycarbonate diol composition 2-A-5 obtained in the

Synthesis Example 2-8 as a main agent, 5.65 g of "TKA-100" (trade name) as a curing agent, and 12.87 g of butyl acetate as a solvent were weighed and mixed so that the mass ratio ((2-A1) component/(2-A2) component) of the resin component of the polycarbonate diol composition 2-A-5 obtained in the Synthesis Example 2-8 with respect to the resin component of "Setalux1152" (trade name) was 30/70 and the molar ratio of NCO/OH was 1.00. Then, stirring was performed at 600 rpm for 20 minutes using a stirrer to obtain the coating composition 2-10. The obtained coating composition 2-10 was evaluated according to the method described above. The results are shown in Table 2-2 below.

[Example 2-11] Production of coating composition 2-11

15.0 g of "Setalux 1152" (trade name) and 1.02 g of the polycarbonate diol composition 2-A-2 obtained in the Synthesis Example 2-5 as a main agent, 4.76 g of "TKA-100" (trade name) as a curing agent, and 9.07 g of butyl acetate as a solvent were weighed and mixed so that the mass ratio ((2-A1) component/(2-A2) component) of the resin component of the polycarbonate diol composition 2-A-2 obtained in the Synthesis Example 2-5 with respect to the resin component of "Setalux1152" (trade name) was 10/90 and the molar ratio of NCO/OH was 1.00. Then, stirring was performed at 600 rpm for 20 minutes using a stirrer to obtain the coating composition 2-11. The obtained coating composition 2-11 was evaluated according to the method described above. The results are shown in Table 2-2 below.

[Example 2-12] Production of coating composition 2-12

15.0 g of "Setalux 1152" (trade name) and 1.02 g of the polycarbonate diol composition 2-A-3 obtained in the Synthesis Example 2-6 as a main agent, 4.76 g of "TKA-100" (trade name) as a curing agent, and 9.08 g of butyl acetate as a solvent were weighed and mixed so that the mass ratio ((2-A1) component/(2-A2) component) of the resin component of the polycarbonate diol composition 2-A-3 obtained in the Synthesis Example 2-6 with respect to the resin component of "Setalux1152" (trade name) was 10/90 and the molar ratio of NCO/OH was 1.00. Then, stirring was performed at 600 rpm for 20 minutes using a stirrer to obtain the coating composition 2-12. The obtained coating composition 2-12 was evaluated according to the method described above. The results are shown in Table 2-2 below.

[Example 2-13] Production of coating composition 2-13

15.0 g of "Setalux 1152" (trade name) and 1.02 g of the polycarbonate diol composition 2-A-4 obtained in the Synthesis Example 2-7 as a main agent, 4.74 g of "TKA-100" (trade name) as a curing agent, and 9.06 g of butyl acetate as a solvent were weighed and mixed so that the mass ratio ((2-A1) component/(2-A2) component) of the resin component of the polycarbonate diol composition 2-A-4 obtained in the Synthesis Example 2-7 with respect to the resin component of "Setalux1152" (trade name) was 10/90 and the molar ratio of NCO/OH was 1.00. Then, stirring was performed at 600 rpm for 20 minutes using a stirrer to obtain the coating composition 2-13. The obtained coating composition 2-13 was evaluated according to the method described above. The results are shown in Table 2-2 below.

[Example 2-14] Production of coating composition 2-14

15.0 g of "Setalux 1152" (trade name) and 1.02 g of the polycarbonate diol composition 2-A-5 obtained in the Synthesis Example 2-8 as a main agent, 4.71 g of "TKA-100" (trade name) as a curing agent, and 9.02 g of butyl acetate as a solvent were weighed and mixed so that the mass ratio ((2-A1) component/(2-A2) component) of the resin component of the polycarbonate diol composition 2-A-5 obtained in the Synthesis Example 2-8 with respect to the resin component of "Setalux1152" (trade name) was 10/90 and the molar ratio of NCO/OH was 1.00. Then, stirring was performed at 600 rpm for 20 minutes using a stirrer to obtain the coating composition 2-14. The obtained coating composition 2-14 was evaluated according to the method described above. The results are shown in Table 2-2 below.

[Example 2-15] Production of coating composition 2-15

12 g of "Setalux 1152" (trade name) and 0.81 g of the polycarbonate composition 2-A-9 obtained in the Synthesis Example 2-14 as a main agent, 4.19 g of polyisocyanate (manufactured by Asahi Kasei Corporation, "TKA-100" (trade name), NCO content: 21.7%) as a curing agent, and 7.59 g of butyl acetate as a solvent were weighed and mixed so that the mass ratio ((2-A1) component/(2-A2) component) of the resin component of the polycarbonate diol composition 2-A-8 obtained in the Synthesis Example 2-12 with respect to the resin component of "Setalux1152" (trade name) was 10/90 and the molar ratio of NCO/OH was 1.10. Then, stirring was performed at 600 rpm for 20 minutes using a stirrer to obtain the coating composition 2-15. The obtained coating composition 2-15 was evaluated according to the method described above. The results are shown in Table 2-2 below.

[Example 2-16] Production of coating composition 2-16

12 g of "Setalux 1152" (trade name) and 0.81 g of the polycarbonate composition 2-A-9 obtained in the Synthesis Example 2-14 as a main agent, 3.66 g of polyisocyanate (manufactured by Asahi Kasei Corporation, "TKA-100" (trade name), NCO content 21.7%) as a curing agent, and 7.11 g of butyl acetate as a solvent were weighed and mixed so that the mass ratio ((2-A1) component/(2-A2) component) of the resin component of the polycarbonate diol composition 2-A-9 obtained in the Synthesis Example 2-14 with respect to the resin component of "Setalux1152" (trade name) was 10/90 and the molar ratio of NCO/OH was 1.00. Then, stirring was performed at 600 rpm for 20 minutes using a stirrer to obtain the coating composition 2-16. The obtained coating composition 2-16 was evaluated according to the method described above. The results are shown in Table 2-2 below.

[Example 2-17] Production of coating composition 2-17

12 g of "Setalux 1152" (trade name) and 0.39 g of the polycarbonate composition 2-A-10 obtained in the Synthesis Example 2-15 as a main agent, 3.59 g of polyisocyanate (manufactured by Asahi Kasei Corporation, "TKA-100" (trade name), NCO content 21.7%) as a curing agent, and 6.61 g of butyl acetate as a solvent were weighed and mixed so that the mass ratio ((2-A1) component/(2-A2) component) of the resin component ((2-A1) component) of the polycarbonate diol composition 2-A-10 obtained in the Synthesis Example 2-15 with respect to the resin component ((2-A2) component) of "Setalux1152" (trade name) was 5/95 and the molar ratio of NCO/OH was 1.00. Then, stirring was performed at 600 rpm for 20 minutes using a stirrer to obtain the coating composition 2-17. The obtained coating composition 2-17 was evaluated according to the method described above. The results are shown in Table 2-3 below.

[Example 2-18] Production of coating composition 2-18

15 g of "Setalux 1152" (trade name) and 1.02 g of the polycarbonate composition 2-A-10 obtained in the Synthesis Example 2-15 as a main agent, 4.61 g of "TKA-100" (trade name) as a curing agent, and 8.93 g of butyl acetate as a solvent were weighed and mixed so that the mass ratio ((2-A1) component/(2-A2) component) of the resin component of the polycarbonate diol composition 2-A-10 obtained in the Synthesis Example 2-15 with respect to the resin component of "Setalux1152" (trade name) was 10/90 and the molar ratio of NCO/OH was 1.00. Then, stirring was performed at 600 rpm for 20 minutes using a stirrer to obtain the coating composition 2-18. The obtained coating composition 2-18 was evaluated according to the method described above. The results are shown in Table 2-3 below.

[Example 2-19] Production of coating composition 2-19

15 g of "Setalux 1152" (trade name) and 2.29 g of the polycarbonate composition 2-A-10 obtained in the Synthesis Example 2-15 as a main agent, 4.90 g of "TKA-100" (trade name) as a curing agent, and 10.49 g of butyl acetate as a solvent were weighed and mixed so that the mass ratio ((2-A1) component/(2-A2) component) of the resin component of the polycarbonate diol composition 2-A-10 obtained in the Synthesis Example 2-15 with respect to the resin component of "Setalux1152" (trade name) was 20/80 and the molar ratio of NCO/OH was 1.00. Then, stirring was performed at 600 rpm for 20 minutes using a stirrer to obtain the coating composition 2-19. The obtained coating composition 2-19 was evaluated according to the method described above. The results are shown in Table 2-3 below.

[Example 2-20] Production of coating composition 2-20

12 g of "Setalux 1152" (trade name) and 3.14 g of the polycarbonate composition 2-A-10 obtained in the Synthesis Example 2-15 as a main agent, 4.22 g of "TKA-100" (trade name) as a curing agent, and 10.00 g of butyl acetate as a solvent were weighed and mixed so that the mass ratio ((2-A1) component/(2-A2) component) of the resin component of the polycarbonate diol composition 2-A-10 obtained in the Synthesis Example 2-15 with respect to the resin component of "Setalux1152" (trade name) was 30/70 and the molar ratio of NCO/OH was 1.00. Then, stirring was performed at 600 rpm for 20 minutes using a stirrer to obtain the coating composition 2-20. The obtained coating composition 2-20 was evaluated according to the method described above. The results are shown in Table 2-3 below.

[Example 2-21] Production of coating composition 2-21

10 g of "Setalux 1152" (trade name) and 4.07 g of the polycarbonate composition 2-A-10 obtained in the Synthesis Example 2-15 as a main agent, 3.95 g of "TKA-100" (trade name) as a curing agent, 11.10 g of butyl acetate as a solvent, and 0.15 g of dibutyltin dilaurate (diluted with 1% butyl acetate) as a catalyst were weighed and mixed so that the mass ratio ((2-A1) component/(2-A2) component) of the resin component of the polycarbonate diol composition

2-A-10 obtained in the Synthesis Example 2-15 with respect to the resin component of "Setalux1152" (trade name) was 45/55 and the molar ratio of NCO/OH was 1.00. Then, stirring was performed at 600 rpm for 20 minutes using a stirrer to obtain the coating composition 2-21. The obtained coating composition 2-21 was evaluated according to the method described above. The results are shown in Table 2-3 below.

[Example 2-22] Production of coating composition 2-22

1.0 g of "Setalux 1152" (trade name) and 11.59 g of the polycarbonate composition 2-A-10 obtained in the Synthesis Example 2-15 as a main agent, 2.96 g of "TKA-100" (trade name) as a curing agent, 14.62 g of butyl acetate as a solvent, and 0.15 g of dibutyltin dilaurate (diluted with 1% butyl acetate) as a catalyst were weighed and mixed so that the mass ratio ((2-A1) component/(2-A2) component) of the resin component of the polycarbonate diol composition 2-A-10 obtained in the Synthesis Example 2-15 with respect to the resin component of "Setalux1152" (trade name) was 95/5 and the molar ratio of NCO/OH was 1.00. Then, stirring was performed at 600 rpm for 20 minutes using a stirrer to obtain the coating composition 2-22. The obtained coating composition 2-22 was evaluated according to the method described above. The results are shown in Table 2-3 below.

[Example 2-23] Production of coating composition 2-23

2.0 g of "PTMG2000" (trade name) and 8.0 g of the polycarbonate composition 2-A-1 obtained in the Synthesis Example 2-3 as a main agent, 3.39 g of "TKA-100" (trade name) as a curing agent, 13.39 g of butyl acetate as a solvent, and 0.13 g of dibutyltin dilaurate (diluted with 1% butyl acetate) as a catalyst were weighed and mixed so that the mass ratio ((2-A1) component/(2-A2) component) of the resin component of the polycarbonate diol composition 2-A-1 obtained in the Synthesis Example 2-3 with respect to the resin component of polyoxytetramethylene diol ("PTMG2000" (trade name) manufactured by Mitsubishi Chemical Co., Ltd., resin having hydroxyl value 56.1 mg KOH/g) was 80/20 and the molar ratio of NCO/OH was 1.00. Then, stirring was performed at 600 rpm for 20 minutes using a stirrer to obtain the coating composition 2-23. The obtained coating composition 2-23 was evaluated according to the method described above. The results are shown in Table 2-3 below.

[Example 2-24] Production of coating composition 2-24

0.50 g of "PTMG2000" (trade name) and 9.50 g of the polycarbonate composition 2-A-1 obtained in the Synthesis Example 2-3 as a main agent, 3.66 g of "TKA-100" (trade name) as a curing agent, 13.66 g of butyl acetate as a solvent, and 0.13 g of dibutyltin dilaurate (diluted with 1% butyl acetate) as a catalyst were weighed and mixed so that the mass ratio ((2-A1) component/(2-A2) component) of the resin component of the polycarbonate diol composition 2-A-1 obtained in the Synthesis Example 2-3 with respect to the resin component of "PTMG2000" (trade name) was 95/5 and the molar ratio of NCO/OH was 1.00. Then, stirring was performed at 600 rpm for 20 minutes using a stirrer to obtain the coating composition 2-24. The obtained coating composition 2-24 was evaluated according to the method described above. The results are shown in Table 2-3 below.

[Example 2-25] Production of coating composition 2-25

15 g of "Setalux 1152" (trade name) and 1.02 g of the polycarbonate composition 2-A-11 obtained in the Synthesis Example 2-16 as a main agent, 4.76 g of "TKA-100" (trade name) as a curing agent, and 9.12 g of butyl acetate as a solvent were weighed and mixed so that the mass ratio ((2-A1) component/(2-A2) component) of the resin component of the polycarbonate diol composition 2-A-11 obtained in the Synthesis Example 2-16 with respect to the resin component of "Setalux1152" (trade name) was 10/90 and the molar ratio of NCO/OH was 1.00. Then, stirring was performed at 600 rpm for 20 minutes using a stirrer to obtain the coating composition 2-25. The obtained coating composition 2-25 was evaluated according to the method described above. The results are shown in Table 2-3 below.

[Example 2-26] Production of coating composition 2-26

12 g of "Setalux 1152" (trade name) and 3.14 g of the polycarbonate composition 2-A-11 obtained in the Synthesis Example 2-16 as a main agent, 4.68 g of "TKA-100" (trade name) as a curing agent, and 10.46 g of butyl acetate as a solvent were weighed and mixed so that the mass ratio ((2-A1) component/(2-A2) component) of the resin component of the polycarbonate diol composition 2-A-11 obtained in the Synthesis Example 2-16 with respect to the resin component of "Setalux1152" (trade name) was 30/70 and the molar ratio of NCO/OH was 1.00. Then, stirring was performed at 600 rpm for 20 minutes using a stirrer to obtain the coating composition 2-26. The obtained coating composition 2-26 was evaluated according to the method described above. The results are shown in Table 2-3 below.

[Comparative Example 2-1] Production of coating composition 2-27

10 g of "Setalux 1152" (trade name) as a main agent, 2.94 g of "TKA-100" (trade name) as a curing agent, and 5.12 g of butyl acetate as a solvent were weighed and mixed so that the molar ratio of NCO/OH was 1.00. Then, stirring was performed at 600 rpm for 20 minutes using a stirrer to obtain the coating composition 2-27. The obtained coating composition 2-27 was evaluated according to the method described above. The results are shown in Table 2-4 below.

[Comparative Example 2-2] Production of coating composition 2-28

15.0 g of "Setalux 1152" (trade name) and 1.02 g of the polycarbonate diol 2-a-1 obtained in the Synthesis Example 2-1 as a main agent, 4.76 g of "TKA-100" (trade name) as a curing agent, and 9.08 g of butyl acetate as a solvent were weighed and mixed so that the mass ratio ((2-A1) component/(2-A2) component) of the polycarbonate diol 2-a-1 obtained in the Synthesis Example 2-1 with respect to the resin component of "Setalux1152" (trade name) was 10/90 and the molar ratio of NCO/OH was 1.00. Then, stirring was performed at 600 rpm for 20 minutes using a stirrer to obtain the coating composition 2-28. The obtained coating composition 2-28 was evaluated according to the method described above. The results are shown in Table 2-4 below.

[Comparative Example 2-3] Production of coating composition 2-29

15.0 g of "Setalux 1152" (trade name) and 3.92 g of the polycarbonate diol 2-a-1 obtained in the Synthesis Example 2-1 as a main agent, 5.86 g of "TKA-100" (trade name) as a curing agent, and 13.08 g of butyl acetate as a solvent were weighed and mixed so that the mass ratio ((2-A1) component/(2-A2) component) of the polycarbonate diol 2-a-1 obtained in the Synthesis Example 2-1 with respect to the resin component of "Setalux1152" (trade name) was 30/70 and the molar ratio of NCO/OH was 1.00. Then, stirring was performed at 600 rpm for 20 minutes using a stirrer to obtain the coating composition 2-29. The obtained coating composition 2-29 was evaluated according to the method described above. The results are shown in Table 2-4 below.

[Comparative Example 2-4] Production of coating composition 2-30

15.0 g of "Setalux 1152" (trade name) and 0.19 g of the polycarbonate diol composition 2-A-1 obtained in the Synthesis Example 2-3 as a main agent, 4.45 g of "TKA-100" (trade name) as a curing agent, and 7.93 g of butyl acetate as a solvent were weighed and mixed so that the mass ratio ((2-A1) component/(2-A2) component) of the polycarbonate diol composition 2-A-1 obtained in the Synthesis Example 2-3 with respect to the resin component of "Setalux1152" (trade name) was 2/98 and the molar ratio of NCO/OH was 1.00. Then, stirring was performed at 600 rpm for 20 minutes using a stirrer to obtain the coating composition 2-30. The obtained coating composition 2-30 was evaluated according to the method described above. The results are shown in Table 2-4 below.

[Comparative Example 2-5] Production of coating composition 2-31

15.0 g of "Setalux 1152" (trade name) and 1.02 g of the polycarbonate diol 2-a-2 obtained in the Synthesis Example 2-2 as a main agent, 4.57 g of "TKA-100" (trade name) as a curing agent, and 8.89 g of butyl acetate as a solvent were weighed and mixed so that the mass ratio ((2-A1) component/(2-A2) component) of the polycarbonate diol 2-a-2 obtained in the Synthesis Example 2-2 with respect to the resin component of "Setalux1152" (trade name) was 10/90 and the molar ratio of NCO/OH was 1.00. Then, stirring was performed at 600 rpm for 20 minutes using a stirrer to obtain the coating composition 2-31. The obtained coating composition 2-31 was evaluated according to the method described above. The results are shown in Table 2-4 below.

[Comparative Example 2-6] Production of coating composition 2-32

15.0 g of "Setalux 1152" (trade name) and 1.02 g of the polycarbonate diol 2-a-3 obtained in the Synthesis Example 2-4 as a main agent, 4.85 g of "TKA-100" (trade name) as a curing agent, and 9.17 g of butyl acetate as a solvent were weighed and mixed so that the mass ratio ((2-A1) component/(2-A2) component) of the polycarbonate diol 2-a-3 obtained in the Synthesis Example 2-4 with respect to the resin component of "Setalux1152" (trade name) was 10/90 and the molar ratio of NCO/OH was 1.00. Then, stirring was performed at 600 rpm for 20 minutes using a stirrer to obtain the coating composition 2-32. The coating film was formed from the obtained coating composition 2-32 was clouded and unable to evaluate.

[Comparative Example 2-7] Production of coating composition 2-33

15.0 g of "Setalux 1152" (trade name) and 1.02 g of the polycarbonate diol composition 2-A-6 obtained in the Synthesis Example 2-9 as a main agent, 4.85 g of "TKA-100" (trade name) as a curing agent, and 9.17 g of butyl acetate as a solvent were weighed and mixed so that the mass ratio ((2-A1) component/(2-A2) component) of resin component of the polycarbonate diol composition 2-A-6 obtained in the Synthesis Example 2-9 with respect to the resin component of "Setalux1152" (trade name) was 10/90 and the molar ratio of NCO/OH was 1.00. Then, stirring was performed at 600 rpm for 20 minutes using a stirrer to obtain the coating composition 2-33. The obtained coating composition 2-33 was evaluated according to the method described above. The results are shown in Table 2-4 below.

[Comparative Example 2-8] Production of coating composition 2-34

15.0 g of "Setalux 1152" (trade name) and 3.92 g of the polycarbonate diol composition 2-A-7 obtained in the Synthesis Example 2-8 as a main agent, 5.65 g of "TKA-100" (trade name) as a curing agent, and 12.87 g of butyl acetate as a solvent were weighed and mixed so that the mass ratio ((2-A1) component/(2-A2) component) of resin component of the polycarbonate diol composition 2-A-5 obtained in the Synthesis Example 2-10 with respect to the resin component of "Setalux1152" (trade name) was 30/70 and the molar ratio of NCO/OH was 1.00. Then, stirring was performed at 600 rpm for 20 minutes using a stirrer to obtain the coating composition 2-34. The obtained coating composition 2-34 was evaluated according to the method described above. The results are shown in Table 2-4 below.

[Table 2-1]

| Evaluation Item | | Ex.2-1 | Ex.2-2 | Ex. 2-3 | Ex. 2-4 | Ex.2-5 | Ex.2-6 |
|---|---|---|---|---|---|---|---|
| Content of Structure (I) | | 10% | 10% | 10% | 10% | 10% | 10% |
| Content of Polycarbonate Structure (II) | | 90% | 90% | 90% | 90% | 90% | 90% |
| Repeating Number of Structure (I) (n11) | | 22.7 | 22.7 | 22.7 | 22.7 | 22.7 | 22.7 |
| Repeating Number of Polycarbonate Structure (II) (n21) | | 7.3 | 7.3 | 7.3 | 7.3 | 7.3 | 7.3 |
| (2-A1) Component | | 2-A-1 | 2-A-1 | 2-A-1 | 2-A-1 | 2-A-1 | 2-A-1 |
| (2-A2) Component | | Setalux1152 | Setalux1152 | Setalux1152 | Setalux1152 | Setalux1152 | Setalux1152 |
| Mass Ratio of (2-A1) Component/(2-A2) Component | | 5/95 | 10/90 | 20/80 | 30/70 | 45/55 | 95/5 |
| Scratch Resistance | Gloss Retention Rate 1 | 88% | 88% | 86% | 84% | 95% | 96% |
| | Evaluation | ○ | ○ | ○ | △ | ◎ | ◎ |
| Scratch Recovery Property | Gloss Retention Rate 2 | 91% | 95% | 95% | 98% | 99% | 99% |
| | Evaluation | ○ | ◎ | ◎ | ◎ | ◎ | ◎ |
| Heat Resistance | Breaking Stress Retention Rate | 95% | 94% | 92% | 93% | 90% | 90% |
| | Evaluation | ◎ | ○ | ○ | ○ | ○ | ○ |

[Table 2-2]

| Evaluation Item | | Ex.2-7 | Ex.2-8 | Ex.2-9 | Ex.2-10 | Ex.2-11 | Ex.2-12 | Ex.2-13 | Ex.2-14 | Ex.2-15 | Ex.2-16 |
|---|---|---|---|---|---|---|---|---|---|---|---|
| Content of Structure (I) | | 10% | 30% | 10% | 30% | 10% | 30% | 10% | 30% | 10% | 10% |
| Content of Polycarbonate Structure (II) | | 90% | 70% | 90% | 70% | 90% | 70% | 90% | 70% | 90% | 90% |
| Repeating Number of Structure (I) (n11) | | 13.8 | 13.8 | 24.9 | 24.9 | 13.8 | 13.8 | 24.9 | 24.9 | 22.7 | 44 |
| Repeating Number of Polycarbonate Structure (II) (n21) | | 7.3 | 7.3 | 7.3 | 7.3 | 7.3 | 7.3 | 7.3 | 7.3 | 6.6 | 10 |
| (2-A1) Component | | 2-A-2 | 2-A-3 | 2-A-4 | 2-A-5 | 2-A-2 | 2-A-3 | 2-A-4 | 2-A-5 | 2-A-8 | 2-A-9 |
| (2-A2) Component | | Setalux 1152 | Setalux 1152 | Setalux 1152 | Setalux 1152 | Setalux 1152 | Setalux 1152 | Setalux 1152 | Setalux 1152 | Setalux 1152 | Setalux 1152 |
| Mass Ratio of (2-A1) Component/ (2-A2) Component | | 30/70 | 30/70 | 30/70 | 30/70 | 10/90 | 10/90 | 10/90 | 10/90 | 10/90 | 10/90 |
| Scratch Resistance | Gloss Retention Rate 1 | 76% | 80% | 78% | 75% | 82% | 84% | 81% | 82% | 86% | 81% |
| | Evaluation | Δ | Δ | Δ | Δ | Δ | Δ | Δ | Δ | ○ | Δ |
| Scratch Recovery Property | Gloss Retention Rate 2 | 98% | 98% | 96% | 95% | 90% | 91% | 90% | 92% | 91% | 92% |
| | Evaluation | ◎ | ◎ | ◎ | ◎ | ○ | ○ | ○ | ○ | ○ | ○ |
| Heat Resistance | Breaking Stress Retention Rate | 90% | 78% | 91% | 80% | 95% | 89% | 94% | 89% | 95% | 93% |
| | Evaluation | ○ | Δ | ○ | Δ | ◎ | Δ | ○ | Δ | ◎ | ○ |

[Table 2-3]

| Evaluation Item | | Ex.2-17 | Ex.2-18 | Ex.2-19 | Ex.2-20 | Ex.2-21 | Ex.2-22 | Ex.2-23 | Ex.2-24 | Ex.2-25 | Ex.2-26 |
|---|---|---|---|---|---|---|---|---|---|---|---|
| Content of Structure (I) | | 20% | 20% | 20% | 20% | 20% | 20% | 10% | 10% | 5% | 5% |
| Content of Polycarbonate Structure (II) | | 80% | 80% | 80% | 80% | 80% | 80% | 90% | 90% | 95% | 95% |
| Repeating Number of Structure (I) (n11) | | 22.7 | 22.7 | 22.7 | 22.7 | 22.7 | 22.7 | 22.7 | 22.7 | 22.7 | 22.7 |
| Repeating Number of Polycarbonate Structure (II) (n21) | | 14.6 | 14.6 | 14.6 | 14.6 | 14.6 | 14.6 | 14.6 | 14.6 | 7. 3 | 7. 3 |
| (2-A1) Component | | 2-A-10 | 2-A-10 | 2-A-10 | 2-A-10 | 2-A-10 | 2-A-10 | 2-A-1 | 2-A-1 | 2-A-11 | 2-A-11 |
| (2-A2) Component | | Setalux 1152 | Setalux 1152 | Setalux 1152 | Setalux 1152 | Setalux 1152 | Setalux 1152 | PTMG 2000 | PTMG 2000 | Setalux 1152 | Setalux 1152 |
| Mass Ratio of (2-A1) Component/ (2-A2) Component | | 5/95 | 10/90 | 20/80 | 30/70 | 45/55 | 95/5 | 80/20 | 95/5 | 10/90 | 30/70 |
| Scratch Resistance | Gloss Retention Rate 1 | 88% | 87% | 85% | 83% | 95% | 96% | 95% | 96% | 88% | 84% |
| | Evaluation | ○ | ○ | ○ | Δ | ◎ | ◎ | ◎ | ◎ | ○ | Δ |
| Scratch Recovery Property | Gloss Retention Rate 2 | 93% | 96% | 98% | 98% | 99% | 99% | 98% | 98% | 95% | 98% |
| | Evaluation | ○ | ◎ | ◎ | ◎ | ◎ | ◎ | ◎ | ◎ | ◎ | ◎ |
| Heat Resistance | Breaking Stress Retention Rate | 95% | 92% | 92% | 93% | 90% | 90% | 85% | 88% | 95% | 94% |
| | Evaluation | ◎ | ○ | ○ | ○ | ○ | ○ | Δ | Δ | ◎ | ○ |

[Table 2- 4]

| Evaluation Item | | Comp.Ex. 2-1 | Comp.Ex. 2-2 | Comp.Ex. 2-3 | Comp.Ex. 2-4 | Comp.Ex. 2-5 | Comp.Ex. 2-6 | Comp.Ex. 2-7 | Comp.Ex. 2-8 |
|---|---|---|---|---|---|---|---|---|---|
| Content of Structure (I) | | 0% | 0% | 0% | 10% | 0% | 0% | 21% | 39% |
| Content of Polycarbonate Structure (II) | | 0% | 100% | 100% | 90% | 100% | 100% | 79% | 61% |
| Repeating Number of Structure (I) (n11) | | - | - | - | 22.7 | - | - | 3.5 | 9.0 |
| Repeating Number of Polycarbonate Structure (II) (n21) | | - | 7.3 | 7.3 | 7.3 | 14.6 | 18.3 | 14.6 | 14.6 |
| (2-A1) Component | | - | 2-a-1 | 2-a-1 | 2-A-1 | 2-a-2 | 2-a-3 | 2-A-6 | 2-A-7 |
| (2-A2) Component | | Setalux 1152 | Setalux 1152 | Setalux 1152 | Setalux 1152 | Setalux 1152 | Setalux 1152 | Setalux 1152 | Setalux 1152 |
| Mass Ratio of (2-A1) Component/(2-A2) Component | | 0/100 | 10/90 | 30/70 | 2/98 | 10/90 | 10/90 | 10/90 | 30/70 |
| Scratch Resistance | Gloss Retention Rate 1 | 75% | 82% | 80% | 84% | 82% | Not evaluated due to coating cloudiness | 82% | 73% |
| | Evaluation | △ | △ | △ | △ | △ | | △ | × |
| Scratch Recovery Property | Gloss Retention Rate 2 | 79% | 85% | 88% | 86% | 85% | | 86% | 96% |
| | Evaluation | △ | △ | △ | △ | △ | | △ | ◎ |
| Heat Resistance | Breaking Stress Retention Rate | 96% | 93% | 88% | 95% | 90% | | 88% | 52% |
| | Evaluation | ◎ | ○ | △ | ◎ | ○ | | △ | × |

As shown in Tables 2-1 to 2-4, the coating films formed from the coating compositions 2-1 to 2-26 (Examples 2-1 to 2-26) containing the (2-A1) component in which the repeating number n11 of the structure (I) was 7 to 70 and the repeating number n21 of the polycarbonate structure (II) was 1 to 50, and having (2-A1)/(2-A2) of 10/90 to 30/70 showed a better scratch recovery property and heat resistance than the coating compositions 2-27 to 34 (Comparative Examples 2-1 to 2-8) which did not have the above-described configuration.

Furthermore, as can be seen from the comparison of the coating compositions 2-7 and 2-8 (Examples 2-7 and 2-8), comparison of the coating compositions 2-9 and 2-10 (Examples 2-9 and 2-10), comparison of the coating compositions 2-11 and 2-12 (Examples 2-11 and 2-12) and comparison of the coating compositions 2-13 and 2-14 (Examples 2-13 and 2-14), there was a tendency that the heat resistance was further improved as the content of the polycarbonate structure (II) was increased.

Furthermore, as can be seen from the comparison of the coating compositions 2-1 to 2-6 (Examples 2-1 to 2-6), comparison of the coating compositions 2-7 and 2-11 (Examples 2-7 and 2-11), comparison of the coating compositions 2-8 and 2-12 (Examples 2-8 and 2-12), comparison of the coating compositions 2-9 and 2-13 (Examples 2-9 and 2-13), comparison of the coating compositions 2-10 and 2-14 (Examples 2-10 and 2-14), comparison of coating compositions 2-17 to 2-22 (Examples 2-17 to 2-22), and comparison of the coating compositions 2-25 to 2-26 (Examples 2-25 to 2-16), there was a tendency that the scratch recovery property was further improved as the mass ratio of the (2-A1) component to the (2-A2) component (mass ratio of component (2-A1)/component (2-A2)) was increased.

From the above, it was confirmed that the coating film formed from the coating composition of the present embodiment was excellent in scratch recovery property and heat resistance.

## INDUSTRIAL APPLICABILITY

The coating composition of the present embodiment can be suitably used in a wide range of fields, such as coating automobiles, buses, railway vehicles, construction machineries, agricultural machineries, floors, walls and roofs of buildings, metal products, mortar and concrete products, woodworking products, plastic products or ceramic building materials such as calcium silicate boards or gypsum boards.

## Claims

1. A coating composition comprising a component (1-A1), a component (1-B) and a component (1-C), wherein

component (1-A1): a polycarbonate diol composition containing a structure represented by the following general formula (I) and a carbonate or polycarbonate structure represented by the following general formula (II), having hydroxyl groups at both terminals, and having a number-average molecular weight of 300 or more and 10,000 or less, wherein

with respect to a total mass of the structure represented by the general formula (I) and the carbonate or polycarbonate structure, the structure represented by the general formula (I) is contained in an amount of 5% by mass or more and 50% by mass or less, and the carbonate or polycarbonate structure is contained in an amount of 50% by mass or more and 95% by mass or less;

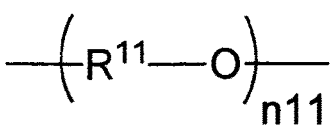

・・・(I)

wherein in the general formula (I), $R^{11}$ is a divalent linear, branched or cyclic aliphatic hydrocarbon group having 2 to 20 carbon atoms, or an aromatic hydrocarbon group, a plurality of $R^{11}$s may be the same as or different from each other, and n11 is a number of 3 to 70,

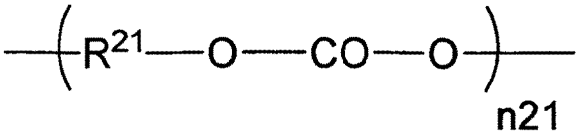

・・・(II)

wherein in the general formula (II), $R^{21}$ is a divalent linear, branched or cyclic aliphatic hydrocarbon group having 2 to 15 carbon atoms, or an aromatic hydrocarbon group, a plurality of $R^{21}$s may be the same as or different from each other, and n21 is a number of 1 to 50,
component (1-B): an isocyanate compound; and
component (1-C): an organic solvent having a solubility parameter (SP value), measured according to Shinichi Ueda et al., "Discussion on solubility parameter of additive", Paint Research, No. 152, pp. 41-46, 2010), of 16.4 $(J/cm^3)^{1/2}$ (8.0 $(cal/cm^3)^{1/2}$) or more and 51.1 $(J/cm^3)^{1/2}$ (25.0 $(cal/cm^3)^{1/2}$) or less.

**2.** The coating composition according to claim 1, wherein an organic solvent having a solubility parameter of 16.4 $(J/cm^3)^{1/2}$ (8.0 $(cal/cm^3)^{1/2}$) or more and 30.7 $(J/cm^3)^{1/2}$ (15.0 $(cal/cm^3)^{1/2}$) or less is contained as the component (1-C).

**3.** The coating composition according to claim 1 or 2, wherein an organic solvent having a vapor pressure of 1.0 kPa or more at 20 °C is contained as the component (1-C).

**4.** The coating composition according to any one of claims 1 to 3, further comprising a component (1-A2), wherein

the component (1-A2) is a polyol component other than the component (1-A1), and
with respect to a total mass of the component (1-A1) and the component (1-A2), the component (1-A1) is contained in an amount of 50% by mass or more and 100% by mass or less, and the component (1-A2) is contained in an amount of 0% by mass or more and 50% by mass or less.

**5.** The coating composition according to any one of claims 1 to 4, wherein
in the component (1-A1), with respect to a total mass of the structure represented by the general formula (I) and the carbonate or polycarbonate structure, the structure represented by the general formula (I) is contained in an amount of 5% by mass or more and 30% by mass or less, and the carbonate or polycarbonate structure is contained in an amount of 70% by mass or more and 95% by mass or less.

**6.** The coating composition according to any one of claims 1 to 5, wherein
in the component (1-A1), with respect to a total mass of the structure represented by the general formula (I) and the carbonate or polycarbonate structure, the structure represented by the general formula (I) is contained in an amount of 5% by mass or more and 20% by mass or less, and the carbonate or polycarbonate structure is contained in an amount of 80% by mass or more and 95% by mass or less.

**7.** The coating composition according to any one of claims 1 to 6, wherein
the structure represented by the general formula (I) is a polyoxyethylene structure.

**8.** The coating composition according to any one of claims 1 to 6, wherein

the structure represented by the general formula (I) contains an oxy 1-methylethylene group and an oxyethylene group, and
with respect to a total mass of the structure represented by the general formula (I), the oxy 1-methylethylene is contained in an amount of 10% by mass or more and 100% by mass or less, and the oxyethylene group is contained in an amount of 0% by mass or more and 90% by mass or less.

**9.** The coating composition according to any one of claims 1 to 6, wherein

the structure represented by the general formula (I) contains an oxytetramethylene group and an oxy 2,2-dimethyltrimethylene group, and
with respect to a total mass of the structure represented by the following general formula (I), the oxytetramethylene group is contained in an amount of 10% by mass or more and 100% by mass or less, and the oxy 2,2-dimethyltrimethylene group is contained in an amount of 0% by mass or more and 90% by mass or less.

**10.** The coating composition according to any one of claims 1 to 9, further comprising water, wherein
a content of the water in the coating composition is 10% by mass or less.

**11.** A coating composition comprising a component (2-A1), a component (2-A2), a component (2-B) and a component (2-C), wherein

with respect to a total mass of the component (2-A1) and the component (2-A2), the component (2-A1) is contained in an amount of 3% by mass or more and 99% by mass or less, and the component (2-A2) is contained in an amount of 1% by mass or more and 97% by mass or less;

component (2-A1): a polycarbonate diol composition including a structure represented by the following general formula (I) and a carbonate or polycarbonate structure represented by the following general formula (II), having hydroxyl groups at both terminals, and having a number-average molecular weight of 300 or more and 10,000 or less,

wherein with respect to a total mass of the structure represented by the general formula (I) and the carbonate or polycarbonate structure, the structure represented by the general formula (I) is contained in an amount of 5% by mass or more and 35% by mass or less, and the carbonate or polycarbonate structure is contained in an amount of 65% by mass or more and 95% by mass or less;

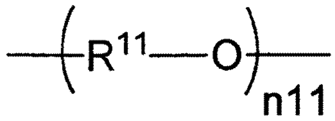

• • • (I)

wherein in the general formula (I), $R^{11}$ is a divalent linear, branched or cyclic aliphatic hydrocarbon group having 2 to 20 carbon atoms, or an aromatic hydrocarbon group, a plurality of $R^{11}$s may be the same as or different from each other, and n11 is a number of 7 to 70,

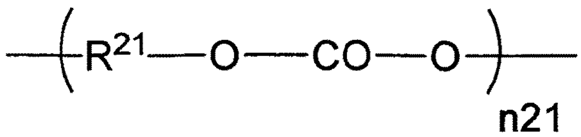

• • • (II)

wherein in the general formula (II), $R^{21}$ is a divalent linear, branched or cyclic aliphatic hydrocarbon group having 2 to 15 carbon atoms, or an aromatic hydrocarbon group, a plurality of $R^{21}$s may be the same as or different from each other, and n21 is a number of 1 to 50,

component (2-A2): a polyol component other than the component (2-A1);

component (2-B): an isocyanate compound; and

component (2-C): an organic solvent.

**12.** The coating composition according to claim 11, wherein
in the component (2-A1), with respect to a total mass of the structure represented by the general formula (I) and the carbonate or polycarbonate structure, the structure represented by the general formula (I) is contained in an amount of 5% by mass or more and 20% by mass or less, and the carbonate or polycarbonate structure is contained in an amount of 80% by mass or more and 95% by mass or less.

**13.** The coating composition according to claim 11 or 12, wherein
the structure represented by the general formula (I) is a polyoxyethylene structure.

**14.** The coating composition according to claim 11 or 12, wherein

the structure represented by the general formula (I) contains an oxy 1-methylethylene group and an oxyethylene group, and

with respect to a total mass of the structure represented by the general formula (I), the oxy 1-methylethylene is contained in an amount of 10% by mass or more and 100% by mass or less, and the oxyethylene group is contained in an amount of 0% by mass or more and 90% by mass or less.

**15.** The coating composition according to claim 11 or 12, wherein

the structure represented by the general formula (I) contains an oxytetramethylene group and an oxy 2,2-dimethyltrimethylene group, and

with respect to a total mass of the structure represented by the general formula (I), the oxytetramethylene group

is contained in an amount of 5% by mass or more and 100% by mass or less, and the oxy 2,2-dimethyltrimethylene group is contained in an amount of 0% by mass or more and 95% by mass or less.

**16.** The coating composition according to any one of claims 11 to 15, further comprising water, wherein a content of the water in the coating composition is 10% by mass or less.

**Patentansprüche**

**1.** Beschichtungszusammensetzung, umfassend eine Komponente (1-A1), eine Komponente (1-B) und eine Komponente (1-C), wobei

Komponente (1-A1): eine Polycarbonatdiolzusammensetzung, die eine durch die folgende allgemeine Formel (I) dargestellte Struktur und eine durch die folgende allgemeine Formel (II) dargestellte Carbonat- oder Polycarbonatstruktur enthält, die Hydroxylgruppen an beiden Enden aufweist und die ein zahlenmittleres Molekulargewicht von 300 oder mehr und 10.000 oder weniger hat, wobei
bezogen auf die Gesamtmasse der durch die allgemeine Formel (I) dargestellten Struktur und der Carbonat- oder Polycarbonatstruktur, die durch die allgemeine Formel (I) dargestellte Struktur in einer Menge von 5 Massen-% oder mehr und 50 Massen-% oder weniger enthalten ist und die Carbonat- oder Polycarbonatstruktur in einer Menge von 50 Massen-% oder mehr und 95 Massen-% oder weniger enthalten ist;

$$-\left(R^{11}-O\right)_{n11}- \quad \cdot\cdot\cdot (I)$$

wobei in der allgemeinen Formel (I) $R^{11}$ eine zweibindige lineare, verzweigte oder cyclische aliphatische Kohlenwasserstoffgruppe mit 2 bis 20 Kohlenstoffatomen oder eine aromatische Kohlenwasserstoffgruppe ist, eine Vielzahl von $R^{11}$ gleich oder verschieden voneinander sein kann und n11 eine Zahl von 3 bis 70 ist,

$$-\left(R^{21}-O-CO-O\right)_{n21}- \quad \cdot\cdot\cdot (II)$$

wobei in der allgemeinen Formel (II) $R^{21}$ eine zweibindige lineare, verzweigte oder cyclische aliphatische Kohlenwasserstoffgruppe mit 2 bis 15 Kohlenstoffatomen oder eine aromatische Kohlenwasserstoffgruppe ist, eine Vielzahl von $R^{21}$ gleich oder verschieden voneinander sein kann und n21 eine Zahl von 1 bis 50 ist,
Komponente (1-B): eine Isocyanatverbindung; und
Komponente (1-C): ein organisches Lösungsmittel mit einem Löslichkeitsparameter (SP-Wert), gemessen nach Shinichi Ueda et al., "Discussion on solubility parameter of additive", Paint Research, No. 152, pp. 41-46, 2010), von 16,4 $(J/cm^3)^{1/2}$ (8,0 $(cal/cm^3)^{1/2}$) oder mehr und 51,1 $(J/cm^3)^{1/2}$ (25,0 $(cal/cm^3)^{1/2}$) oder weniger.

**2.** Beschichtungszusammensetzung nach Anspruch 1, wobei ein organisches Lösungsmittel mit einem Löslichkeitsparameter von 16,4 $(J/cm^3)^{1/2}$ (8,0 $(cal/cm^3)^{1/2}$) oder mehr und 30,7 $(J/cm^3)^{1/2}$ (15,0 $(cal/cm^3)^{1/2}$) oder weniger als die Komponente (1-C) enthalten ist.

**3.** Beschichtungszusammensetzung nach Anspruch 1 oder 2, wobei als Komponente (1-C) ein organisches Lösungsmittel mit einem Dampfdruck von 1,0 kPa oder mehr bei 20 °C enthalten ist.

**4.** Beschichtungszusammensetzung nach einem der Ansprüche 1 bis 3, welche weiterhin eine Komponente (1-A2) enthält, wobei

die Komponente (1-A2) eine andere Polyolkomponente als die Komponente (1-A1) ist, und
bezogen auf die Gesamtmasse der Komponente (1-A1) und der Komponente (1-A2) die Komponente (1-A1)

in einer Menge von 50 Massen-% oder mehr und 100 Massen-% oder weniger enthalten ist und die Komponente (1-A2) in einer Menge von 0 Massen-% oder mehr und 50 Massen-% oder weniger enthalten ist.

**5.** Beschichtungszusammensetzung nach einem der Ansprüche 1 bis 4, wobei in der Komponente (1-A1), bezogen auf die Gesamtmasse der durch die allgemeine Formel (I) dargestellten Struktur und der Carbonat- oder Polycarbonatstruktur, die durch die allgemeine Formel (I) dargestellte Struktur in einer Menge von 5 Massen-% oder mehr und 30 Massen-% oder weniger enthalten ist und die Carbonat- oder Polycarbonatstruktur in einer Menge von 70 Massen-% oder mehr und 95 Massen-% oder weniger enthalten ist.

**6.** Beschichtungszusammensetzung nach einem der Ansprüche 1 bis 5, wobei in der Komponente (1-A1), bezogen auf die Gesamtmasse der durch die allgemeine Formel (I) dargestellten Struktur und der Carbonat- oder Polycarbonatstruktur, die durch die allgemeine Formel (I) dargestellte Struktur in einer Menge von 5 Massen-% oder mehr und 20 Massen-% oder weniger enthalten ist und die Carbonat- oder Polycarbonatstruktur in einer Menge von 80 Massen-% oder mehr und 95 Massen-% oder weniger enthalten ist.

**7.** Beschichtungszusammensetzung nach einem der Ansprüche 1 bis 6, wobei die durch die allgemeine Formel (I) dargestellte Struktur eine Polyoxyethylenstruktur ist.

**8.** Beschichtungszusammensetzung nach einem der Ansprüche 1 bis 6, wobei

die durch die allgemeine Formel (I) dargestellte Struktur eine Oxy-1-methylethylengruppe und eine Oxyethylengruppe enthält, und
bezogen auf die Gesamtmasse der durch die allgemeine Formel (I) dargestellten Struktur, die Oxy-1-methylethylengruppe in einer Menge von 10 Massen-%oder mehr und 100 Massen-% oder weniger enthalten ist und die Oxyethylengruppe in einer Menge von 0 Massen-% oder mehr und 90 Massen-% oder weniger enthalten ist.

**9.** Beschichtungszusammensetzung nach einem der Ansprüche 1 bis 6, wobei

die durch die allgemeine Formel (I) dargestellte Struktur eine Oxytetramethylengruppe und eine Oxy-2,2-dimethyltrimethylengruppe enthält, und
bezogen auf die Gesamtmasse der durch die allgemeine Formel (I) dargestellten Struktur, die Oxytetramethylengruppe in einer Menge von 10 Massen-% oder mehr und 100 Massen-% oder weniger enthalten ist und die Oxy-2,2-dimethyltrimethylengruppe in einer Menge von 0 Massen-% oder mehr und 90 Massen-% oder weniger enthalten ist.

**10.** Beschichtungszusammensetzung nach einem der Ansprüche 1 bis 9, die weitterhin Wasser enthält, wobei der Gehalt des Wassers in der Beschichtungszusammensetzung 10 Massen-% oder weniger ist.

**11.** Beschichtungszusammensetzung, umfassend eine Komponente (2-A1), eine Komponente (2-A2), eine Komponente (2-B) und eine Komponente (2-C), wobei

bezogen auf die Gesamtmasse der Komponente (2-A1) und der Komponente (2-A2), die Komponente (2-A1) in einer Menge von 3 Massen-% oder mehr und 99 Massen-% oder weniger enthalten ist und die Komponente (2-A2) in einer Menge von 1 Massen-% oder mehr und 97 Massen-%g oder weniger enthalten ist;
Komponente (2-A1): eine Polycarbonatdiol-Zusammensetzung, die eine durch die folgende allgemeine Formel (I) dargestellte Struktur und eine durch die folgende allgemeine Formel (II) dargestellte Carbonat- oder Polycarbonatstruktur enthält, die Hydroxylgruppen an beiden Enden aufweist und die ein zahlenmittleres Molekulargewicht von 300 oder mehr und 10.000 oder weniger hat,
wobei, bezogen auf die Gesamtmasse der durch die allgemeine Formel (I) dargestellten Struktur und der Carbonat- oder Polycarbonatstruktur, die durch die allgemeine Formel (I) dargestellte Struktur in einer Menge von 5 Massen-% oder mehr und 35 Massen-% oder weniger enthalten ist und die Carbonat- oder Polycarbonatstruktur in einer Menge von 65 Massen-% oder mehr und 95 Massen-% oder weniger enthalten ist;

$$-\left(R^{11}-O\right)_{n11}- \quad \cdots (I)$$

wobei in der allgemeinen Formel (I) $R^{11}$ eine zweibindige lineare, verzweigte oder cyclische aliphatische Kohlenwasserstoffgruppe mit 2 bis 20 Kohlenstoffatomen oder eine aromatische Kohlenwasserstoffgruppe ist, eine Vielzahl von $R^{11}$ gleich oder verschieden voneinander sein kann und n11 eine Zahl von 7 bis 70 ist,

$$-\left(R^{21}-O-CO-O\right)_{n21}- \quad \cdots (II)$$

wobei in der allgemeinen Formel (II) $R^{21}$ eine zweibindige lineare, verzweigte oder cyclische aliphatische Kohlenwasserstoffgruppe mit 2 bis 15 Kohlenstoffatomen oder eine aromatische Kohlenwasserstoffgruppe ist, eine Vielzahl von $R^{21}$ gleich oder verschieden voneinander sein kann und n21 eine Zahl von 1 bis 50 ist,
Komponente (2-A2): eine andere Polyolkomponente als die Komponente (2-A1);
Komponente (2-B): eine Isocyanatverbindung; und
Komponente (2-C): ein organisches Lösungsmittel.

**12.** Beschichtungszusammensetzung nach Anspruch 11, wobei
in der Komponente (2-A1), bezogen auf die Gesamtmasse der durch die allgemeine Formel (I) dargestellten Struktur und der Carbonat- oder Polycarbonatstruktur, die durch die allgemeine Formel (I) dargestellte Struktur in einer Menge von 5 Massen-% oder mehr und 20 Massen-% oder weniger enthalten ist und die Carbonat- oder Polycarbonatstruktur in einer Menge von 80 Massen-% oder mehr und 95 Massen-% oder weniger enthalten ist.

**13.** Beschichtungszusammensetzung nach Anspruch 11 oder 12, wobei
die durch die allgemeine Formel (I) dargestellte Struktur eine Polyoxyethylenstruktur ist.

**14.** Beschichtungszusammensetzung nach Anspruch 11 oder 12, wobei

die durch die allgemeine Formel (I) dargestellte Struktur eine Oxy-1-methylethylengruppe und eine Oxyethylengruppe enthält, und
bezogen auf die Gesamtmasse der durch die allgemeine Formel (I) dargestellten Struktur, das Oxy-1-methylethylen in einer Menge von 10 Massen-% oder mehr und 100 Massen-% oder weniger enthalten ist und die Oxyethylengruppe in einer Menge von 0 Massen-% oder mehr und 90 Massen-% oder weniger enthalten ist.

**15.** Beschichtungszusammensetzung nach Anspruch 11 oder 12, wobei

die durch die allgemeine Formel (I) dargestellte Struktur eine Oxytetramethylengruppe und eine Oxy-2,2-dimethyltrimethylengruppe enthält, und
bezogen auf die Gesamtmasse der durch die allgemeine Formel (I) dargestellten Struktur, die Oxytetramethylengruppe in einer Menge von 5 Massen-% oder mehr und 100 Massen-% oder weniger enthalten ist und die Oxy-2,2-dimethyltrimethylengruppe in einer Menge von 0 Massen-% oder mehr und 95 Massen-% oder weniger enthalten ist.

**16.** Beschichtungszusammensetzung nach einem der Ansprüche 11 bis 15, welche weiterhin Wasser enthält, wobei der Gehalt des Wassers in der Beschichtungszusammensetzung 10 Massen-% oder weniger ist.

## Revendications

**1.** Composition de revêtement comprenant un composant (1-A1), un composant (1-B) et un composant (1-C), dans laquelle

composant (1-A1) : une composition de polycarbonate-diol contenant une structure représentée par la formule générale (I) suivante et une structure carbonate ou polycarbonate représentée par la formule générale (II) suivante, ayant des groupes hydroxyles au niveau des deux terminaisons, et ayant un poids moléculaire moyen en nombre de 300 ou plus et de 10 000 ou moins, dans laquelle
par rapport à une masse totale de la structure représentée par la formule générale (I) et de la structure carbonate

ou polycarbonate, la structure représentée par la formule générale (I) est contenue en une quantité de 5 % en masse ou plus et de 50 % en masse ou moins, et la structure carbonate ou polycarbonate est contenue en une quantité de 50 % en masse ou plus et de 95 % en masse ou moins ;

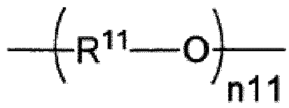

• • • (I)

dans laquelle dans la formule générale (I), $R^{11}$ est un groupe hydrocarboné aliphatique divalent, linéaire, ramifié ou cyclique, ayant 2 à 20 atomes de carbone, ou un groupe hydrocarboné aromatique, une pluralité de $R^{11}$ peuvent être identiques les uns aux autres ou différents les uns des autres, et n11 est un nombre de 3 à 70,

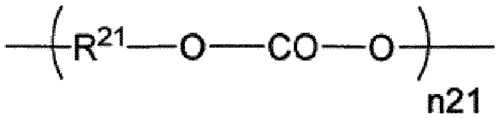

• • • (I I)

dans laquelle dans la formule générale (II), $R^{21}$ est un groupe hydrocarboné aliphatique divalent, linéaire, ramifié ou cyclique, ayant 2 à 15 atomes de carbone, ou un groupe hydrocarboné aromatique, une pluralité de $R^{21}$ peuvent être identiques les uns aux autres ou différents les uns des autres, et n21 est un nombre de 1 à 50,
composant (1-B) : un composé isocyanate ; et
composant (1-C) : un solvant organique ayant un paramètre de solubilité (valeur SP), mesuré selon Shinichi Ueda et al., « Discussion on solubility parameter of additive », Paint Research, N° 152, pages 41-46, 2010), de 16,4 $(J/cm^3)^{1/2}$ (8,0 $(cal/cm^3)^{1/2}$) ou plus et de 51,1 $(J/cm^3)^{1/2}$ (25,0 $(cal/cm^3)^{1/2}$) ou moins.

**2.** Composition de revêtement selon la revendication 1, dans laquelle un solvant organique ayant un paramètre de solubilité de 16,4 $(J/cm^3)^{1/2}$ (8,0 $(cal/cm^3)^{1/2}$) ou plus et de 30,7 $(J/cm^3)^{1/2}$ (15,0 $(cal/cm^3)^{1/2}$) ou moins est contenu en tant que composant (1-C).

**3.** Composition de revêtement selon la revendication 1 ou 2, dans laquelle un solvant organique ayant une pression de vapeur de 1,0 kPa ou plus à 20 °C est contenu en tant que composant (1-C) .

**4.** Composition de revêtement selon l'une quelconque des revendications 1 à 3, comprenant en outre un composant (1-A2), dans laquelle

le composant (1-A2) est un composant de polyol autre que le composant (1-A1), et
par rapport à une masse totale du composant (1-A1) et du composant (1-A2), le composant (1-A1) est contenu en une quantité de 50 % en masse ou plus et de 100 % en masse ou moins, et le composant (1-A2) est contenu en une quantité de 0 % en masse ou plus et de 50 % en masse ou moins.

**5.** Composition de revêtement selon l'une quelconque des revendications 1 à 4, dans laquelle
dans le composant (1-A1), par rapport à une masse totale de la structure représentée par la formule générale (I) et de la structure carbonate ou polycarbonate, la structure représentée par la formule générale (I) est contenue en une quantité de 5 % en masse ou plus et de 30 % en masse ou moins, et la structure carbonate ou polycarbonate est contenue en une quantité de 70 % en masse ou plus et de 95 % en masse ou moins.

**6.** Composition de revêtement selon l'une quelconque des revendications 1 à 5, dans laquelle
dans le composant (1-A1), par rapport à une masse totale de la structure représentée par la formule générale (I) et de la structure carbonate ou polycarbonate, la structure représentée par la formule générale (I) est contenue en une quantité de 5 % en masse ou plus et de 20 % en masse ou moins, et la structure carbonate ou polycarbonate est contenue en une quantité de 80 % en masse ou plus et de 95 % en masse ou moins.

**7.** Composition de revêtement selon l'une quelconque des revendications 1 à 6, dans laquelle
la structure représentée par la formule générale (I) est une structure polyoxyéthylène.

**8.** Composition de revêtement selon l'une quelconque des revendications 1 à 6, dans laquelle

la structure représentée par la formule générale (I) contient un groupe oxy 1-méthyléthylène et un groupe oxyéthylène, et
par rapport à une masse totale de la structure représentée par la formule générale (I), l'oxy 1-méthyléthylène est contenu en une quantité de 10 % en masse ou plus et de 100 % en masse ou moins, et le groupe oxyéthylène est contenu en une quantité de 0 % en masse ou plus et de 90 % en masse ou moins.

**9.** Composition de revêtement selon l'une quelconque des revendications 1 à 6, dans laquelle

la structure représentée par la formule générale (I) contient un groupe oxytétraméthylène et un groupe oxy 2,2-diméthyltriméthylène, et
par rapport à une masse totale de la structure représentée par la formule générale (I) suivante, le groupe oxytétraméthylène est contenu en une quantité de 10 % en masse ou plus et de 100 % en masse ou moins, et le groupe oxy 2,2-diméthyltriméthylène est contenu en une quantité de 0 % en masse ou plus et de 90 % en masse ou moins.

**10.** Composition de revêtement selon l'une quelconque des revendications 1 à 9, comprenant en outre de l'eau, dans laquelle une teneur de l'eau dans la composition de revêtement est de 10 % en masse ou moins.

**11.** Composition de revêtement comprenant un composant (2-A1), un composant (2-A2), un composant (2-B) et un composant (2-C), dans laquelle

par rapport à une masse totale du composant (2-A1) et du composant (2-A2), le composant (2-A1) est contenu en une quantité de 3 % en masse ou plus et de 99 % en masse ou moins, et le composant (2-A2) est contenu en une quantité de 1 % en masse ou plus et de 97 % en masse ou moins ;
composant (2-A1) : une composition de polycarbonate-diol comportant une structure représentée par la formule générale (I) suivante et une structure carbonate ou polycarbonate représentée par la formule générale (II) suivante, ayant des groupes hydroxyles au niveau des deux terminaisons, et ayant un poids moléculaire moyen en nombre de 300 ou plus et de 10 000 ou moins, dans laquelle par rapport à une masse totale de la structure représentée par la formule générale (I) et de la structure carbonate ou polycarbonate, la structure représentée par la formule générale (I) est contenue en une quantité de 5 % en masse ou plus et de 35 % en masse ou moins, et la structure carbonate ou polycarbonate est contenue en une quantité de 65 % en masse ou plus et de 95 % en masse ou moins ;

$$-\left(R^{11}-O\right)_{n11}- \quad \cdots (I)$$

dans laquelle dans la formule générale (I), $R^{11}$ est un groupe hydrocarboné aliphatique divalent, linéaire, ramifié ou cyclique, ayant 2 à 20 atomes de carbone, ou un groupe hydrocarboné aromatique, une pluralité de $R^{11}$ peuvent être identiques les uns aux autres ou différents les uns des autres, et n11 est un nombre de 7 à 70,

$$-\left(R^{21}-O-CO-O\right)_{n21}- \quad \cdots (II)$$

dans laquelle dans la formule générale (II), $R^{21}$ est un groupe hydrocarboné aliphatique divalent, linéaire, ramifié ou cyclique, ayant 2 à 15 atomes de carbone, ou un groupe hydrocarboné aromatique, une pluralité de $R^{21}$ peuvent être identiques les uns aux autres ou différents les uns des autres, et n21 est un nombre de 1 à 50,
composant (2-A2) : un composant de polyol autre que le composant (2-A1) ;
composant (2-B) : un composé isocyanate ; et
composant (2-C) : un solvant organique.

**12.** Composition de revêtement selon la revendication 11, dans laquelle
dans le composant (2-A1), par rapport à une masse totale de la structure représentée par la formule générale (I)

et de la structure carbonate ou polycarbonate, la structure représentée par la formule générale (I) est contenue en une quantité de 5 % en masse ou plus et de 20 % en masse ou moins, et la structure carbonate ou polycarbonate est contenue en une quantité de 80 % en masse ou plus et de 95 % en masse ou moins.

**13.** Composition de revêtement selon la revendication 11 ou 12, dans laquelle la structure représentée par la formule générale (I) est une structure polyoxyéthylène.

**14.** Composition de revêtement selon la revendication 11 ou 12, dans laquelle

la structure représentée par la formule générale (I) contient un groupe oxy 1-méthyléthylène et un groupe oxyéthylène, et

par rapport à une masse totale de la structure représentée par la formule générale (I), l'oxy 1-méthyléthylène est contenu en une quantité de 10 % en masse ou plus et de 100 % en masse ou moins, et le groupe oxyéthylène est contenu en une quantité de 0 % en masse ou plus et de 90 % en masse ou moins.

**15.** Composition de revêtement selon la revendication 11 ou 12, dans laquelle

la structure représentée par la formule générale (I) contient un groupe oxytétraméthylène et un groupe oxy 2,2-diméthyltriméthylène, et

par rapport à une masse totale de la structure représentée par la formule générale (I), le groupe oxytétraméthylène est contenu en une quantité de 5 % en masse ou plus et de 100 % en masse ou moins, et le groupe oxy 2,2-diméthyltriméthylène est contenu en une quantité de 0 % en masse ou plus et de 95 % en masse ou moins.

**16.** Composition de revêtement selon l'une quelconque des revendications 11 à 15, comprenant en outre de l'eau, dans laquelle une teneur de l'eau dans la composition de revêtement est de 10 % en masse ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H02289616 A
- JP 2006124486 A
- JP 3874664 B
- JP S5734107 A
- JP S61275311 A


### Non-patent literature cited in the description


- **SHINICHI UEDA et al.** Discussion on solubility parameter of additive. *Paint Research,* 2010, vol. 152, 41-46